(19) Europäisches Patentamt
European Patent Office
Office européen des brevets

(11) EP 2 990 200 A1

(12) # EUROPEAN PATENT APPLICATION
published in accordance with Art. 153(4) EPC

(43) Date of publication:
**02.03.2016 Bulletin 2016/09**

(21) Application number: **14788580.0**

(22) Date of filing: **16.04.2014**

(51) Int Cl.:
***B32B 27/36*** *(2006.01)* ***B32B 7/02*** *(2006.01)*

(86) International application number:
**PCT/JP2014/060810**

(87) International publication number:
**WO 2014/175137 (30.10.2014 Gazette 2014/44)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**

(30) Priority: **26.04.2013 JP 2013093587**
**22.05.2013 JP 2013107635**

(71) Applicant: **Toray Industries, Inc.**
**Tokyo 103-8666 (JP)**

(72) Inventors:
- **YAMANAKA, Takahiro**
  **Otsu-shi**
  **Shiga 520-8558 (JP)**
- **NAKAJIMA, Yoshihiro**
  **Otsu-shi**
  **Shiga 520-8558 (JP)**
- **MAEDA, Shinji**
  **Otsu-shi**
  **Shiga 520-8558 (JP)**
- **OTA, Kazuyoshi**
  **Otsu-shi**
  **Shiga 520-8558 (JP)**
- **HASEGAWA, Masahiro**
  **Otsu-shi**
  **Shiga 520-8558 (JP)**
- **MACHIDA, Tetsuya**
  **Otsu-shi**
  **Shiga 520-8558 (JP)**

(74) Representative: **Kador & Partner**
**Corneliusstraße 15**
**80469 München (DE)**

(54) **BIAXIALLY ORIENTED LAMINATE POLYESTER FILM AND OPTICAL LAMINATE FILM**

(57) The present invention is a biaxially oriented laminate polyester film characterized by satisfying (1) through (5) below. (1) The laminate polyester film comprises at least three layers and has a polyester layer (A) (referred to hereinafter as the "A layer") and a polyester layer (B) (referred to hereinafter as the "B layer") on both sides of the A layer. (2) The oligomer content of a polyester resin composition constituting the A layer is 1.5 wt% or less with respect to the total amount of the polyester resin composition. (3) The intrinsic viscosity (IV) of the polyester resin constituting the A layer is 0.45 dl/g to 0.70 dl/g. (4) The oligomer content of the polyester resin composition constituting the B layer is 0. 5 wt% or less with respect to the total amount of the polyester resin composition constituting the B layer. (5) The intrinsic viscosity (IV) of the polyester resin constituting the B layer is 0.70 dl/g to 0.90 dl/g.

EP 2 990 200 A1

**Description**

TECHNICAL FIELD

The present invention relates to a polyester film that well attains both productivity and film surface quality in a process of film production, allows only little deposition of an oligomer under high temperature processing conditions or use conditions under high temperature and high humidity, is superior in transparency, and is suitable for various optical applications, such as liquid crystal display constituents including a liquid crystal polarizing plate and a retardation plate, PDP members and members for touch panels.

BACKGROUND ART

Films of polyesters represented by polyethylene terephthalate are excellent in mechanical characteristics, thermal characteristics, and electrical characteristics and also excellent in cost performance. Accordingly, they are used for various industrial applications and are widely produced for packaging materials, magnetic recording materials, electric insulating materials, optical materials, etc. With expansion of applications, however, characteristics and qualities required of polyester films and their productivity in association with cost reduction are becoming severer in the fields of applications, and there are many problems which should be solved. For example, when polyester films are used as films for various optical applications, such as liquid crystal display constituents including a liquid crystal polarizing plate and a retardation plate, PDP members, members for touch panels, and members for laminated glass, the films are required to be satisfactory also in transparency and film surface quality. In order to solve these problems, there have been made various proposals regarding improvement in characteristics according to applications of polyester films and productivity.

For example, there is proposed a polyester resin composition for compounding that can improve the heat resistance of a polymer and the transparency of the resultant film by adding a magnesium compound, an alkali metal compound, a cobalt compound, an alkaline earth metal compound, a zinc compound, and a phosphorus compound in specific amounts and at specific ratios to a polyester resin composition for constituting a film (see Patent Document 1). Moreover, there is proposed a polyester resin composition for compounding and a polyester film for magnetic recording media, the composition being capable of preventing defects caused by deposition of an oligomer (cyclic trimer) of a film and pollution of casting and stretching facilities during a film formation step by reducing the amount of a cyclic trimer contained in a polyester resin composition, and further capable of improving electrostatic charge casting properties by adding a large amount of an element selected from magnesium and manganese (see Patent Document 2).

In recent years, applications where a polyester film excellent in high transparency is used as a glass substitute material are increasing, and a material that can be applied even under conditions severer than conventional use conditions is demanded. Under such severe conditions, if a polyester film is, for example, heat-treated, an oligomer that has migrated from the inside of the film deposits to a film surface and the film is deteriorated in transparency, causing a problem that the film becomes unusable for applications where high transparency is required.

Heretofore, as a method for preventing deposition of an oligomer, there have been an attempt to reduce oligomers contained in a feedstock by solid phase polymerization and an attempt to improve the anti-hydrolysis property of a polyester film by use of an endblocker. However, in the case of solid phase polymerization, since the degree of polymerization of a polymer increases with decrease of oligomers, there is a problem that a load to an extruder increases during film production, leading to increase in production cost. For example, Patent Document 3 proposes a film including a laminate polyester film composed of at least three layers and a coating layer provided during a step of producing the film on at least one side of the laminate polyester film.

As another measure, a hard coat layer may be provided for the purpose of, for example, inhibiting oligomer deposition to a polyester film. For example, Patent Document 4 proposes a laminate polyester film including an adhesion promotion layer that is good in adhesion to a hard coat layer, and an oligomer deposition inhibiting layer.

PRIOR ART DOCUMENTS

PATENT DOCUMENTS

Patent Document 1: Japanese Patent Laid-open Publication No. 62-187724
Patent Document 2: Japanese Patent Laid-open Publication No. 2008-201822
Patent Document 3: Japanese Patent Laid-open Publication No. 2003-191413
Patent Document 4: Japanese Patent Laid-open Publication No. 2011-62949

SUMMARY OF THE INVENTION

PROBLEMS TO BE SOLVED BY THE INVENTION

In the film disclosed in Patent Document 1, oligomers deposit as oligomer defects on a film surface during film formation because of a large oligomer content in the polyester resin composition, and the oligomers pollute a process roll and generate scratches on a film surface. Therefore, there are problems, for example, it becomes necessary to often stop the production and perform roll cleaning in order to obtain a film having high transparency.

The film disclosed in Patent Document 2 is small in oligomer (cyclic trimer) content of the polyester resin composition, but there is a problem of deterioration in color tone caused by a prolonged heat treatment due to a method of polyester production, especially, a failure of yellowing of a film surface in producing a thick film. Moreover, addition of a large amount of magnesium or manganese promotes thermal decomposition during a polycondensation reaction and makes it difficult to obtain a polymer having a high degree of polymerization, and results in drawbacks such as increase in terminal carboxyl groups of the resultant polyester resin. Furthermore, if a polyester layer constituted from the polyester resin composition for compounding is laminated on only one side of a laminate film, an oligomer (cyclic trimer) deposition inhibiting effect is insufficient and transparency is deteriorated.

The method of Patent Document 3 is not sufficient in an oligomer deposition inhibiting effect. Moreover, if the coating layer is too thin, almost no oligomer deposition inhibiting effect will be obtained. In the method of Patent Document 4, the production cost increases because a step of providing a hard coat layer is required in addition to a step of producing a polyester film. Moreover, a dust or the like may attach to the part between a hard coat layer and a polyester film layer, and the dust or the like will cause optical defects in use as a film for optical applications.

Therefore, it is an object of the present invention to solve the problems of the conventional techniques described above, and to provide a biaxially oriented laminate polyester film excellent in transparency that well attains a film surface quality, allows little deposition of an oligomer to a film surface even under high temperature and high humidity processing conditions and use conditions, and is suitable, for example, in use as a film for optical applications where high transparency is required.

SOLUTIONS TO THE PROBLEMS

The present invention adopts the following configurations in order to solve the above-mentioned problems.

A first aspect of the present invention is a biaxially oriented laminate polyester film satisfying the following (1) to (5) :

(1) the film is a laminate polyester film composed of at least three layers including a polyester layer (A) (hereinafter referred to as an "A layer") and polyester layers (B) (hereinafter referred to as "B layers") on both sides of the A layer,
(2) the oligomer content of a polyester resin composition constituting the A layer is 1.5 wt% or less with respect to the total amount of the polyester resin composition constituting the A layer,
(3) the intrinsic viscosity (IV) of the polyester resin constituting the A layer is 0.45 dl/g or more and 0.70 dl/g or less,
(4) the oligomer content of a polyester resin composition constituting each of the B layers is 0.5 wt% or less with respect to the total amount of the polyester resin composition constituting the B layers, and
(5) the intrinsic viscosity (IV) of the polyester resin constituting each of the B layers is 0.70 dl/g or more and 0.90 dl/g or less.

A second aspect of the present invention is the biaxially oriented laminate polyester film, wherein the polyester resin composition constituting the A layer contains an alkaline earth metal element, and when the content of the alkaline earth metal element with respect to the total amount of the polyester resin composition constituting the A layer is denoted by M (mol/ton), M satisfies the following formula 1:

$$0.1 \leq M \leq 15 \qquad \text{(formula 1)}.$$

A third aspect of the present invention is the biaxially oriented laminate polyester film, wherein the alkaline earth metal element is magnesium.

A fourth aspect of the present invention is the biaxially oriented laminate polyester film, wherein the polyester resin composition constituting the A layer contains a phosphorus element, and when the content of the phosphorus element with respect to the total amount of the polyester resin composition constituting the A layer is denoted by P (mol/ton), M/P satisfies the following formula 2:

$$1.0 \leq M/P \leq 4.0 \quad \text{(formula 2)}.$$

A fifth aspect of the present invention is the biaxially oriented laminate polyester film, wherein the polyester resin composition constituting the B layers contains a germanium element in an amount of 0.1 mol/ton or more and 0.8 mol/ton or less with respect to the total amount of the polyester resin composition constituting the B layers.

A sixth aspect of the present invention is the biaxially oriented laminate polyester film, wherein the thickness of each of the B layers located on both the sides of the A layer is 5 μm or more and 50 μm or less.

A seventh aspect of the present invention is the biaxially oriented laminate polyester film, wherein the total of the thicknesses of the B layers is 20% or more and 60% or less with respect to the overall thickness of the laminate polyester film.

An eighth aspect of the present invention is the above-mentioned biaxially oriented laminate polyester film, wherein the color tone b value of the polyester film is 1.5 or less.

A ninth aspect of the present invention is an optical laminate film including a resin layer (X) formed by use of a resin (α) and satisfying the following conditions (6) to (8) on at least one side of the above-mentioned biaxially oriented laminate polyester film:

(6) the thickness of the resin layer (X) is 80 to 500 nm,
(7) the pencil hardness of the resin layer (X) is "F" or more, and
(8) the resin (α) is a resin obtained by heating a resin composition containing a resin (I) having a hydroxy group and an acryloyl group and a melamine compound (II) having a methylol group and/or an alkoxymethyl group.

A tenth aspect of the present invention is the optical laminate film according to the ninth aspect of the present invention, wherein the mass ratio between the resin (I) and the melamine compound (II) contained in the resin (α) composition (the content [parts by mass] of the resin (I) /the content [parts by mass] of the melamine compound (II)) is 100/30 to 100/100.

An eleventh aspect of the present invention is the optical laminate film according to the ninth or tenth aspect of the present invention, wherein the resin (I) is a resin obtained by use of at least the following compounds (a) to (c) and the mass ratios of the compounds used are as follows:

- an acrylic acid ester compound and/or a methacrylic acid ester compound (a): 55 to 98 parts by mass,
- an ethylenically unsaturated compound (b) having a hydroxy group: 1 to 30 parts by mass, and
- a compound (c) having a chemical structure represented by formula (1) (a urethane structure) and a polyfunctional acryloyl group: 1 to 15 parts by mass,

wherein the total mass of (a) to (c) is taken as 100 parts by mass.

[Chemical Formula 1]

Formula (1) 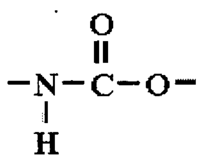

A twelfth aspect of the present invention is the optical laminate film according to any one of the ninth to eleventh aspects of the present invention, wherein the film haze is 2.0% or less.

A thirteenth aspect of the present invention is the optical laminate polyester film according to any one of the ninth to twelfth aspects of the present invention, wherein the film haze change (ΔH) before and after heating at 170°C for 2 hours is 0.5% or less.

A fourteenth aspect of the present invention is the optical laminate film according to any one of the ninth to thirteenth aspects of the present invention, wherein the heat shrinkage ratio after heating at 150°C for 30 minutes is 1.5% or less in both the longitudinal direction and the width direction of the film.

A fifteenth aspect of the present invention is the biaxially oriented laminate polyester film according to any one of the first to eighth aspects of the present invention, used for an optical application.

EFFECTS OF THE INVENTION

According to the present invention, it is possible to obtain a biaxially oriented laminate polyester film having the effects of well attaining both the productivity and the film surface quality during a process of film production and inhibiting deposition of oligomers that will cause deterioration of the polyester film in its high transparency under high temperature processing conditions or under use conditions at high temperature and high humidity. Films obtained according to the present invention can be suitably used as various films for optical applications, such as liquid crystal display constituents including a liquid crystal polarizing plate and a retardation plate, PDP members, members for touch panels, and members for laminated glass.

EMBODIMENTS OF THE INVENTION

First, description is made on the first aspect of the present invention to the eighth aspect of the present invention.

The biaxially oriented laminate polyester film of the present invention is a biaxially oriented laminate polyester film composed of at least three layers, and is prepared by biaxial stretching in the machine direction and in the transverse direction and heat setting all the layers extruded by a co-extrusion method by which the layers are melt-extruded through a spinneret. In the following, a three-layered film is described as a laminate polyester film, but the biaxially oriented laminate polyester film of the present invention is not limited to a three-layered polyester film as long as its purpose is satisfied, and may have a multilayer structure having more than three layers. The film, however, is limited to have a laminate structure having a polyester layer A that has the characteristics described later (hereinafter referred to as an "A layer") and polyester layers B that have the characteristics described later (hereinafter referred to as "B layers") on both sides of the A layer.

The polyesters constituting the A layer and the B layers of the biaxially oriented laminate polyester film of the present invention are ones produced by use of a polycondensation reaction of a bifunctional component such as an aromatic dicarboxylic acid or an alkyl ester thereof with a glycol component, and especially, ones containing polyethylene terephthalate as a main component are preferred. Such polyesters may be either one in which a third component is copolymerized in a small amount so that the basic characteristics of the biaxially oriented laminate polyester film of the present invention are not impaired, or one in which these polyesters are mixed. Examples of the copolymerization component include dicarboxylic acid components, such as 2,6-naphthalenedicarboxylic acid and isophthalic acid, oxycarboxylic acid components, such as p-oxyethoxybenzoic acid, and diol components, such as tetramethylene glycol, propylene glycol, neopentyl glycol, polyoxyalkylene glycol, p-xylylene glycol, 1,4-cyclohexanedimethanol, polyethylene glycol, and 5-sodium sulforesorcin.

In the case where the polyester resin composition constituting the A layer of the biaxially oriented laminate polyester film of the present invention is, for example, polyethylene terephthalate, it can be produced by the following method. Specifically, the polyethylene terephthalate can be produced by a direct esterification method in which terephthalic acid, ethylene glycol and, as necessary, a copolymerization component are directly reacted together to esterify with evaporation of water, and then polycondensation is carried out under reduced pressure, or a transesterification method in which dimethyl terephthalate, ethylene glycol and, as necessary, a copolymerization component are reacted together to transesterify with evaporation of methanol, and then polycondensation is carried out under reduced pressure. The above-mentioned melt polycondensation reactions may be carried out either in a batch type reaction apparatus or in a continuous type reaction apparatus. In either of these systems, a melt polycondensation reaction may be carried out either in one step or in multiple separate steps. Publicly known catalysts, such as antimony compounds and titanium compounds, can be used as a polymerization catalyst.

The intrinsic viscosity (IV) of the polyester resin to constitute the A layer of the biaxially oriented laminate polyester film of the present invention is 0.45 dl/g or more and 0.70 dl/g or less, and preferably 0. 60 dl/g or more and 0. 69 dl/g or less. If the intrinsic viscosity (IV) is less than 0.45 dl/g, heat resistance, mechanical strength, etc., which are superior characteristics of a polyester film when having been fabricated into a film, will be poor. If the intrinsic viscosity (IV) exceeds 0.70 dl/g, a load during an extrusion step in film production will become large, deteriorating productivity. From the viewpoint of inhibiting an oligomer from depositing from a film surface, the intrinsic viscosity (IV) of the polyester resin constituting the A layer is preferably set to be lower than the intrinsic viscosity (IV) of the polyester resin constituting the B layers described below.

The oligomer content of the polyester resin composition constituting the A layer of the biaxially oriented laminate polyester film of the present invention is required to be 1.5 wt% or less. Preferably, the content is 1.0 wt% or less. If the oligomer content of the polyester resin composition constituting the A layer exceeds 1.5 wt%, it is impossible to sufficiently obtain the effect of inhibiting oligomer deposition to a film surface even if the film is a laminate polyester film having the B layers described later on both sides of the A layer. In the present invention, an oligomer refers to a cyclic trimer of a polyester.

The polyester constituting the B layers of the biaxially oriented laminate polyester film of the present invention

may be either one obtained by a melt polycondensation reaction or one obtained by performing melt polycondensation and chipping and then subjecting the chipped polyester to solid phase polymerization as necessary under heating and reduced pressure or in an inert stream such as nitrogen. Especially, one subjected to a deactivation treatment of a polymerization catalyst after being subjected to the solid phase polymerization is preferred because the amount of oligomers contained in a feedstock can be reduced and the amount of oligomers to be formed during melt molding can be greatly reduced. Specifically, the polyester constituting the B layers of the biaxially oriented laminate polyester film of the present invention is preferably a polyester that is a polycondensate composed of a dicarboxylic acid component skeleton and a diol component skeleton, and especially, one containing polyethylene terephthalate as a main component is preferred.

The polyester resin composition constituting the B layers of the biaxially oriented laminate polyester film of the present invention preferably contains a germanium element in an amount of 0.1 mol/ton or more and 0.8 mol/ton or less with respect to the total amount of the polyester resin composition constituting the B layers. If a germanium element is contained in an amount within the above-mentioned range in the polyester resin composition constituting the B layers, an increase in oligomers during a film formation step can be inhibited. The reason for this is presumed as follows. While commonly known polymerization catalysts for polyesters include an antimony compound, a germanium compound, a titanium compound, etc., a germanium compound is lower in activity to a thermally induced decomposition reaction as compared with an antimony compound and a titanium compound. Therefore, it is believed that a polyester obtained using a germanium compound as a polymerization catalyst can inhibit production of oligomers because the polyester inhibits the advance of its thermal decomposition even under conditions where a heat load is applied. Moreover, a polyester resulting from execution of a polycondensation reaction using a germanium compound is superior in transparency and can reduce a film haze because it contains less foreign substances. If the content of the germanium element contained in the polyester resin composition constituting the B layers is less than 0.1 mol/ton with respect to the total amount of the polyester resin composition constituting the B layers, the catalytic activity for polycondensation is sometimes insufficient, whereas if the content exceeds 0.8 mol/ton, a deactivation effect of the catalyst deactivation treatment during the above-mentioned solid layer polymerization is not obtained sufficiently, and oligomers to be produced during melt molding may be reduced insufficiently. Preferably, the content is 0.3 mol/ton or more and 0.6 mol/ton or less. As a germanium compound to be used as a polymerization catalyst, specifically, it is preferred to use a solution prepared by finely dispersing, heating and dissolving amorphous germanium dioxide or crystalline germanium dioxide in ethylene glycol or water. The addition of a germanium compound makes it possible to inhibit color tone change of a film when producing a film and to obtain a highly transparent film.

The polyester resin composition constituting the B layers of the biaxially oriented laminate polyester film of the present invention can be produced by the methods described below, for example, in the case of polyethylene terephthalate. Specifically, it can be produced by a direct esterification method in which terephthalic acid, ethylene glycol and, as necessary, a copolymerization component are directly reacted together to esterify with evaporation of water, and then polycondensation is carried out under reduced pressure, or a transesterification method in which dimethyl terephthalate, ethylene glycol and, as necessary, a copolymerization component are reacted together to transesterify with evaporation of methanol, and then polycondensation is carried out under reduced pressure. The above-mentioned melt polycondensation reactions may be carried out either in a batch type reaction apparatus or in a continuous type reaction apparatus. In either of these systems, a melt polycondensation reaction may be carried out either in one step or in multiple separate steps. Although oligomers in a polymer obtained by a melt polycondensation reaction can be reduced by solid phase polymerization described later, oligomers are reproduced and the amount thereof increases if the melting time is prolonged when the polymer is melt-extruded during a film production step. Therefore, from the viewpoint of inhibiting reproduction of oligomers, it is important that the polyester resin composition constituting the B layers of the biaxially oriented laminate polyester film of the present invention contains a germanium element capable of performing a deactivation treatment of a polymerization catalyst during solid phase polymerization, in other words, that a germanium compound is used as a polymerization catalyst.

Polyethylene terephthalate obtained from the last polycondensation reactor as described above is drawn out into a strand-like form and then processed into a chip-like form with a cutter so as to become easier to be melt-molded. The polyethylene terephthalate may be reduced in the amount of oligomers contained therein by being transported to a solid phase polymerization step and being subjected to solid phase polymerization at a temperature equal to or lower than its melting point under a highly reduced pressure or under an inert gas atmosphere condition.

Preferably, a deactivation treatment of a polymerization catalyst is performed for the polymer obtained by the above-mentioned method. The treatment method may be carried out by bringing the polymer into contact with a solution or an aqueous solution containing an alkali solubilizer or a phosphorus compound. Specifically, preferred is a method in which the polymer is continuously fed from a chip resin feeding apparatus into a temperature-controlled contact bath to perform a deactivation treatment, and thereafter dripping-off is performed. In addition, a method of stirring the inside of the contact bath with a stirring blade or circulating the solution or aqueous solution, or a method of increasing the specific surface area by modifying the shape of the polyester is also preferred from the viewpoint of improving treatment

efficiency. The oligomer to be produced during melt molding can be greatly reduced by using chips in which a polymerization catalyst has been deactivated in such a manner.

The oligomer content of the polyester resin composition constituting the B layers of the biaxially oriented laminate polyester film of the present invention is 0.5 wt% or less, and is preferably 0.4 wt% or less. In other words, the oligomer deposition inhibiting effect of the biaxially oriented laminate polyester film of the present invention is demonstrated to a high degree by reducing as much as possible the oligomer content of the polyester resin composition constituting the B layers which are the outermost layers of the laminate polyester film and which have a most significant effect on oligomer deposition from a film surface. If the oligomer content of the polyester resin composition constituting the B layers exceeds 0.5 wt%, oligomer deposition to a film surface cannot be inhibited.

The intrinsic viscosity (IV) of the polyester resin constituting the B layers of the biaxially oriented laminate polyester film of the present invention is 0.70 dl/g or more and 0.90 dl/g less, and is preferably 0.74 dl/g or more and 0.88 dl/g or less. If the intrinsic viscosity (IV) is less than 0.70 dl/g, its difference from the intrinsic viscosity (IV) of the polyester composition constituting the A layer is small, resulting in an insufficient difference in crystallinity between the A layer and the B layers when a laminate polyester film is formed, a failure to successfully make oligomers deposited from the A layer stay within the B layers located on both sides of the A layer, and easier deposition of oligomers to a film surface. If the intrinsic viscosity (IV) exceeds 0.90 dl/g, productivity will be deteriorated due to increase in load during an extrusion step in film production.

In the biaxially oriented laminate polyester film of the present invention, the difference in intrinsic viscosity between the polyester resin constituting the B layers and the polyester resin constituting the A layer [(the intrinsic viscosity (IV) of the polyester resin constituting the B layers) - (the intrinsic viscosity (IV) of the polyester resin constituting the A layer)] is preferably 0.05 dl/g or more and 0.50 dl/g or less. If the difference in intrinsic viscosity between the polyester resin constituting the B layers and the polyester resin constituting the A layer is within the above range, it is possible to render oligomer deposition inhibiting properties good while maintaining a good film forming property. The difference in intrinsic viscosity is more preferably 0.08 dl/g or more and 0.35 dl/g or less, and particularly preferably 0.1 dl/g or more and 0.3 dl/g or less.

In the biaxially oriented laminate polyester film of the present invention, the crystallinity of the polyester resin composition constituting the A layer and/or the B layers is preferably 40 to 55%. If the crystallinity of the polyester resin composition constituting the A layer and/or the B layers is brought into the above range, it is possible to inhibit deposition of oligomers to a film surface when the film receives a heat load and inhibit rise of a film haze. Moreover, dimensional change can be kept small even under application of a heat load. Therefore, the film can be used suitably for optical applications, especially, glass substitute applications where a high heat load is applied to the film. Preferably, the polyester resin composition constituting the B layers is lower in crystallinity by 1% or more than the polyester resin composition constituting the A layer. Rendering the crystallinity of the polyester resin composition constituting the B layers lower by 1% or more than the crystallinity of the polyester resin composition constituting the A layer makes it possible to remarkably obtain an effect of inhibiting deposition of oligomers on a film surface. Especially, the crystallinity of the polyester resin composition constituting the B layers is preferably lower by 1% or more, more preferably 2% or more, particularly preferably 3% or more than the crystallinity of the polyester resin composition constituting the A layer. The crystallinity of the polyester resin composition constituting a film can be adjusted by the intrinsic viscosity of a polyester resin and film formation conditions (stretching ratio, heat treatment conditions, a relaxation annealing step, etc.). For example, among film formation conditions, increase in stretching ratio renders the crystallinity higher, and increase in heat treatment temperature also renders the crystallinity higher. Even under the same film formation conditions, the lower the intrinsic viscosity of the polyester resin constituting a film is, the higher the crystallinity is. Controlling the amount of oligomers contained in the polyester resin composition constituting the B layers to be low and controlling the crystallinity to be lower enable the laminate polyester film of the present invention to remarkably inhibit deposition of oligomers to a film surface.

In the polyester resin compositions that constitute the individual layers of the biaxially oriented laminate polyester film of the present invention, various additives, such as an antioxidant, a crystal nucleating agent, inorganic particles, organic particles, a detackifier, a heat stabilizer, a lubricant, an infrared ray absorber, and an ultraviolet ray absorber, may be added, as necessary, as long as the object of the present invention is not impaired. Moreover, the biaxially oriented polyester film of the present invention may be either a composite film prepared by coextrusion or a film prepared by bonding the resulting films together by various methods.

The thickness of each of the B layers disposed on both sides of the A layer of the biaxially oriented laminate polyester film of the present invention is preferably 5 μm or more and 50 μm or les.s. More preferably, it is 10 μm or more and 40 μm or less. If the thickness of each of the B layers is less than 5 μm, an oligomer deposition inhibiting effect of making oligomers depositing from the A layer stay within the B layers and preventing the oligomers from depositing to a film surface is not demonstrated and, as a result, oligomer defects are generated during film formation to pollute a process roll, sometimes forming damages on a film surface. If the thickness of each of the B layers exceeds 50 μm, the film is small in charge storage and is sometimes poor in electrostatic charge casting properties. The proportion

of each of the B layers with respect to the overall thickness of the film in the present invention is preferably 10% or more and 30% or less, more preferably 15% or more and 25% or less. The thicknesses of the B layers may be either different or the same. The proportion of the total of the thicknesses of the B layers with respect to the overall thickness of the film is preferably 20% or more and 60% or less. By setting the proportion of the thickness of the B layers with respect to the overall thickness of the film within the above range, a high oligomer deposition inhibiting effect can be obtained without lowering productivity.

The biaxially oriented laminate polyester film of the present invention needs to have a laminate structure composed of at least three layers including the A layer and the B layers on both sides of the A layer. This structure is capable of making oligomers depositing from the A layer stay within the B layers and preventing the oligomers from depositing to a film surface. For example, a structure having A layers on both sides of a B layer is unfavorable because a large number of oligomer defects are generated during film formation due to a large amount of oligomer deposition from the A layers, polluting a process roll and forming damages on a film surface. A case of a two-layer laminate structure composed of an A layer and a B layer is also unfavorable because oligomers deposit in an increased amount from the surface of the A layer. When a polyester film composed only of a single B layer is formed, the amount of oligomers that deposit from a film surface can be reduced, however, since the polyester resin constituting the B layer having an oligomer content reduced by solid phase polymerization will exhibit a high melt viscosity during melt extrusion due to its high intrinsic viscosity (IV) and will add a large load to an extruder, the production capacity is hardly enhanced.

A monolayer polyester film composed only of a polyester resin having a small oligomer content and having an intrinsic viscosity less than 0.7 dl/g is unfavorable because problems described below will occur. Examples of a method for obtaining a polyester resin having a small oligomer content and having an intrinsic viscosity less than 0.7 dl/g include a method in which a polymer obtained by melt polycondensation is heat-treated under an inert gas at normal pressure, and a method in which the intrinsic viscosity of a polymer obtained by melt polycondensation is rendered as low as 0.45 dl/g or less and the polymer is solid phase-polymerized to obtain a polyester containing less cyclic trimers. In the method in which a polymer obtained by melt polycondensation is heat-treated under an inert gas at normal pressure, color tone and transparency are deteriorated (the product comes to have a yellow tint and the color tone b value thereof increases) because a decomposition gas such as acetaldehyde generated during heating is not exhausted to the outside of the system although solid phase polymerization does not proceed and the intrinsic viscosity does not increase. In the case of the method in which the intrinsic viscosity of a polymer obtained by melt polycondensation is rendered as low as 0.45 dl/g or less and the polymer is solid phase-polymerized to obtain a polyester containing less oligomers, if the intrinsic viscosity after the melt polycondensation is low, the diameter at the time of discharging into a strand-like form after the melt polycondensation becomes unstable, resulting in a problem that chips to be obtained are not stable in shape. For example, in the case of solid phase-polymerizing polyethylene terephthalate, the polymerization rate of the solid phase polymerization is increased by removing ethylene glycol that is generated in a polycondensation reaction to the outside of the system, but solid phase polymerization performed using chips greatly varying in shape as described above results in a great variation in degree of polymerization (intrinsic viscosity) because of difference in surface area among chips. If a film is produced using polyester chips greatly varying in degree of polymerization (intrinsic viscosity), film breakage occurs during film formation or it becomes impossible to obtain a film stable in characteristics. Meanwhile, film production using polyester chips greatly varying in shape will cause defective biting thereof when the chips are fed into an extruder. Therefore, a polyester film being satisfactory in productivity, excellent in an effect of inhibiting oligomer deposition to a film surface, and also excellent in transparency and color tone cannot be obtained unless a biaxially oriented laminate polyester film of the present invention having a laminate structure having B layers on both sides of an A layer is provided.

Preferably, the polyester resin composition constituting the A layer of the biaxially oriented laminate polyester film of the present invention satisfies the following formula 1 and formula 2 in order to enable control of the melt specific resistance by adding a metal compound soluble in a reaction system, wherein the content of an alkaline earth metal element with respect to the total amount of the polyester resin composition constituting the A layer is denoted by M (mol/ton) and the content of a phosphorus element with respect thereto is denoted by P (mol/ton).

- $$1 \leq M \leq 15 \quad \text{(formula 1)}$$
- $$0 \leq M/P \leq 4.0 \quad \text{(formula 2)}$$

If M is less than 0.1 (mol/ton), the resulting biaxially oriented laminate polyester film increases only a little in charge storage and, as a result, productivity may be deteriorated due to shortage of electrostatic charge casting properties during film formation. On the other hand, if M exceeds 15 (mol/ton), an alkaline earth metal exhibits a catalytic action to a thermal decomposition reaction of a polyester and the thermal decomposition is promoted during a polycondensation reaction and, as a result, the b value of a polyester resin composition may increase. Moreover, it is unfavorable because

the amount of terminal carboxyl groups increases. Examples of the compound containing an alkaline earth metal element include aliphatic carboxylates, such as acetates and propionates of alkaline earth metals, halides, such as chlorides and bromides, hydroxides, and alcoholates, such as methylates, ethylates, and ethylene glycolates. Specific examples thereof include magnesium acetate, magnesium propionate, magnesium chloride, calcium chloride, magnesium glycolate, magnesium hydroxide, and calcium hydroxide. Of these, two or more types may be used in combination. Especially, magnesium compounds are preferred in order to inhibit deterioration of thermal stability.

Addition of a phosphorus compound in a certain amount with respect to an alkaline earth metal compound enables the polyester resin composition constituting the A layer of the biaxially oriented laminate polyester film of the present invention to inhibit deterioration of a polyester in thermal stability caused by the addition of an alkaline earth metal compound. If M/P is less than 1.0, the resultant polyester comes to have an increased melt specific resistance and, as a result, productivity may be deteriorated due to shortage of electrostatic charge casting properties during film formation. If M/P exceeds 4.0, the thermal stability or the color tone of the resultant polyester may deteriorate. As the compound containing a phosphorus element, at least one compound selected from phosphoric acid, phosphorous acid, and esters thereof can be used. Specific examples thereof include phosphoric acid, phosphate triesters, acidic phosphoric acid esters, phosphorous acid, and phosphites. It is preferred that these compounds be contained so that an alkaline earth metal element and a phosphorus element may satisfy the above-mentioned formula, and also particles having a metal compound adsorbability be contained. Incorporation of such particles makes it possible to obtain a polyester being low in melt specific resistance and excellent in electrostatic charge casting properties without eventually deteriorating thermal stability, color tone, and the amount of terminal carboxyl groups. On the other hand, when the content of the alkaline earth metal contained in the polyester resin composition constituting the A layer is 0.1 (mol/ton) or less and an alkaline earth metal is contained in an amount of 0.1 (mol/ton) or more in the polyester resin composition constituting the B layers, the laminate film is superior in electrostatic charge casting properties, but it may be inferior in oligomer deposition inhibiting properties.

Use of a polyester film outdoors is problematic in that film strength lowers with time due to hydrolysis of the polyester.

Forming the A layer or the B layers of the biaxially oriented laminate polyester film of the present invention from the polyester resin composition disclosed in Japanese Patent Laid-open Publication No. 2012-57021 makes it possible to provide a polyester film that satisfies wet heat resistance at a high level over a long period of time in outdoor use.

Specifically, it is also permitted that a) the alkali metal element content W1 in the polyester resin composition for constituting a layer is 0.5 mol/ton or more with respect to the polyester resin composition and the ratio W1/W2 of the alkali metal element content W1 (mol/ton) to the phosphorus element content W2 (mol/ton) is 0.4 or more and 0.8 or less, b) the polyester resin composition for constituting a layer contains phosphoric acid and an alkali metal phosphate, the alkali metal phosphate content in the resin composition is 0.5 mol/ton or more with respect to the resin composition, and phosphoric acid is contained in a molar ratio of 0.25 or more and 1.5 or less with respect to the alkali metal phosphate, and c) the alkali metal element is a sodium element or a potassium element.

In order to incorporate an alkali metal element into the A layer and the B layers, at least one compound selected from the group consisting of alkali metal phosphates, alkali metal phosphites, and alkali metal hypophosphites (hereinafter sometimes referred to as a "compound cB") may be incorporated into the A layer and the B layers.

In order to incorporate a phosphorus element' into the A layer and the B layers, it is also permitted to incorporate phosphoric acid (hereinafter sometimes referred to as a "compound dA") into the A layer and the B layers.

In the present invention, in order to incorporate an alkali metal element and a phosphorus element into the A layer and the B layers, it is particularly preferred to incorporate the compound dA and the compound cB into the A layer and the B layers. A polyester film can be provided with extremely high wet heat resistance by incorporating the compound dA and the compound cB.

It is also permitted to further incorporate an anti-hydrolysis agent into the A layer and the B layers, and an extremely high hydrolysis inhibiting effect can thereby be obtained.

From the viewpoints of polymerization reactivity, heat resistance, and wet heat resistance, it is more preferred that the alkali metal element is a sodium element or a potassium element. Examples of the compound cB include disodium hydrogenphosphate, dipotassium hydrogenphosphate, potassium dihydrogenphosphate, sodium dihydrogenphosphate, sodium hydrogenphosphite, potassium hydrogenphosphite, sodium hypophosphite, and potassium hypophosphite. Especially, an alkali metal phosphate is preferred in terms of polymerization reactivity and wet heat resistance.

The alkali metal element content W1 of the A layer and the B layers is preferably 0.5 mol/t or more, more preferably 1 mol/t or more with respect to the A layer and the B layers. If the alkali metal element content W1 is less than 0.5 mol/t with respect to the A layer and the B layers, the anti-hydrolysis effect or the molecular chain restricting effect is reduced, and the resultant polyester film may fail to have sufficient wet heat resistance. It becomes possible to make high wet heat resistance to be developed by adjusting the alkali metal element content W1 of the A layer and the B layers to 0.5 mol/t or more with respect to the A layer and the B layers. The upper limit of the alkali metal element content W1 is preferably 3 mol/t or less, more preferably 2.5 mol/t or less with respect to the A layer and the B layers,

from the viewpoint of preventing an excess alkali metal salt from depositing, becoming a foreign substance, and becoming likely to deteriorate the quality of a film.

An alkali metal element and a phosphorus element may be contained in the A layer and the B layers within the range of the ratio W1/W2 of the alkali metal element content W1 (mol/t) in the A layer and the B layers to the phosphorus element content W2 (mol/t) in the A layer and the B layers being 0.4 or more and 0.8 or less. If W1/W2 is less than 0.4, a buffer action becomes unlikely to be developed and an anti-hydrolysis effect is reduced, so that the resultant polyester film sometimes cannot have sufficient wet heat resistance. If W1/W2 exceeds 0.8, the anti-hydrolysis property may deteriorate because excess phosphoric acid reacts with a polyester during a polymerization reaction, thereby forming a phosphoric acid ester skeleton in a molecular chain and this part promotes a hydrolysis reaction. By adjusting the ratio W1/W2 of the alkali metal element content W1 (mol/t) to the phosphorus element content W2 (mol/t) of the A layer and the B layers to 0.4 or more and 0.8 or less, it becomes possible to have the resultant polyester film develop high wet heat resistance.

Moreover, an alkali metal phosphate may be incorporated into the A layer and the B layers in an amount of 0.5 mol/t or more with respect to the A layer and the B layers. The content is more preferably 1 mol/t or more. If the content of the alkali metal phosphate is less than 0.5 mol/t with respect to the A layer and the B layers, an anti-hydrolysis effect and a molecular chain restricting effect are reduced, so that the resultant film sometimes cannot have sufficient wet heat resistance. By adjusting the content of the alkali metal phosphate of the A layer and the B layers to 0.5 mol/t or more with respect to the A layer and the B layers, it becomes possible to have a film develop high wet heat resistance without deteriorating the quality of the film. The upper limit of the alkali metal phosphate content is preferably 3 mol/t or less, more preferably 2.5 mol/t or less with respect to the A layer and the B layers, from the viewpoint of preventing an excess alkali metal phosphate from depositing and becoming likely to become foreign substances.

The A layer and the B layers also preferably contain phosphoric acid in a molar ratio of 0.25 or more and 1.5 or less with respect to an alkali metal phosphate. The molar ratio is more preferably 0.3 or more and 1.25 or less. If the molar ratio is less than 0.25, a buffer action becomes unlikely to be developed and an anti-hydrolysis effect is reduced, so that the resultant polyester film sometimes cannot have sufficient wet heat resistance. If the molar ratio exceeds 1.5, the anti-hydrolysis property is sometimes deteriorated because excess phosphoric acid reacts with a polyester during a polymerization reaction, thereby forming a phosphoric acid ester skeleton in a molecular chain and this part promotes a hydrolysis reaction. By incorporating phosphoric acid into the A layer and the B layers in a molar ratio of 0.25 or more and 1.5 or less with respect to an alkali metal phosphate, it becomes possible to have the resultant polyester film develop high wet heat resistance.

Phosphoric acid may be incorporated into the A layer and the B layers in an amount of 0.1 mol/t or more and 5 mol/t or less with respect to the A layer and the B layers. The content is more preferably 0.3 mol/t or more and 3.5 mol/t or less. If the content is less than 0.1 mol/t, a buffer action becomes unlikely to be developed and an anti-hydrolysis effect is reduced, so that the resultant polyester film sometimes cannot have sufficient wet heat resistance. If the content exceeds 5 mol/t, the anti-hydrolysis property is sometimes deteriorated because excess phosphoric acid reacts with a polyester during a polymerization reaction, thereby forming a phosphoric acid ester skeleton in a molecular chain and this part promotes a hydrolysis reaction. By incorporating phosphoric acid into the A layer and the B layers in an amount of 0.1 mol/t or more and 5 mol/t or less with respect to the A layer and the B layers, it becomes possible to have the resultant polyester film develop high wet heat resistance.

From the viewpoints of heat resistance and wet heat resistance, the polyesters that constitute the A layer and the B layers preferably have a content of diethylene glycol, which is a by-product in polymerization, of 2% by mass or less, more preferably 1% by mass or less.

Preferably, the melting point Tm of the polyesters that constitute the A layer and the B layers is 245°C or higher and 290°C or lower. The melting point Tm as referred to herein is a melting point Tm during a temperature ramping step (temperature ramp-up rate: 20°C/min) obtained by DSC, and a temperature of a peaktop in a crystal melting peak of a 2nd Run obtained by heating a polyester from 25°C to (the melting point thereof + 50°C) at a temperature ramp-up rate of 20°C/min (1st RUN), holding at this state for 5 minutes, then rapidly cooling to 25°C or lower, and raising the temperature again from room temperature to 300°C at a temperature ramp-up rate of 20°C/min by a method in accordance with JIS K-7121 (1987) is defined as the melting point Tm of the polyester. More preferably, the melting point Tm is 247°C or higher and 275°C or lower, even more preferably 250°C or higher and 265°C or lower. A melting point Tm lower than 245°C is unfavorable because it may result in poor heat resistance of a film, whereas a melting point Tm exceeding 290°C is unfavorable because it may render extrusion processing difficult. Adjusting the melting point Tm of the polyesters constituting the A layer and the B layers to 245°C or higher and 290°C or lower in the biaxially oriented laminate polyester film of the present invention makes it possible to render the film a biaxially oriented laminate polyester film with which both heat resistance and processability are well attained.

Preferably, the number of the carboxyl terminal groups of the polyesters that constitute the A layer and the B layers is 20 Eq/t or less. It is more preferably 18 Eq/t or less, even more preferably 16 Eq/t or less, and particularly preferably 14 Eq/t or less. If the number of the carboxyl terminal groups exceeds 20 Eq/t, a catalytic action due to protons

derived from carboxyl terminal groups is strong and hydrolysis is promoted even if structural control is performed, and as a result, degradation may be likely to proceed.

The eighth aspect of the present invention is described below.

Regarding a laminate film to be used for a film for a display, the color tone b value obtained by a measuring method described later is preferably 1.5 or less, more preferably 1.0 or less. When the b value exceeds 1.5, the film is too yellowish in color and may be unsuitable for a display application.

Next, description is made on the ninth aspect of the present invention to the fourteenth aspect of the present invention.

Moreover, a laminate film including a resin layer (X) formed by use of a resin (α) and satisfying the following conditions (6) to (8) on at least one side of the biaxially oriented laminate polyester film according to any one of the first to eighth aspects of the present invention can be mentioned as the present invention:

(6) the thickness of the resin layer (X) is 80 to 500 nm,
(7) the pencil hardness of the resin layer (X) is "F" or more, and
(8) the resin (α) is a resin obtained by heating a resin composition containing a resin (I) having a hydroxy group and an acryloyl group and a melamine compound (II) having a methylol group and/or an alkoxymethyl group.

This laminate film is further improved in oligomer deposition inhibiting properties.

The resin layer (X) is required to have a thickness of 80 nm or more and 500 nm or less. By allowing the resin layer thickness to be 80 nm or more, it is possible to allow the pencil hardness of the resin layer of the present invention to be "F" or more and to impart oligomer deposition inhibiting properties to the laminate film. By allowing the resin layer thickness to be 500 nm or less, the transparency and handling properties of the laminate film become satisfactory.

It is required that the pencil hardness of the resin layer (X) be "F" or more. Rendering the pencil hardness of the resin layer to be "F" or more makes it possible to inhibit the occurrence of scratches during the transporting process at the time of film formation or processing.

Moreover, in the laminate film of the present invention, it is required that a resin layer (X) formed by use of a resin (α) be provided on at least one side of a polyester film. The details of the resin (α) will be described later.

In the resin to form the resin layer (X), namely the resin (α), it is preferred that the combined content of the resin (I) having a hydroxy group and an acryloyl group and the melamine compound (II) having a methylol group and/or an alkoxymethyl group be 70% by mass or more with respect to the total amount of the resin forming the resin layer. Adjusting the total content of the resin (I) and the melamine compound (II) to 70% by mass or more makes it possible to prevent scratches and to inhibit deposition of oligomers.

The resin (α) is a resin obtained by heating a resin composition containing a resin (I) having a hydroxy group and an acryloyl group and a melamine compound (II) having a methylol group and/or an alkoxymethyl group to 150°C or higher. If the resin composition containing a resin (I) and a melamine compound (II) having a methylol group and/or an alkoxymethyl group is heated to 150°C or higher, acryloyl groups of the resin (I) are crosslinked with each other to form a crosslinked structure, a hydroxy group of the resin (I) and a methylol group and/or an alkoxymethyl group of the melamine compound (II) are crosslinked with each other to form a crosslinked structure (a structure represented by formula (2) described later), or methylol groups of the melamine compound (II) are crosslinked with each other to form a crosslinked structure (a structure represented by formula (3) described later). Since crosslinking reactions among acryloyl groups of the resin (I), a hydroxy group of the resin (I) and a methylol group and/or an alkoxymethyl group of the melamine compound (II), or methylol groups of the melamine compound (II) are high in reactivity, the resin (α) becomes a resin having many crosslinked structures. Increasing the number of the hydroxy groups or acryloyl groups of the resin (I) and the number of the methylol groups and/or alkoxymethyl groups of the melamine compound (II) makes it possible to obtain a resin (α) having a more densely crosslinked structure.

That is, in the present invention, it is preferred that the resin forming the resin layer have a crosslinked structure of acryloyl groups. Moreover, it is preferred that the resin forming the resin layer have a crosslinked structure (a chemical structure) of a hydroxy group and a methylol group represented by formula (2). Moreover, it is preferred that the resin forming the resin layer have a crosslinked structure of methylol groups represented by formula (3).

[Chemical Formula 2]

Formula (2)

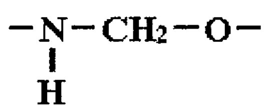

[Chemical Formula 3]

Formula (3) 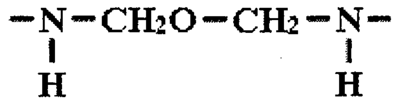

As such, since the resin forming the resin layer or the resin (α) has a densely crosslinked structure, the hardness of the resin layer can be enhanced significantly. In addition, a laminate film which hardly suffers from scratches in the transporting process and the processing process, allows a small amount of oligomers to deposit after heating, and is excellent in transparency can be attained. Particularly, the laminate film of the present invention exhibits a film haze change (ΔH) before and after a heat treatment at 170°C for 2 hours is 0.5% at the most. Therefore, the laminate film of the present invention can be suitably used for applications where high transparency is required under high temperature and high humidity conditions. Specifically, the laminate film according to the present invention is suitably provided for applications where a hard coat layer and a conductive layer such as indium tin oxide (hereinafter referred to as ITO) are provided on the film (for example, the application in a touch panel). This is because heat is applied at high temperatures to the laminate film at the time of allowing a hard coat layer and a conductive layer such as ITO to be laminated, and high transparency is required even after these layers are laminated.

The resin layer (X) of the laminate film of the present invention is required to be one formed by use of the resin (α). Any production method is acceptable as long as a laminate film which satisfies the conditions described above is prepared. A laminate film having a resin layer formed by use of a resin (α) can be produced by applying a resin composition containing a resin (I) having a hydroxy group and an acryloyl group and a melamine compound (II) having a methylol group and/or an alkoxymethyl group to at least one side of a polyester film (a substrate film) and heating the resin composition to 150°C or higher.

As described above, the resin (α) used in the present invention is a resin obtained by heating a resin composition containing a resin (I) having a hydroxy group and an acryloyl group and a melamine compound (II) having a methylol group and/or an alkoxymethyl group to 150°C or higher. The resin (α), etc. are described in detail below.

In the laminate film of the present invention, the resin (α) is preferably a resin having a glass transition temperature of 50°C or higher. By allowing the resin (α) to be a resin having a glass transition temperature of 50°C or higher, the hardness of the resin layer is heightened, and the resin layer can be not only imparted with oligomer deposition inhibiting properties and scratch inhibiting properties but also imparted with an effect of inhibiting the permeation of an organic solvent, the erosion of the resin, etc. Allowing the resin (α) to have a glass transition temperature of 50°C or higher can be accomplished by, for example, heating a resin composition containing a resin (I) having a glass transition temperature of 50°C or higher and a melamine compound (II) to 150°C or higher to obtain a resin (α).

Moreover, in order to enhance the hardness of the resin layer, the oligomer deposition inhibiting properties and the like, it is preferred that a resin forming the resin layer or a resin (α) have the following structures.

First, it is preferred that the resin (α) have a structure obtained by crosslinking acryloyl groups with each other. That is, it is preferred that the resin forming the resin layer have a structure obtained by crosslinking acryloyl groups with each other. The crosslinked structure can be formed by heating a resin (I) having an acryloyl group to 150°C or higher.

Next, it is preferred that the resin (α) have a structure represented by formula (2):

[Chemical Formula 4].

Formula (2) 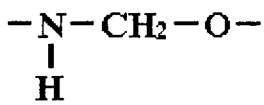

The structure represented by formula (2) is a structure obtained by crosslinking a hydroxy group with a methylol group and/or an alkoxymethyl group. That is, it is preferred that the resin forming the resin layer have a chemical structure of formula (2) obtained by crosslinking a hydroxy group with a methylol group and/or an alkoxymethyl group. The crosslinked structure can be formed by heating a resin (I) having a hydroxy group and a melamine compound (II) having a methylol group and/or an alkoxymethyl group to 150°C or higher. By allowing a resin forming the resin layer or a resin (α) to have a structure represented by formula (2), it is possible to make the resin layer have a high hardness and oligomer deposition inhibiting properties.

Furthermore, it is preferred that the resin (α) have a structure represented by formula (3):

[Chemical Formula 5].

Formula (3) 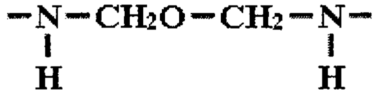

The structure represented by formula (3) is a structure obtained by crosslinking methylol groups with each other. That is, it is preferred that the resin forming the resin layer have a chemical structure of formula (3) obtained by crosslinking methylol groups with each other. The crosslinked structure can be formed by heating a melamine compound (II) having a methylol group to 150°C or higher. By allowing a resin forming the resin layer or a resin (α) to have a structure represented by formula (3), it is possible to make the resin layer have a high hardness and oligomer deposition inhibiting properties.

In addition, it is preferred that the resin (α) have a structure represented by formula (1):

[Chemical Formula 6].

Formula (1) 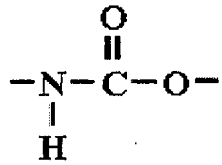

The structure represented by formula (1) is a urethane structure. That is, it is preferred that the resin forming the resin layer have a chemical structure of formula (1). The structure can be introduced into a resin (α) by, for example, using a resin (I) having a urethane structure as well as a hydroxy group and an acryloyl group. By allowing a resin forming the resin layer or a resin (α) to have a structure represented by formula (1), it is possible to make the resin layer have stretchability and elasticity. That is, although cracks may be produced in the resin layer or curling may occur when the resin (α) is formed (when a crosslinked structure of acryloyl groups or the crosslinked structures represented by formulae (2) and (3) are formed), the occurrence of cracks or curling can be inhibited when the resin forming the resin layer or the resin (α) has the structure of formula (1).

In the present invention, in the case of obtaining a resin (α) using a resin (I) and a melamine compound (II), with regard to the mass ratio between the resin (I) and the melamine compound (II) in a resin composition (a mixture of the resin (I) and the melamine compound (II)) for forming a resin layer, it is preferred that the mass of the melamine compound (II) be 30 parts by mass or more and 100 parts by mass or less when the mass of the resin (I) is taken as 100 parts by mass. It is more preferred that the mass of the melamine compound (II) be 30 parts by mass or more and 60 parts by mass or less. Adjusting the mass of the melamine compound (II) to 30 parts by mass or more makes it possible to make the resin (α) sufficiently have a structure of formula (3). As a result thereof, it is possible not only to render the pencil hardness of the resin layer "F" or more but also to remarkably inhibit the deposition of oligomers. Moreover, the adhesion between the resin layer and various types of inks, a hard coat agent or the like is enhanced, and furthermore, the flexibility, toughness and solvent resistance are also enhanced. On the other hand, adjusting the mass of the melamine compound (II) to 100 parts by mass or less makes it possible to inhibit the curing shrinkage which occurs at the time when the structure of formula (3) is formed. As a result thereof, it is possible to inhibit the occurrence of a crack in the resin layer and to render the haze of the laminate film 2.0% or less.

The resin (I) having a hydroxy group and an acryloyl group used in the present invention is a resin having at least one hydroxy group and one or more acryloyl groups. In the present invention, the acryloyl group refers to a concept that includes a methacryloyl group.

In the present invention, with regard to the resin (I) having a hydroxy group and an acryloyl group, any form of resin having them is acceptable as long as a resin (α) can be formed by heating the resin (I) to 150°C or higher together with the melamine compound (II). For example, the resin (I) may be a resin composed of a polymer having a hydroxy group and a polymer having an acryloyl group, and may be a resin composed of a polymer in which the hydroxy group and the acryloyl group constitute a repeating unit. Especially, the resin (I) is preferably a resin obtained by using an acrylic acid ester compound and/or a methacrylic acid ester compound (a), an ethylenically unsaturated compound (b) having a hydroxy group, and a compound (c) having a chemical structure represented by a formula (1) (a urethane structure) and a polyfunctional acryloyl group, and polymerizing these. From the viewpoint of allowing a densely crosslinked structure to be formed, it is more preferred that the resin (I) be composed of a polymer prepared by subjecting a hydrocarbon chain formed from (a) to graft polymerization randomly with (b) and (c). By heating a resin (I) prepared

by polymerizing these monomers ((a), (b) and (c)) to 150°C or higher together with a melamine compound (II), the resin (α) described above can be formed. Hereinafter, the compounds (a), (b) and (c) will be described.

The acrylic acid ester compound and/or the methacrylic acid ester compound (a) is a monomer that forms the main skeleton of the resin (I). Specific examples of the compound (a) include alkyl esters with 1 to 18 carbon atoms of an acrylic acid and/or a methacrylic acid, such as methyl acrylate, ethyl acrylate, n-propyl acrylate, i-propyl acrylate, n-butyl acrylate, i-butyl acrylate, t-butyl acrylate, n-octyl acrylate, i-octyl acrylate, t-octyl acrylate, 2-ethylhexyl acrylate, methyl methacrylate, ethyl methacrylate, n-propyl methacrylate, i-propyl methacrylate, n-butyl methacrylate, i-butyl methacrylate, t-butyl methacrylate, n-octyl methacrylate, i-octyl methacrylate, t-octyl methacrylate and 2-ethylhexyl methacrylate; cycloalkyl esters with 5 to 12 cyclo-carbon atoms, such as cyclohexyl acrylate; and aralkyl esters with 7 to 12 carbon atoms, such as benzyl acrylate.

In the case of preparing the resin (I) by using the compounds (a), (b) and (c) by polymerization, it is preferred that the mass of the compound (a) be 55 parts by mass or more and 98 parts by mass or less when the total mass of the compounds (a) to (c) is taken as 100 parts by mass. Adjusting the mass (the charge amount) of the compound (a) within the above-mentioned numerical value range makes it possible to prepare the resin (I) efficiently by polymerization.

The ethylenically unsaturated compound (b) having a hydroxy group is required to have a hydroxy group. Using such a compound (b) as a monomer makes it is possible to make the resin (I) have a hydroxy group.

As a specific example of the compound (b), an unsaturated compound containing one or more hydroxy groups in its molecule, such as 2-hydroxyethyl acrylate, 2-hydroxypropyl acrylate, 3-hydroxypropyl acrylate, 2-hydroxybutyl acrylate, 3-hydroxybutyl acrylate, 4-hydroxybutyl acrylate, 6-hydroxyhexyl acrylate, 2-hydroxy ethyl allyl ether, 2-hydroxy propyl allyl ether, 2-hydroxy butyl allyl ether, allyl alcohol, 2-hydroxyethyl methacrylate, 2-hydroxypropyl methacrylate, 3-hydroxypropyl methacrylate, 2-hydroxybutyl methacrylate, 3-hydroxybutyl methacrylate, 4-hydroxybutyl methacrylate, 6-hydroxyhexyl methacrylate, 2-hydroxy ethyl methallyl ether, 2-hydroxy propyl methallyl ether or 2-hydroxy butyl methallyl ether is preferred.

Moreover, the compound (b) may have a carboxyl group.

In the case of preparing the resin (I) by using the compounds (a), (b) and (c) by polymerization, it is preferred that the mass of the compound (b) be 1 part by mass or more and 30 parts by mass or less when the total mass of the compounds (a) to (c) is taken as 100 parts by mass. Adjusting the mass (the charge amount) of the compound (b) to 1 part by mass or more makes it possible to make the resin (I) have a sufficient amount of hydroxy groups. Moreover, adjusting the mass of the compound (b) to 30 parts by mass or less makes it possible to prepare the resin (I) efficiently by polymerization. If the mass of the compound (b) exceeds 30 parts by mass, at the time of preparing a coating liquid containing a resin composition by a method described later, there is a case where the compound (b) becomes difficult to be suitably used since the resin (I) water-dispersed or water-solubilized in an aqueous solvent turns into a gel or flocculates.

The compound (c) having a chemical structure represented by formula (1) (a urethane structure) and a polyfunctional acryloyl group is required to have an acryloyl group. Moreover, when the acryloyl group of the compound (c) is polyfunctional, the group is preferred because a densely crosslinked structure can be formed in the resin (α). It is preferred that the number of acryloyl groups of the compound (c) be 2 or more and 15 or less. In the present invention, the acryloyl group refers to a concept that includes a methacryloyl group. Using such a compound (c) as a monomer makes it possible to make the resin (I) have an acryloyl group. Moreover, it is preferred that the compound (c) have a urethane structure in its molecule in addition to a polyfunctional acryloyl group. Using such a compound (c) as a monomer makes it possible to make the resin (I) have an acryloyl group and a urethane structure.

As the compound (c), specifically, preferred is a urethane acrylate compound synthesized by reacting a compound, that is obtained by reacting a polyhydric alcohol with an isocyanate monomer and/or an organic polyisocyanate, with an acrylate monomer having a hydroxy group and/or a methacrylate monomer having a hydroxy group under a solventless condition or in the presence of an organic solvent.

Examples of the polyhydric alcohol include acrylic polyols, polyester polyols, polycarbonate polyols, ethylene glycol, and propylene glycol. Examples of the isocyanate monomer include tolylene diisocyanate, diphenyl methane diisocyanate, xylylene diisocyanate, isophorone diisocyanate, and hexamethylene diisocyanate, and examples of the organic polyisocyanate include an adduct type polyisocyanate, an isocyanurate type polyisocyanate, and a biuret type polyisocyanate which are synthesized from isocyanate monomers. Examples of the acrylate monomer having a hydroxy group include 2-hydroxyethyl acrylate, 2-hydroxy-3-phenoxypropyl acrylate, isocyanuric acid ethylene oxide-modified diacrylate, pentaerythritol tri- and tetra-acrylates, and dipentaerythritol pentaacrylate. Examples of the methacrylate monomer having a hydroxy group include 2-hydroxyethyl methacrylate and hydroxypropyl methacrylate. Moreover, a methylol group may be contained in the compound (c).

In the case of preparing the resin (I) by using the compounds (a), (b) and (c) by polymerization, it is preferred that the mass of the compound (c) be 1 part by mass or more and 15 parts by mass or less when the total mass of the compounds (a) to (c) is taken as 100 parts by mass. Adjusting the mass of the compound (c) to 1 part by mass or more makes it possible to make the resin (I) have sufficient amounts of acryloyl groups and urethane structures.

On the other hand, when the mass of the compound (c) exceeds 15 parts by mass, it is not preferred because the following phenomenon may occur. That is, since the resin (I) has an excess amount of acryloyl groups if the mass of the compound (c) exceeds 15 parts by mass, a large number of crosslinked structures of acryloyl groups are formed when the resin (I) is heated to 150°C or higher to obtain a resin ($\alpha$). As a result thereof, significant curing shrinkage is caused and a crack may be generated in the resin layer. Moreover, even when the resin (I) is heated to 150°C or higher to obtain a resin ($\alpha$), the resin layer may be inferior in hardness since the hardness of the resin ($\alpha$) cannot be sufficiently enhanced.

Although the method for producing the resin (I) to be used in the present invention is not particularly limited and a technique publicly known can be applied thereto, it is preferred that the compounds (a), (b) and (c) be used as monomers. Furthermore, with regard to the method for producing the resin (I), it is preferred that the resin (I) be produced by emulsion polymerization in an aqueous solvent using the compounds (a), (b) and (c). Using the aqueous solvent makes it easier to prepare a coating liquid containing a resin composition by using an aqueous solvent. Moreover, in the case where the resin (I) is produced by emulsion polymerization, it is preferred because the resin (I) is excellent in mechanical dispersion stability.

As an emulsifying agent used in the present invention, either of an anionic emulsifying agent and a nonionic emulsifying agent may be used without limitation, and the emulsifying agents may be used alone or in combination of two or more thereof.

Examples of the anionic emulsifying agent include higher fatty acid salts such as sodium oleate, alkylarylsulfonic acid salts such as sodium dodecylbenzenesulfonate, and alkyl sulfate salts such as sodium lauryl sulfate. Moreover, examples of the nonionic emulsifying agent include polyoxyethylene alkyl ethers such as polyoxyethylene lauryl ether, and polyoxyethylene octylphenyl ethers.

At the time of emulsion polymerization, a polymerization initiator, such as a persulfate such as sodium persulfate, potassium persulfate or ammonium persulfate, an organic peroxide such as t-butyl hydroperoxide, cumene hydroperoxide or p-menthane hydroperoxide, or hydrogen peroxide is usually used. These polymerization initiators may be either used alone or in combination of plural kinds thereof.

Moreover, during the emulsion polymerization, a reducing agent may be used according to demand in combination with the polymerization initiator. As such a reducing agent, for example, a reducing organic compound such as ascorbic acid, tartaric acid, citric acid, glucose or a formaldehyde sulfoxylate metal salt, or a reducing inorganic compound such as sodium thiosulfate, sodium sulfite, sodium bisulfite, sodium metabisulfite or ammonium bisulfite can be used.

Furthermore, a chain transfer agent may be used during the emulsion polymerization. Examples of such a chain transfer agent include n-dodecyl mercaptan, tert-dodecyl mercaptan, n-butyl mercaptan, 2-ethylhexyl thioglycolate, 2-mercaptoethanol, and trichlorobromomethane. A polymerization temperature suitably employed during the emulsion polymerization of the resin (I) of the present invention is about 30 to about 100°C.

The melamine compound (II) having a methylol group and/or an alkoxymethyl group that can be used for the present invention is required to have one or more triazine rings and one or more methylol groups and/or alkoxymethyl groups in one molecule. Use of the melamine compound (II) makes it possible to make the resin ($\alpha$) have a crosslinked structure of methylol groups represented by formula (3).

As the melamine compound (II), specifically, a compound prepared by a dehydration condensation reaction of a methylol melamine derivative, that is obtained by condensation of melamine and formaldehyde, with a lower alcohol such as methanol, ethanol or isopropanol to perform etherification is preferred.

Examples of the methylolated melamine derivative include monomethylol melamine, dimethylol melamine, trimethylol melamine, tetramethylol melamine, pentamethylol melamine, and hexamethylol melamine.

In the present invention, a compound (III) having one or more functional groups selected from the group consisting of a methylol group, an amino group, an isocyanate group, an epoxy group, an alkoxysilane group, an oxazoline group, a carboxyl group and a carbodiimide group may be incorporated into a resin forming the resin layer (X), in addition to the resin ($\alpha$), the resin (I) and the melamine compound (II). It is preferred that the mass of the compound (III) be 30% by mass or less when the total amount of the resin forming the resin layer is taken as 100% by mass. Adjusting the mass of the compound (III) to 30% by mass or less makes it possible to enhance the characteristics such as adhesion to various types of inks, a hard coat agent or the like, wet heat adhesion, flexibility and toughness while maintaining excellent properties such as resin layer hardness, oligomer deposition inhibiting properties and transparency resulting from the resin ($\alpha$).

With regard to the compound having a methylol group, specifically, it is preferred to use one or more kinds of N-methylolacrylamide, N-methylolmethacrylamide and the like which are unsaturated carboxylic acid amides having a methylol group.

Examples of the compound having an amino group include aminoalkyl esters such as aminoethyl acrylate, dimethylaminoethyl acrylate, diethylaminoethyl acrylate, butylaminoethyl acrylate, aminoethyl methacrylate, dimethylaminoethyl methacrylate, diethylaminoethyl methacrylate and butylaminoethyl methacrylate; and carboxylic acid aminoalkylamides such as aminoethyl acrylamide, dimethylaminomethyl acrylamide, methylaminopropyl acrylamide, aminoethyl methacrylamide, dimethylaminomethyl methacrylamide and methylaminopropyl methacrylamide.

The compound having an isocyanate group can be exemplified by aromatic polyisocyanate compounds such as 1,3- or 1,4-phenylene diisocyanate, 2,4- or 2,6-tolylene diisocyanate, 1,5-naphthylene diisocyanate, 4,4-diphenylmethane diisocyanate, 3,3-dimethyldiphenylmethane-4,4-diisocyanate and 1, 3-xylylene diisocyanate; aliphatic polyisocyanate compounds such as 1,4-tetramethylene diisocyanate, 1,6-hexamethylene diisocyanate, 2,2,4-trimethyl-1,6-hexamethylene diisocyanate, 1,8-octamethylene diisocyanate and 1,10-decamethylene diisocyanate; dimers and trimers of these isocyanates; and adducts between these isocyanates and a divalent or trivalent polyol such as ethylene glycol or trimethylolpropane.

Examples of the compound having an epoxy group include glycidyl acrylate, 3,4-epoxycyclohexylmethyl acrylate, glycidyl allyl ether, glycidyl vinyl ether, 3,4-epoxycyclohexyl vinyl ether, glycidyl methacrylate, 3,4-epoxycyclohexylmethyl methacrylate, and glycidyl methallyl ether.

Examples of the compound having an alkoxysilane include vinyltrimethoxysilane, vinyltriethoxysilane, vinyltri(β-methoxyethoxy)silane, β-(3,4-epoxycyclohexyl)ethyltrimethoxysilane, γ-glycidoxypropyltrimethoxysilane, γ-glycidoxypropylmethyldiethoxysilane, γ-glycidoxypropyltriethoxysilane, γ-methacryloxypropyltrimethoxysilane, γ-methacryloxypropylmethyldimethoxysilane, γ-methacryloxypropyltriethoxysilane, γ-methacryloxypropylmethyldiethoxysilane, N-β-(aminoethyl)-γ-aminopropyltrimethoxysilane, N-β-(aminoethyl)-y-aminopropylmethyldimethoxysilane, N-β-(aminoethyl)-y-aminopropyltriethoxysilane, γ-aminopropyltrimethoxysilane, and γ-aminopropyltriethoxysilane.

Although the compound having an oxazoline group is not particularly limited as long as the compound is one having at least one oxazoline group or oxazine group per one molecule, an addition polymerizable oxazoline group-containing monomer is preferred. Examples thereof include 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline and 2-isopropenyl-5-ethyl-2-oxazoline.

Although the compound having a carboxyl group is not particularly limited as long as the compound is an unsaturated compound containing one or more carboxyl groups in its molecule, examples thereof include acrylic acid, methacrylic acid, maleic acid, maleic anhydride, fumaric acid, crotonic acid, and itaconic acid.

Although the compound having a carbodiimide group is not particularly limited as long as the compound is, for example, one having at least one carbodiimide structure represented by the following formula (4) per one molecule, from the viewpoint of wet heat adhesion and the like, a polycarbodiimide compound having two or more carbodiimide structures in one molecule is especially preferred. In particular, in the case of using a polymer type isocyanate compound having a plurality of carbodiimide groups at the end or in the side chain of the polymer such as a polyester resin or an acrylic resin, the compound can be preferably used. This is because when a resin layer of the present invention is provided on a polyester film to prepare a laminate film, not only hardness of the resin layer and oligomer deposition inhibiting properties but also adhesion to various inks, a hard coat agent or the like, wet heat adhesion, flexibility and toughness are enhanced.

Formula (4) -N=C=N-

A publicly known technique can be applied to the production of a carbodiimide compound, and in general, the compound is obtained by polycondensing a diisocyanate compound in the presence of a catalyst. As a diis.ocyanate compound which is a starting material for a polycarbodiimide compound, an aromatic, aliphatic or alicyclic diisocyanate can be used. Specifically, tolylene diisocyanate, xylene diisocyanate, diphenylmethane diisocyanate, hexamethylene diisocyanate, cyclohexane diisocyanate, isophorone diisocyanate, dicyclohexyl diisocyanate, or the like can be used. Furthermore, as long as the effect of the present invention is not lost, in order to enhance the water-solubility or water-dispersibility of a polycarbodiimide compound, a surfactant, or a hydrophilic monomer such as polyalkylene oxide, a quaternary ammonium salt of a dialkylamino alcohol or a hydroxyalkylsulfonic acid salt may be added to the compound.

Moreover, other compounds, for example, an aziridine compound, an amidoepoxy compound, a titanate-based coupling agent such as a titanium chelate, a methylolated or alkylolated urea-based compound, and an acrylamide-based compound can be optionally used.

The laminate films of the ninth aspect of the present invention to the fourteenth aspect of the present invention are each a laminate film in which a resin layer (X) formed using a resin (α) is provided on at least one side of the biaxially oriented laminate polyester film described in any one of the first to eighth aspects of the present invention. An optical laminate film, which is severely required to have high transparency, is expected to be used under severe processing temperature and processing conditions. Even in the case of a laminate film having a resin layer (X) on at least one side, when the polyester film that serves as a substrate does not have the configuration of the polyester film described above, a highly transparent film cannot be obtained because deposition of oligomers cannot be inhibited sufficiently. Therefore, in the laminate film of the present invention, in order to demonstrate a function to prevent deposition of oligomers, the laminate film is required to be a laminate film in which a resin layer (X) formed using a resin (α) is provided on at least one side of a polyester film composed of at least three layers including the above-mentioned A layer and B layers on

both sides of the A layer.

In the present invention, preferred as a method for forming the resin layer (X) is a method in which a resin composition containing a resin (I) and a melamine compound (II) is provided on at least one side of a polyester film and then heated to 150°C or higher to form a resin layer containing a resin (α) on the polyester film. By setting the heating temperature to 150°C or higher, it is possible to form a resin layer having the structures of formulae (1) to (3). Thus, it is possible to obtain a laminate film which hardly suffers from scratches and deposition of oligomers.

Moreover, in the resin composition, it is preferred that the total content of the resin (I) and the melamine compound (II) be 70% by mass or more with respect to the solid content in the resin composition. Adjusting the total content of the resin (I) and the melamine compound (II) to 70% by mass or more makes it possible to efficiently form a resin layer having the structures of formulae (1) to (3) at the time of heating the resin composition to 150°C or higher. On the other hand, with regard to a compound (III) and various other additives other than the resin (I) and the melamine compound (II), it is preferred that the total content thereof be less than 30% by mass with respect to the solid content in the resin composition. By adjusting the total content of the compound (III) and various other additives to less than 30% by mass, the formation of a resin layer having the structures of formulae (1) to (3) obtained from the resin (I) and the melamine compound (II) described above is not inhibited, and moreover, it is possible to enhance the characteristics such as adhesion of the resin layer to various types of inks, a hard coat agent or the like, wet heat adhesion, flexibility and toughness.

At the time of providing a resin composition containing a resin (I) and a melamine compound (II) on a polyester film, a solvent may be used. That is, the resin (I) and the melamine compound (II) may be dissolved or dispersed in a solvent to prepare a coating liquid, and this may be applied to a polyester film. After the liquid is applied, by drying the solvent and heating the liquid to 150°C or higher, a film on which a resin (α) is laminated can be obtained. In the present invention, it is preferred that an aqueous solvent be used as the solvent. By using an aqueous solvent, it is possible to prevent the solvent from rapidly evaporating in heating process and to form a uniform resin layer. Moreover, the aqueous solvent is superior to the organic solvent from the viewpoint of the environmental load.

In this context, an aqueous solvent refers to water or a mixture prepared by mixing at an arbitrary ratio water with an organic solvent soluble in water, such as alcohols including methanol, ethanol, isopropanol and butanol; ketones including acetone and methyl ethyl ketone; and glycols including ethylene glycol, diethylene glycol and propylene glycol.

As a method of applying a resin composition to a polyester film, although either of an in-line coating method and an off coating method is acceptable, preferred is an in-line coating method. An in-line coating method is a method in which coating is performed within a process for the production of a polyester film. Specifically, the method refers to a method in which coating is performed at any stage from the time when a polyester resin is melt-extruded until a film is subjected to biaxial stretching and a heat treatment and is wound up. Usually, the resin composition is applied to any of an unstretched (unoriented) polyester film (hereinafter sometimes referred to as an A film) which is obtained by being melt-extruded and then rapidly cooled and is substantially in an amorphous state, a uniaxially stretched (uniaxially oriented) polyester film (hereinafter sometimes referred to as a B film) which is stretched in the longitudinal direction thereafter, and a biaxially stretched (biaxially oriented) polyester film (hereinafter sometimes referred to as a C film) before a heat treatment, which is further stretched in the width direction.

In the present invention, it is preferred to employ a method of applying a resin composition to either of the A film and the B film which are polyester films before the crystal orientation is completed, evaporating the solvent, stretching the polyester film in the uniaxial direction or biaxial direction, heating the film at 150°C or higher, and then completing the crystal orientation of the polyester film to provide a resin layer. Since film formation of a polyester film, coating with a resin composition, drying of the solvent and heating (that is, formation of a resin layer) can be simultaneously performed according to this method, the method has the advantage from the viewpoint of production costs. Moreover, since stretching is performed after coating, it is easy to make the resin layer thinner.

Of these, a method of applying a resin composition to a film uniaxially stretched in the longitudinal direction (a B film), drying the solvent, then stretching the film in the width direction, and heating the film to 150°C or higher is preferred. Since the method has the number of stretching processes smaller by one than that in a method of applying a resin composition to an unstretched film and then biaxially stretching the film, it is possible to inhibit the occurrence of defects and cracks in a resin layer caused by stretching.

On the other hand, an off-line coating method is a method of applying a resin composition to a film obtained after uniaxially or biaxially stretching the above-mentioned A film and subjecting the film to a heat treatment to complete the crystal orientation of the polyester film, or on an A film, in a process separate from a film formation process. In the present invention, it is preferred that the resin composition be applied by an in-line coating method because of various advantages described above.

Accordingly, in the present invention, the best method of forming a resin layer is a method of forming the resin layer by applying a resin composition containing an aqueous solvent to a polyester film by means of an in-line coating method, drying the aqueous solvent, and heating the film at 150°C or higher.

It is preferred to use an aqueous solvent as the solvent of the coating liquid containing a resin composition.

The coating liquid containing a resin composition can be prepared by mixing and stirring a resin (I) which is water-dispersed or water-solubilized as necessary, a melamine compound (II) and an aqueous solvent at a desired mass ratio in any order. Then, various additives such as a lubricant, inorganic particles, organic particles, a surfactant, an antioxidant and a thermal initiator can be mixed and stirred as necessary in any order as long as the resin layer formed from the resin composition is not deteriorated in its characteristics. As a method of mixing and stirring, a container can be shaken by hand, a magnetic stirrer or a stirring blade can be used, and the ultrasonic irradiation, dispersing by vibrations and the like can be performed.

As a method of applying a resin composition to a polyester film, a publicly known coating method, for example, any method such as a bar coating method, a reverse coating method, a gravure coating method, a die coating method or a blade coating method can be used.

The twelfth aspect of the present invention is described below.

Preferably, the optical laminate film of the present invention has a film haze of 2.0% or less. The film haze is more preferably 1.5% or less, and even more preferably 1.0% or less. If the haze of the laminate film exceeds 2.0%, the film cannot be used as a film for optical applications where transparency is highly required. Adjustment of the film haze to 2.0% or less makes it possible to inhibit clouding of a display and to inhibit deterioration in resolution, for example, in use as a film for a display.

The thirteenth aspect of the present invention is described below.

Some of films to be used for optical applications, for example, films for touch panels, are required to be high in transparency even after exposure to a high temperature atmosphere for a long time, for example, at 170°C for 2 hours. From such a viewpoint, the film haze change (ΔH) before and after heating a laminate film at 170°C for 2 hours is preferably 0.5% or less, more preferably 0.3% or less, and particularly preferably 0.1% or less. When the film haze change (ΔH) before and after heating at 170°C for 2 hours exceeds 0.5%, visibility lowers with increase in film haze, and the film may become unsuitable for applications where high visibility is required, for example, for touch panel applications. Preferably, the optical laminate film of the present invention provides an amount of surface oligomers deposited on a surface having the resin layer (X) of 1.0 $mg/m^2$ or less when being subjected to a heat treatment at 170°C for 2 hours. When the amount of surface oligomers to be deposited is 1.0 $mg/m^2$ or less, high transparency of a polyester film is prevented from deteriorating even under use conditions at high temperature and high humidity, and the film can be suitably used as a film for optical applications where transparency is highly required. The amount of surface oligomers to be deposited is more preferably 0.75 $mg/m^2$ or less.

The fourteenth aspect of the present invention is described below.

The optical laminate film of the present invention that exhibits only a small thermal dimensional change in high temperature regions is preferred because deterioration in planarity due to a heat load applied to the film during various processing steps can be inhibited. Preferably, the heat shrinkage ratio before and after heating the optical laminate film of the present invention at 150°C for 30 minutes is 1.5% or less in both the longitudinal direction and the width direction of the film. The heat shrinkage ratio is more preferably 1.0% or less. When the heat shrinkage ratio exceeds 1.5%, the film may be unsuitable for a film for optical applications particularly as a substitute for glass due to a large dimensional change.

Next, the fifteenth aspect of the present invention is described below.

The biaxially oriented laminate polyester films of the first to eighth aspects of the present invention can be suitably used for optical applications.

The biaxially oriented laminate polyester film and the optical laminate film of the present invention can be produced by a variety of conventionally publicly known methods. Hereinafter, some examples of a method for producing the laminate film in the present invention are described. Although the following description is made on a laminate polyester film composed of three layers as an example of the polyester film, the present invention should not be construed as limited to this example.

Regarding the polyester resin composition constituting the B layers of the polyester film (hereinafter referred to as a polyester B) and the polyester resin composition constituting the A layer of the polyester film (hereinafter referred to as a polyester A), it is preferred to produce the polyester film from the polyester B and the polyester A by a coextrusion method.

First, the polyester A is brought into a molten state with an extruder and then directly filtered with a filter. On the other hand, the polyester B is brought into a molten state with another extruder and filtered with another filter, and then both are led to a feed block and laminated together in a molten state. The lamination thickness ratio of the polyester A to the polyester B can be adjusted to a desired lamination thickness ratio by adjusting the extruder outputs for the individual layers. After thus melting, and preferably laminating the polyesters, the polyesters are coextruded through a spinneret at a temperature of the melting point (Tm) to (Tm + 70)°C and then rapidly cooled on a casting drum at 10 to 50°C to solidify, obtaining an unstretched film sheet (A film). Then, in accordance with an ordinary method, a uniaxially oriented polyester film (B film) is obtained by stretching the above-mentioned unstretched laminate film in one axial direction (machine direction or transverse direction) at a temperature of (Tg) to (Tg + 80)°C (Tg is the glass transition

temperature of the polyester) at a ratio of 2 to 8 times, preferably 3 to 7.5 times. In order to further form a resin layer (X) on one side or both sides of the polyester film, a coating liquid having a resin composition containing the resin (I) and the melamine compound (II) is applied. In this case, the surface to be coated of the polyester film may be subjected to a surface treatment, such as a corona discharge treatment, before the application. Performing a surface treatment such as a corona discharge treatment makes it possible to prevent a resin composition from cissing and to achieve a uniform coating thickness because the coating properties of the resin composition to a polyester film are enhanced. After coating, the PET film is grasped with clips at the edge parts thereof and introduced into a preheating zone at 80 to 130°C to dry the solvent of the coating liquid. After the drying, the film is stretched by 1.1 to 5.0 times in the width direction. Subsequently, the film is introduced into a heat treatment zone at 150 to 250°C and subjected to a heat treatment for 1 to 30 seconds, and the formation of a resin layer (X) containing a resin ($\alpha$) is completed as well as the crystal orientation is completed. In this heating process (heat treatment process), the film may be subjected to a 3 to 15% relaxation treatment in the width direction or the longitudinal direction as necessary. Setting the heat treatment temperature to 150°C or higher makes it possible to form a resin layer having the structures of formulae (1) to (3). Thus, it is possible to obtain a laminate film which hardly suffers from scratches and deposition of oligomers.

Although the biaxial stretching can be performed, for example, by a sequential biaxial stretching method or a simultaneous biaxial stretching method, since the resin layer (X) can be rendered uniform in thickness if a coating liquid is applied to a film having been uniaxially stretched (B film) and then further stretching is performed, biaxial stretching is preferably performed by a sequential biaxial stretching method in the present invention. If desired, the film may be rendered one of so-called strengthened type with enhanced mechanical strength by re-stretching the film further in the machine direction or the transverse direction or both the directions (the machine direction and the transverse direction) before heat setting.

When adjusting the thickness of the resin layer (X), the thickness can be controlled to a desired value through adjustment of the solid content concentration of the resin composition containing the resin (I) and the melamine compound (II) and the coating thickness.

The resin layer (X) formed by use of the resin ($\alpha$) and satisfying the conditions (6) to (8) in the ninth aspect of the present invention may be changed to a resin layer (Y) or a resin layer (Z) each described below. In this case, the object of the present invention is achieved, and moreover, effects characteristic to the resin layers (Y) and (Z) are also obtained.

The resin layer (Y) contains an acrylic resin as a main constituent and also contains a melamine-based crosslinking agent and/or an oxazoline-based crosslinking agent. The melamine-based crosslinking agent in an amount of 2 to 60 parts by weight and/or the oxazoline-based crosslinking agent in an amount of 2 to 30 parts by weight are contained with respect to 100 parts by weight of the acrylic resin. An effect that the resin layer (Y) is excellent in adhesion to a coating, such as a hard coat layer, is exhibited.

The glass transition point (Tg) of the acrylic resin, which is not particularly limited, is preferably 0 to 90°C, more preferably 10 to 80°C. A case of using an acrylic resin having a low Tg tends to be poor in adhesion under high temperature and high humidity, and conversely, a case of using an acrylic resin having an excessively high Tg is undesirable because cracks may be produced during stretching. The molecular weight of the acrylic resin is preferably 100,000 or more, and more preferably, it is desirable in terms of adhesion to adjust the molecular weight to 300,000 or more.

Preferred acrylic resins include a copolymer selected from methyl methacrylate, ethyl acrylate, n-butyl acrylate, 2-hydroxyethyl acrylate, acrylamide, N-methylolacrylamide, glycidyl methacrylate, and acrylic acid.

The crosslinking agent is not particularly limited as long as it is a compound that causes a crosslinking reaction, and there can be used methylolated or alkylolated urea-based, melamine-based, acrylamide-based, and polyamide-based compounds, epoxy compounds, isocyanate compounds, oxazoline-based compounds, aziridine compounds, various silane coupling agents, various titanate-based coupling agents, etc. Especially, methylolated melamine-based compounds, oxazoline-based compounds, and epoxy compounds are preferably used.

An oxazoline-based crosslinking agent is not particularly limited as long as it has an oxazoline group as a functional group in the compound, and preferred is an agent composed of an oxazoline group-containing copolymer that contains at least one kind of monomer containing an oxazoline group and that is obtained by copolymerizing at least one other monomer.

As the monomer containing an oxazoline group, 2-vinyl-2-oxazoline, 2-vinyl-4-methyl-2-oxazoline, 2-vinyl-5-methyl-2-oxazoline, 2-isopropenyl-2-oxazoline, 2-isopropenyl-4-methyl-2-oxazoline, 2-isopropenyl-5-ethyl-2-oxazoline, and so on can be used, and a mixture of one or more of these monomers may be used. Especially, 2-isopropenyl-2-oxazoline is preferred because it is easy to industrially obtain.

The resin layer (Z) contains an acrylic-modified polyester resin and an aliphatic urethane resin. The mass ratio in content of the acrylic-modified polyester resin to the aliphatic urethane resin is preferably 50/50 to 90/10. The total content of the acrylic-modified polyester resin and the aliphatic urethane resin is preferably 60% by mass or more with respect to the resin layer (Z). The resin layer (Z) may further contain a melamine compound and/or a carbodiimide compound. Preferably, the total mass of the melamine compound and the carbodiimide compound is 10 parts by mass

or more and 40 parts by mass or less when the total mass of the acrylic-modified polyester resin and the aliphatic urethane resin is taken as 100 parts by mass. Thereby, the resin layer (Z) produces an effect that adhesion to polyvinyl alcohol, which is widely used as a base material of a polarizing plate, is excellent even under a high temperature and high humidity environment.

Preferably, the acrylic-modified polyester resin and the aliphatic urethane resin have at least one structure of formulae (5) to (9). Since formulae (5) to (9) each have a polar group that forms a hydrogen bond with a hydroxy group of polyvinyl alcohol, the resin layer (Z) can form a hydrogen bond with polyvinyl alcohol not only at an aliphatic urethane structure site but also at a site of formulae (5) to (9) and can improve adhesion to polyvinyl alcohol.

[Chemical Formula 7]

Formula (5) 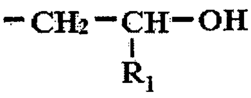 $R_1$ : H or $CH_3$

[Chemical Formula 8]

Formula (6) 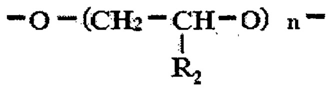 $R_2$ : H or $CH_3$, n: positive integer

[Chemical Formula 9]

Formula (7) 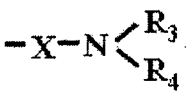

X : 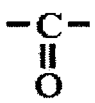 or $CH_2$

$R_3$、$R_4$: any one of H, $CH_3$, $C_2H_5$, $CH(CH_3)_2$, and $CH_2OH$

[Chemical Formula 10]

Formula (8) 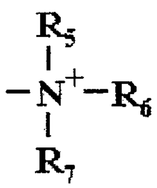 $R_5$、$R_6$、$R_7$: $CH_3$ or $C_2H_5$

[Chemical Formula 11]

Formula (9) 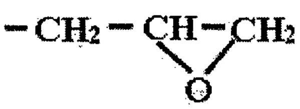

The acrylic-modified polyester resin is a resin in which an acrylic resin component and a polyester resin component are mixed and/or bonded with each other, and includes, for example, a graft type and a block copolymerization type. Regarding the mixing proportions and the copolymerization proportions of the acrylic resin component and the polyester resin component in the acrylic-modified polyester resin, whichever component may be higher. The acrylic-modified polyester resin can be produced, for example, by adding a radical initiator to both ends of a polyester and then performing polymerization of an acrylic monomer, adding a radical initiator to side chains of a polyester and then performing polymerization of an acrylic monomer, or attaching hydroxy groups to side chains of an acrylic resin and then reacting the resin with a polyester having an isocyanate group or a carboxyl group at an end thereof.

In the acrylic resin component constituting the acrylic-modified polyester resin, specifically, it is preferred that hydrophilic and radically polymerizable vinyl monomers are polymerized to the main chain of an acrylic resin composed of alkyl methacrylate and/or alkyl acrylate. By incorporating the hydrophilic and radically polymerizable vinyl monomer into the acrylic resin component, structures of formulae (5) to (9) can be provided to an acrylic-modified polyester.

The polyester resin component constituting the acrylic-modified polyester resin has an ester linkage in its main chain or a side chain, and is composed of a dicarboxylic acid component and a diol component. As the carboxylic acid component constituting the polyester resin, aromatic, aliphatic, and alicyclic dicarboxylic acids and polyvalent carboxylic acids having a valence number of 3 or more can be used. As an aromatic dicarboxylic acid, terephthalic acid, isophthalic acid, orthophthalic acid, phthalic acid, 2,5-dimethylterephthalic acid, 5-sodiumsulfoisophthalic acid, 1,4-naphthalene dicarboxylic acid, etc. and their ester-forming derivatives can be used.

The aliphatic urethane resin, which is not particularly limited as long as it has an aliphatic urethane structure, is preferably one obtained by polymerizing an aliphatic polyisocyanate compound with a polyol compound.

As the aliphatic polyisocyanate compound, one having a plurality of isocyanate groups in its molecule is preferred, and examples thereof include 1,6-hexane diisocyanate and isophorone diisocyanate. Especially, it is preferred to use an alicyclic polyisocyanate compound.

The polyol compound is not particularly limited as long as it has a plurality of hydroxy groups. Examples thereof include aromatic polyether polyols, aliphatic polyether polyols, and polyester polyols. Especially, it is preferred to use an aliphatic polyether polyol.

Particularly preferably, a specific structure of the aliphatic urethane resin is composed of an aliphatic polyisocyanate compound and an aliphatic polyether polyol, both described below. Examples of the aliphatic polyisocyanate compound include 1,6-hexane diisocyanate, isophorone diisocyanate, methylene bis(4-cyclohexylisocyanate), 2,2,4-trimethylhexamethylene diisocyanate, 1,4-hexamethylene diisocyanate, bis(2-isocyanatoethyl) fumarate, bis(4-isocyanatocyclohexyl)methane, dicyclohexylmethane 4,4-diisocyanate, lysine diisocyanate, hydrogenated xylylene diisocyanate, and hydrogenated phenylmethane diisocyanate.

Examples of the aliphatic polyether polyol include polyethylene glycol, polypropylene glycol, polytetramethylene glycol, 1,2-polybutylene glycol, and polyisobutylene glycol.

The aliphatic urethane resin is one obtained by dissolving or dispersing an aliphatic polyisocyanate compound, a polyol compound, and a chain extender as necessary in water, and these are polymerized by a publicly known method.

While the content of the aliphatic urethane resin in the resin composition that forms the resin layer (Z) is not particularly limited as long as general adhesion and wet heat adhesion to a polyvinyl alcohol layer with a high degree of saponification, which are effects exhibited by the aliphatic urethane resin, can be developed, it is preferably 6% by mass or more with respect to the resin composition that forms the resin layer (Z). The content is more preferably 20% by mass or more and 50% by mass or less.

Into the resin composition (Z), various additives, such as a melamine compound and/or a carbodiimide compound, a lubricant, inorganic particles, organic particles, a surfactant, and a surface treatment agent, may be incorporated in addition to the acrylic-modified polyester resin and the aliphatic urethane resin.

As the melamine compound, specifically, a compound prepared by a dehydration condensation reaction of a methylol melamine derivative, that is obtained by condensation of melamine and formaldehyde, with a lower alcohol such as methanol, ethanol or isopropanol to perform etherification is preferred. Examples of the methylolated melamine derivatives include monomethylolmelamine.

Although the compound having a carbodiimide group is not particularly limited as long as the compound is, for example, one having at least one carbodiimide structure represented by the following formula (10) per one molecule, a polycarbodiimide compound having two or more carbodiimide structures in one molecule is particularly preferred in terms of wet heat adhesion, etc. In particular, in the case of using a polymer type isocyanate compound having a plurality of carbodiimide groups at the end and in the side chain of the polymer such as a polyester resin or an acrylic resin, the compound can be preferably used. This is because when a resin layer of the present invention is provided on a polyester film to prepare a laminate film, not only hardness of the resin layer and oligomer deposition inhibiting properties but also adhesion to various types of inks, a hard coat agent or the like, wet heat adhesion, flexibility and toughness are enhanced.

Formula (10) -N=C=N-

A publicly known technique can be applied to the production of a carbodiimide compound.

EXAMPLES

The present invention is described below with reference to examples, but the invention is not limited by these examples. Various characteristics were measured by the following methods.

(1) Measurement of Thickness of Each Layer of Laminate Film

The thickness of a laminate film was the average of measurements measured randomly at ten points with a micrometer. According to an ultrathin section staining method, for example, an ultrathin section sample was cut from the cross-section of a laminate film, stained with $RuO_4$ or $OsO_4$ or double-stained with both of them, and observed at a magnification of 10000 to 1000000x and photographed with a transmission electron microscope (TEM). From the cross-sectional photograph, the thicknesses of the resin layer (X), and the A layer and the B layers of the polyester film were measured.

(2) Oligomer (Cyclic Trimer) Content

In OCP (orthochlorophenol) was dissolved 20 mg of a sample at 150°C for 30 minutes, and then the solution was cooled at room temperature. Then, following addition of 1,4-diphenylbenzene as an internal standard, 2 ml of methanol was added, followed by separation of a polymer with a high-speed centrifugal separator, and then the liquid layer was measured with the following liquid chromatography apparatus under the following conditions.

Apparatus: LC-10ADvp manufactured by Simadzu Corporation
Column: YMC-Pack ODS-2 150 mm × 4.6 mm
Column temperature: 40°C, flow rate: 1.3 ml/min, injection amount: 10 μm, detector: UV 240 nm.
Eluate: A liquid (pure water) : B liquid (methanol) = 25 : 75

In the case of measuring the oligomer (cyclic trimer) content of the polyester resin composition constituting the outermost polyester layer of a polyester film, the polyester composition constituting the outermost polyester layer of the polyester film is scraped and then measured.

In the case of measuring the oligomer (cyclic trimer) content of the polyester resin composition constituting the polyester layer excluding the outermost layer of a polyester film, the proportions of the thicknesses of the individual layers of the polyester film are determined by the method described in (1) above, then the oligomer (cyclic trimer) content in the whole polyester film is measured in the same manner as described above, and then the oligomer (cyclic trimer) content of the polyester resin composition constituting the polyester layer excluding the outermost layer is determined prorata in terms of weight.

When a solution in which a measurement sample is dissolved contains insoluble substances such as inorganic particles, mass measurement is carried out after filtering the solution, and correction is done by regarding a value obtained by subtracting the mass of the filtration residue from the mass of the measurement sample as a measurement sample mass.

(3) Contents of Alkaline Earth Metal Element, Phosphorus Element, and Germanium Element

The alkaline earth metal element content (M), the phosphorus element content (P), and the germanium element content in the polyester resin composition constituting a film were measured by fluorescent X-ray measurement using a fluorescent X-ray analyzer (model: 3270) manufactured by Rigaku Corporation. The measurement was carried out using a calibration curve of intensity vs. contents of elements produced using samples with known element contents previously determined by atomic absorption spectrometry or the like.

In the case of measuring the contents of an alkaline earth metal element, a phosphorus element, and a germanium element in the polyester resin compositions constituting the individual layers of a polyester film, samples are taken by scraping the polyester resin compositions from the individual layers of the polyester film and then measured.

(4) Intrinsic Viscosity (IV)

The value used was calculated from the solution viscosity measured at 25°C in orthochlorophenol in accordance with the following formula:

$$\eta sp/C = [\eta] + K[\eta]^2 \bullet C$$

wherein $\eta sp$ = (viscosity of the solution/viscosity of the solvent) - 1, C is the weight of a dissolved polymer per 100 m of the solvent (g/100 ml, usually 1.2), and K is Huggins' constant (0.343). The solution viscosity and the solvent viscosity were measured with an Ostwald viscometer.

In the case of measuring the intrinsic viscosity (IV) of the polyester resin constituting the outermost polyester layer of a polyester film, the polyester resin constituting the outermost polyester layer of the polyester film is scraped and then measured.

In the case of measuring the intrinsic viscosity of the polyester resin constituting the polyester layer excluding the outermost layer of a polyester film, the proportions of the thicknesses of the individual layers of the polyester film are determined by the method described in (1) above, then the intrinsic viscosity of the whole polyester film is measured in the same manner as described above, and then the intrinsic viscosity of the polyester resin constituting the polyester layer excluding the outermost layer is determined prorata in terms of weight.

When a solution in which a measurement sample is dissolved contains insoluble substances such as inorganic particles, weight measurement is carried out after filtering the solution, and correction is done by regarding a value obtained by subtracting the weight of the filtration residue from the weight of the measurement sample as a measurement sample weight.

(5) Measurement of Pencil Hardness of Resin Layer

Using a "HEIDON-14DR" (manufactured by Shinto Scientific Co., Ltd.), pencils with different hardnesses are arranged so that the pencils may be brought into contact with the surface of the resin layer side of a laminate film. Next, in accordance with JIS "Scratch hardness (Pencil method)" (K5600-5-4, the 2008 edition), the pencil is moved under conditions of a load of 750 g, a speed of 30 mm/minute, and a movement distance of 10 mm. Until a scar of 3 mm or more in length is generated on the surface of the resin layer side of the laminate film, experimental trials for measurement are performed while the hardness of the pencil is sequentially increased. The hardness of a pencil used in a trial immediately prior to the trial where the scar is generated on the surface of the resin layer side of the laminate film is defined as the pencil hardness of the resin layer. In the case where the resin layer has a pencil hardness of "F" or more, the laminate film is evaluated as a film being satisfactory.

(6) Scratch Test (Transporting Roll Scratch Model Evaluation)

A laminate film is fixed to a plane surface so that the resin layer surface of the laminate film may face upward. Next, a stainless steel rod (SUS304, 10 cm in length, 1 cm in diameter) is rubbed straight a distance of 10 cm at a rate of 10 cm/s on the surface of the resin layer under application of a constant load of 100 g without being rotated. A portion subjected to rubbing is observed with an optical microscope at a magnification of 100 to 500x and the number of scratches generated on the resin layer surface is counted. Measurement is repeated 5 times and the value obtained by rounding off the decimal point of the average of the measurements is evaluated as a test result as follows. In the case where there are 5 or less scratches of 20 μm or more in shorter side width, the case is evaluated as "S (good)."

S: There are 5 or less scratches of 20 μm or more in shorter side width on the resin layer surface
A: There are 6 to 10 scratches of 20 μm or more in shorter side width on the resin layer surface
B: There are 11 or more scratches of 20 μm or more in shorter side width on the resin layer surface

(7) Electrostatic Charge Casting Properties

A direct voltage of 4 kV was applied between an electrode and a rotary cooling body mounted above a melt-extruded film and the casting rate was increased slowly. A casting rate (m/min) at which uneven charge occurred was measured, and judgment was made according to the following criteria. Measurement was carried out 5 times and the average of the measurements was taken as a casting rate, and the second grade or higher was regarded as satisfactory.

A case where the casting rate at the occurrence of uneven charge was 30 m/min or more was defined as first grade, a case of 20 m/min or more and less than 30 m/min was defined as second grade, and a case of less than 20 m/min was defined as third grade.

(8) Amount of Oligomer (Cyclic Trimer) Deposition on Film Surface

Laminate film samples were fixed to metal frames and these were placed in hot air ovens "HIGH-TEMP-OVEN PHH-200" manufactured by ESPEC Corp., which were set at 150°C and 170°C (air quantity gauge "7") so that the samples were held to stand vertically on the floor in the ovens, and were heated for 0.5 hours and 2 hours, and then left at rest under air cooling for 1 hour. Next, each of the films taken out from the oven was stuck to a 50 mm × 50 mm face of an aluminum rectangular prism jig of 50 mm × 50 mm × 30 mm and was fixed with its edges folded along the jig. The jig was immersed with the film surface facing down in a dimethylformamide solvent for 3 minutes to a position at a depth of 5 mm. The oligomers deposited on the surface were extracted.

Next, regarding standard solutions, 11.2 mg of a cyclic oligomer (trimer purity 89%) of polyethylene terephthalate was taken into a 100-ml measuring flask, dissolved in 2 ml of a 1,1,1,3,3,3-hexafluoro-2-propanol/chloroform mixed solvent (= 1/1), and then diluted with chloroform to 100 ml, and the resultant was used as a stock standard solution (trimer concentration = 100 μg/ml). By diluting this solution sequentially with dimethylformamide, standard solutions with trimer concentrations of 10 μg/ml, 1 μg/ml, and 0.1 μg/ml were prepared.

The above-mentioned surface oligomer extraction solvent and the standard solutions were analyzed by high-performance liquid chromatography (HPLC) under the conditions specified below to measure the amounts of a cyclic trimer, and the measurements were defined as oligomer amounts at individual heating temperatures.

As judgment criteria for the amount of oligomer deposition on a film surface, the above-mentioned measurement was carried out for both surfaces of the film, and an oligomer amount less than 0.75 $mg/m^2$ was regarded as being satisfactory. (In the table, A surface is a surface which comes into contact with a surface of the rotary cooling body (also called a casting drum) during film production, and B surface is a surface opposite thereto.)

Apparatus: LC-10A manufactured by Shimadzu Corporation
Column: Inertsil ODS-3
Mobile phase: acetonitrile/water = 70/30
Flow rate: 1.5 ml/min
Detector: UV 242 nm
Injection amount: 10 μl.

(9) b Value of Film

In accordance with JIS-Z-8722-2000, the spectral transmittance of a film sample at an incident angle of 0 degrees was measured by use of a spectrophotometer "UV-2450PC" manufactured by Shimadzu Corporation (using an integrating sphere for a light receiver), tristimulus values X, Y, and Z were determined, and then the transmission b value was calculated with a light source C at a viewing angle of 2 degrees.

(10) Measurement of Film Haze and Total Light Transmittance

Three sheets (three pieces) of laminate film samples with a square shape being 5 cm on each side are prepared. Next, the samples are allowed to stand for 40 hours in a normal state (23°C and a relative humidity of 50%). Each of the samples is measured by a system according to JIS "Plastics-Determination of haze for transparent materials"(K7136, the 2000 edition) by using a turbidity meter "NDH5000" manufactured by Nippon Denshoku Industries Co. , Ltd. With regard to each item, values obtained from the three sheets (three pieces) are averaged to determine the total light transmittance value and the film haze value of a laminate film.

(11) Measurement of Haze Change (ΔH)

First, the haze is measured in the same manner as in (8) to determine the haze before treatment. Next, a laminate film sample with sides of 10 cm is fixed to a metal frame at its four sides. Next, the laminate film sample fixed to the metal frame is placed in a hot air oven "HIGH-TEMP-OVEN PHH-200" manufactured by ESPEC Corp. , which is set at 170°C (air quantity gauge "7") so that the sample is held to stand vertically on the floor in the oven, and is heated for 2 hours and then left at rest under air cooling for 1 hour. Then, the haze is measured in the same manner as in (6), and the difference from the haze before the heat treatment evaluation ((haze after heat treatment) - (haze before heat treatment)) is defined as the value of haze change (ΔH).

(12) Crystallinity

After a laminate film was embedded in a resin, a cross-section thereof was produced with a microtome. On the

basis of the thicknesses of individual layers determined from the film cross-section by the method of (1) by laser Raman spectrometry, measurement was carried out at three points for the polyester resin compositions constituting the individual layers of a polyester film. A Raman band near 1730 $cm^{-1}$ is assigned to a stretching vibration mode of C=O. Since this Raman band varies in band width with the crystallinity of PET, a value converted therefrom was defined as the crystallinity (%).

Laser Raman Spectrometry

- Instrument: T-64000 (manufactured by HORIBA Jobin Yvon)
- Conditions:

  Measurement mode: micro-Raman
  Object lens: x100
  Beam diameter: 1 μm
  Cross slit: 300 μm
  Light source: Ar+ laser/514.5 nm
  Laser power: 30 mW
  Diffraction grating: Single1800 gr/mm
  Slit: 100 μm
  Detector: CCD/Jobin Yvon 1024×256.

(13) Heat Shrinkage Ratio

Two lines were drawn on a surface of a laminate film to have a width of 10 mm and a measurement length of about 100 mm. The distance between the two lines was measured at 23°C, and this was denoted by L0. This laminate film sample was left at rest in a hot air oven "HIGH-TEMP-OVEN PHH-200" manufactured by ESPEC Corp. set at 150°C (air quantity gauge "7") for 30 minutes under a load of 3 g, and the distance between the two lines was measured again at 23°C and was taken as L1. The heat shrinkage ratio was calculated from the following formula. The measurement was performed for five samples in each of the longitudinal direction and the width direction, and evaluation was carried out on the basis of the average.

$$\text{Heat shrinkage ratio (\%)} = (L0 - L1)/L0 \times 100$$

When the longitudinal direction and the width direction of a film are not known in analyzing the film, a direction having the maximum refractive index is regarded as the width direction, and a direction perpendicular to the width direction is regarded as the longitudinal direction. The direction of maximum refractive index in the film may be determined by measuring the refractive indices in all directions of the film with an Abbe refractometer, for example, it may be determined by determining a slow axis direction by means of a phase difference measuring apparatus (a birefringence measuring apparatus) or the like. (14) Confirmation of Structures of Formulae (1) to (3) in Resin Layer (X)

A method for confirming the structures of formulae (1) to (3) in the resin layer (X) is not particularly limited to a specific method, and the method can be exemplified by the following method. For example, the presence or absence of mass peaks derived from the structures of formulae (1) to (3) is confirmed by gas chromatography-mass spectrometry (GC-MS). Next, the presence or absence of a peak derived from a bond between atoms of the structures of formulae (1) to (3) is confirmed by Fourier transform infrared spectroscopy (FT-IR). Furthermore, the positions of chemical shifts derived from the positions of hydrogen atoms and the proton-absorption line area derived from the number of hydrogen atoms of the structures of formulae (1) to (3) are confirmed by proton-nuclear magnetic resonance spectroscopy ($^1$H-NMR). A method of summarizing these results and comprehensively confirming the structures is preferred.

(15) Measurement of Glass Transition Temperature (Tg) of Resin (α)

First, a 5-mg portion of a laminate film is weighed. Next, the measurement for the laminate film weighed is performed with a temperature modulated differential scanning calorimeter (TMDSC) Q1000 (available from TA Instruments Japan Inc.). With the temperature modulated differential scanning calorimeter, all DSC signals (the whole heat flow) can be divided into a reversible heat component attributed to the exothermic and endothermic phenomena such

as the glass transition and an irreversible heat component attributed to the enthalpy relaxation, hardening reaction, solvent removal or the like. From the all differential scanning calorie signals obtained in the measurement, a signal derived from the glass transition point of a resin (α) as a reversible component is extracted to be defined as the glass transition point of the resin (α). In this context, by measuring the glass transition point of a polyester forming a polyester film which is a substrate film of the laminate film in advance, it is possible to distinguish between glass transition points of the polyester forming a polyester film and the resin (α).

(Method for Producing Polyester Resin Composition A)

A slurry of 45 parts by weight of ethylene glycol with respect to 100 parts by weight of high-purity terephthalic acid was fed sequentially over 4 hours to an esterification reaction vessel into which about 123 parts by weight of bis (hydroxyethyl) terephthalate had been placed and which was held at a temperature of 250°C and a pressure of $1.2 \times 10^5$ Pa. After completion of the feeding, an esterification reaction was carried out over 1 hour and the esterification reaction product was transferred to a polycondensation reaction vessel. Subsequently, to the polycondensation reaction vessel to which the esterification reaction product had been transferred, ethyl diethylphosphonoacetate was added so that the content thereof in a polyester after polymerization might be the content shown in Table 1, further magnesium acetate tetrahydrate was added so that the content thereof in the polyester after polymerization might be the content shown in Table 1, and furthermore, antimony trioxide was added as a polymerization catalyst up to 400 ppm in terms of antimony atoms relative to a polyester to be obtained. Then, while a lower polymer was stirred at 30 rpm, the reaction system was heated from 250°C to 285°C over 60 minutes and the pressure was reduced to 40 Pa. The time until arrival at the final pressure was set to 60 minutes. When a prescribed stirring torque was attained, the reaction system was purged with nitrogen and was returned to normal pressure, thereby stopping the polycondensation reaction. A strand was then discharged into cold water at 20°C and immediately cut, obtaining pellets of a polyester resin composition A. The time taken from the start of pressure reduction to the arrival at the prescribed stirring torque was 3 hours.

(Method for Producing Polyester Resin Composition B)

A slurry of 60 parts by weight of ethylene glycol with respect to 100 parts by weight of dimethyl terephthalate was fed sequentially over 4 hours together with 0.06 parts by weight of magnesium acetate tetrahydrate to an esterification reaction vessel into which about 123 parts by weight of bis (hydroxyethyl) terephthalate had been placed and which was held at a temperature of 250°C and a pressure of $1.2 \times 10^5$ Pa. After completion of the feeding, an esterification reaction was further carried out over 1 hour and the esterification reaction product was transferred to a polycondensation reaction vessel. Subsequently, to the polycondensation reaction vessel to which the esterification reaction product had been transferred, 0.026 parts by weight of trimethyl phosphate was added, further germanium dioxide finely dispersed and dissolved in ethylene glycol was added as a polymerization catalyst so that the content thereof in a polyester after polymerization might be the content shown in Table 1, and a solution dissolved in tetraethylammonium hydroxide was added. Then, while a lower polymer was stirred at 30 rpm, the reaction system was heated from 250°C to 280°C over 60 minutes and the pressure was reduced to 40 Pa. The time until arrival at the final pressure was set to 60 minutes. When a prescribed stirring torque was attained, the reaction system was purged with nitrogen and was returned to normal temperature, thereby stopping the polycondensation reaction. A strand was then discharged into cold water at 20°C and immediately cut, obtaining polyester pellets. The time taken from the start of pressure reduction to the arrival at the prescribed stirring torque was 3 hours. This polymer was dried at 150°C. under reduced pressure and subsequently was subjected to solid phase polymerization under reduced pressure (133 Pa or lower) at a temperature of 240°C for 8 hours, and then, the polymer was taken out. This was stirred and kept in contact with hot water at 100°C for 2 hours, followed by draining water. The resultant was transferred to a rotary vacuum drier and was dried at a temperature of 150°C for 5 hours under reduced pressure, obtaining pellets of a polyester resin composition B.

(Method for Producing Wet Heat Resistant Polyester Resin Composition C)

After melting 100 parts by mass of dimethyl terephthalate, 57.5 parts by mass of ethylene glycol, 0.06 parts by mass of manganese acetate, and 0.03 parts by mass of antimony trioxide at 150°C under a nitrogen atmosphere, the temperature was raised to 230°C over 3 hours under stirring to evaporate methanol, and then a transesterification reaction was completed. After completion of the transesterification reaction, an ethylene glycol solution (pH = 5) obtained by dissolving phosphoric acid and sodium dihydrogenphosphate dihydrate ethylene glycol was added so that the content in a polyester after polymerization might be 1.39 mol/ton for phosphoric acid and 1.7 mol/ton for sodium dihydrogenphosphate dihydrate. Subsequently, a polymerization reaction was carried out at an ultimate temperature of 285°C and a degree of vacuum of 0.1 Torr, obtaining pellets of a polyester having an intrinsic viscosity of 0.53 and a number of terminal carboxyl groups of 12 Eq/t. The polyester pellets were dried and crystallized at 160°C for 6 hours and were

subjected to solid phase polymerization at a temperature of 220°C and a degree of vacuum of 0.3 Torr for 8 hours, obtaining pellets of a polyester resin composition C having an intrinsic viscosity of 0.80 and a number of terminal carboxyl groups of 10 Eq/t.

(Method for Producing Resin (I) and Melamine Compound (II) for Resin Layer (X))

a. Resin (I) Having Hydroxy Group and Acryloyl Group

Into a stainless steel reactor, methyl methacrylate (a), hydroxyethyl methacrylate (b), and a urethane acrylate oligomer (available from Negami Chemical Industrial Co., Ltd. , ART RESIN (registered trademark) UN-3320HA, the number of acryloyl groups is 6) (c) were placed at the mass ratio shown in the table, and 2 parts by mass of sodium dodecylbenzenesulfonate with respect to 100 parts by mass of the total of (a) to (c) was added as an emulsifier and stirred to prepare a liquid mixture 1. Next, a reaction apparatus equipped with a stirrer, a reflux condenser, a thermometer and a dropping funnel was prepared. Into the reaction apparatus, 60 parts by mass of the liquid mixture 1, 200 parts by mass of isopropanol, and 5 parts by mass of potassium persulfate as a polymerization initiator were placed and heated to 60°C to prepare a liquid mixture 2. The liquid mixture 2 was allowed to remain in the heated state at 60°C for 20 minutes. Next, a liquid mixture 3 composed of 40 parts by mass of the liquid mixture 1, 50 parts by mass of isopropanol, and 5 parts by mass of potassium persulfate was prepared. Subsequently, using the dropping funnel, the liquid mixture 3 was added dropwise to the liquid mixture 2 over a period of 2 hours to prepare a liquid mixture 4. Then, the liquid mixture 4 was allowed to remain in the heated state at 60°C for 2 hours. The resultant liquid mixture 4 was cooled to 50°C or lower, and then transferred to a vessel equipped with a stirrer and a pressure reducing apparatus. To this, 60 parts by mass of aqueous ammonia with a concentration of 25% by mass and 900 parts by mass of pure water were added, and isopropanol and unreacted monomers were recovered under reduced pressure while being heated to 60°C to obtain a resin (I) dispersed in pure water.

b. Melamine Compound (II) Having Methylol Group

Methylolated melamine (available from SANWA CHEMICAL CO., LTD., NIKALAC (registered trademark) MX-035) was used.

c. Resin Composition, and Coating Liquid Containing Resin Composition

The resin (I) and the melamine compound (II) were mixed so that they might have a mass ratio of (I)/(II) = 100/50. To this, in order to impart the laminate film surface with easy slipping properties, 2 parts by mass of silica particles with a number average particle diameter of 300 nm (SEAHOSTAR (registered trademark) KE-W30 available from NIPPON SHOKUBAI CO., LTD.) as inorganic particles were added with respect to 100 parts by mass of the resin (I). Furthermore, in order to enhance the coating properties of the resin composition to the surface of a polyester film, a fluorine-based surfactant (PLAS COAT (registered trademark) RY-2 available from GOO Chemical Co., Ltd.) was added to the resin composition so that the content thereof in a coating liquid containing the resin composition became 0.06 parts by mass.

(Method for Producing Coating Liquid for Resin Layer (Y))

An aqueous dispersion liquid (so-called emulsion coating liquid having an emulsion particle diameter of 50 nm) obtained by dispersing an acrylic resin (glass transition temperature: 42°C, refractive index: 1.52) composed of the copolymerization composition specified below in water in a particulate form was used.
Copolymerization components
Methyl methacrylate (d) 63 wt%
Ethyl acrylate (e) 35 wt%
Acrylic acid (f) 1 wt%
N-methylolacrylamide (g) 1 wt%

(Method for Producing Coating Liquid for Resin Layer (Z))

An acrylic-modified polyester resin (h) and a coating liquid containing the resin were produced as follows.
Regarding a polyester resin component, 50 parts by mass of terephthalic acid, 50 parts by mass of isophthalic

acid, 50 parts by mass of ethylene glycol, and 30 parts by mass of neopentyl glycol were placed into a nitrogen-purged reactor together with 0.3 parts by mass of antimony trioxide and 0.3 parts by mass of zinc acetate, both polymerization catalysts, and a polymerization reaction was performed under normal pressure at 190 to 220°C for 12 hours while removing water, thereby obtaining polyester glycol. Next, to the resultant polyester glycol, 5 parts by mass of 5-sodiumsulfoisophthalic acid, and xylene as a solvent were placed into a reactor and they were polymerized for 3 hours under a reduced pressure of 0.2 mmHg at 260°C while evaporating xylene, obtaining a polyester resin component. This polyester resin component was dissolved in ammonia water and water containing butyl cellulose. Next, regarding an acrylic resin component, 50 parts by mass in total of 40 parts by mass of methyl methacrylate and 10 parts by mass of methacrylamide were added to an aqueous dispersion containing the above-mentioned polyester resin component so that a mass ratio of acrylic resin component/polyester resin component = 50/50 might be attained. Moreover, 5 parts by mass of benzoyl peroxide was added as a polymerization initiator, and a polymerization reaction was performed at 70 to 80°C for 3 hours in a nitrogen-purged reactor, thereby obtaining a coating liquid containing an acrylic-modified polyester.

An aliphatic urethane resin (i) and a coating liquid containing the resin were produced as follows.

Into a four-necked flask equipped with a reflux condenser, a nitrogen introduction tube, a thermometer and a stirrer, 70 parts by mass of 1,6-hexane diisocyanate as an aliphatic polyisocyanate compound, 30 parts by mass of polyisobutylene glycol as a polyol compound, and 60 parts by mass of acetonitrile and 30 parts by mass of N-methylpyrrolidone as a solvent were placed. Next, under a nitrogen atmosphere, the reaction liquid temperature was adjusted to 75 to 78°C and 0.06 parts by mass of stannous octylate as a reaction catalyst was added, and then a reaction was performed for 7 hours. Subsequently, this was cooled to 30°C, thereby obtaining an isocyanate group-terminated aliphatic urethane resin. Next, water was added to a reaction vessel equipped with a homodisper capable of high speed stirring, and adjusted to 25°C. The isocyanate group-terminated aliphatic urethane resin was added and dispersed in water while stirring and mixing the mixture at 2000 rpm. Then, acetonitrile and water were partially removed under reduced pressure, thereby preparing a coating liquid containing an aliphatic urethane resin.

A coating liquid containing the resultant acrylic-modified polyester resin and a coating liquid containing the resultant aliphatic urethane resin were mixed so that the amount of the acrylic-modified polyester resin might be 60 parts by mass and the amount of the aliphatic urethane resin might be 40 parts by mass.

(Example 1)

The polyester resin composition A and the polyester resin composition B were each dried under reduced pressure (1 Torr) at 150°C for 6 hours, then were fed to two extruders as a raw material for an A layer and as a raw material for a B layer, respectively, and were each melted at 285°C. After lamination thereof within a feed block to form B layer/A layer/B layer, the laminate was extruded into a sheet shape through a spinneret and was wound around a casting drum cooled to 20°C to cool and solidify by an electrostatic charge casting method, thereby obtaining an unstretched film.

The resultant unstretched film was heated to 95°C with heated rolls and an infrared heater and stretched 3.3 times in the longitudinal direction, thereby obtaining a uniaxially oriented polyester film.

Subsequently, the film was stretched 3.6 times in the width direction at 110°C, followed by a heat treatment at 230°C. During the heat treatment step, a relaxation treatment of 5.5% in the width direction was applied. Thereby, a biaxially oriented laminate polyester film of the present invention, the overall thickness of which was 100 $\mu$m, was obtained. The lamination thickness ratio of the A layer to the B layers was B layer/A layer/B layer = 15 $\mu$m/70 $\mu$m/15 $\mu$m. The characteristics and evaluation results of the thus-obtained film are as shown in tables, and the film was satisfactory in electrostatic charge casting properties, the amount of oligomer deposition on a film surface, and transparency.

(Example 2)

A biaxially oriented laminate polyester film of the present invention was obtained in the same manner as in Example 1 except that the content (M) of an alkaline earth metal element and the content (P) of a phosphorus element with respect to the total amount of the polyester resin composition constituting the A layer were adjusted as shown in Table 1. As shown in Table 2, although the electrostatic charge casting properties were inferior to those of Example 1, the film was satisfactory in the electrostatic charge casting properties and was also satisfactory in the amount of oligomer deposition on a film surface and transparency.

(Example 3)

A biaxially oriented laminate polyester film of the present invention was obtained in the same manner as in Example 1 except that M/P was adjusted as shown in Table 1 by reducing the content (P) of a phosphorus element with respect to the total amount of the polyester resin composition constituting the A layer. As shown in Table 2, although

the transparency and the b value were inferior to those of Example 1, the film was satisfactory in the transparency and the b value and was also satisfactory in electrostatic charge casting properties and the amount of oligomer deposition on a film surface.

(Example 4)

A biaxially oriented laminate polyester film of the present invention was obtained in the same manner as in Example 1 except that the oligomer content of the polyester resin composition constituting the A layer was adjusted as shown in Table 1. As shown in Table 2, although the amount of oligomer deposition on a film surface was inferior to that of Example 1, the film was satisfactory in the amount of oligomer deposition on a film surface and was also satisfactory in electrostatic charge casting properties and transparency.

(Example 5)

A biaxially oriented laminate polyester film of the present invention was obtained in the same manner as in Example 1 except that the overall thickness of the film and the thickness of each of the B layers were adjusted as shown in Table 1. As shown in Table 2, although the amount of oligomer deposition on a film surface was inferior to that of Example 1, the film was satisfactory in the amount of oligomer deposition on a film surface and was also satisfactory in electrostatic charge casting properties and transparency.

(Example 6)

A biaxially oriented laminate polyester film of the present invention was obtained in the same manner as in Example 1 except that the overall thickness of the film and the thickness of each of the B layers were adjusted as shown in Table 1. As shown in Table 2, although the electrostatic charge casting properties, the transparency, and the b value were inferior to those of Example 1, the film was satisfactory in the electrostatic charge casting properties, the transparency, and the b value and was also satisfactory in the amount of oligomer deposition on a film surface.

(Example 7)

A biaxially oriented laminate polyester film of the present invention was obtained in the same manner as in Example 1 except that the oligomer content of the polyester resin composition constituting the B layers was adjusted as shown in Table 1. As shown in Table 2, although the amount of oligomer deposition on a film surface was inferior to that of Example 1, the film was satisfactory in the amount of oligomer deposition on a film surface and was also satisfactory in electrostatic charge casting properties and transparency.

(Example 8)

A biaxially oriented laminate polyester film of the present invention was obtained in the same manner as in Example 1 except that the oligomer content of the polyester resin composition constituting the B layers and the intrinsic viscosity of the polyester resin composition constituting the B layers were adjusted as shown in Table 1. As shown in Table 2, although the amount of oligomer deposition on a film surface was inferior to that of Example 1, the film was satisfactory in the amount of oligomer deposition on a film surface and was also satisfactory in electrostatic charge casting properties and transparency.

(Example 9)

A biaxially oriented laminate polyester film of the present invention was obtained in the same manner as in Example 1 except that the kind of the alkaline earth metal element contained in the polyester resin composition constituting the A layer was changed as shown in Table 1. As shown in Table 2, although the electrostatic charge casting properties, the transparency, and the b value were inferior to those of Example 1, the film was satisfactory in the electrostatic charge casting properties, the transparency, and the b value and was also satisfactory in the amount of oligomer deposition on a film surface.

(Examples 10 and 11)

A biaxially oriented laminate polyester film of the present invention was obtained in the same manner as in Example 1 except that the content (M) of an alkaline earth metal element and the content (P) of a phosphorus element

with respect to the total amount of the polyester resin composition constituting the A layer, M/P, and the oligomer content of the polyester resin composition constituting the A layer were each adjusted as shown in Table 1. As shown in Table 2, the color tone b value was slightly high and the color was yellowish.

(Example 12)

A biaxially oriented laminate polyester film of the present invention was obtained in the same manner as in Example 1 except that the content (P) of a phosphorus element with respect to the total amount of the polyester resin composition constituting the A layer and M/P were adjusted as shown in Table 1. As shown in Table 2, the film was superior in oligomer deposition inhibiting properties, but it was inferior in electrostatic charge casting properties.

(Example 13)

A biaxially oriented laminate polyester film of the present invention was obtained in the same manner as in Example 1 except that, for the polyester resin composition constituting the A layer, magnesium acetate tetrahydrate was replaced by germanium dioxide so that the content thereof with respect to the total amount of the polyester resin composition constituting the A layer might be 10.0 mol/ton. As shown in Table 2, the film was superior in oligomer deposition inhibiting properties, but it was inferior in electrostatic charge casting properties.

(Examples 14 and 15)

A biaxially oriented laminate polyester film of the present invention was obtained in the same manner as in Example 1 except that the film thickness and the lamination thickness were each adjusted as shown in Table 1. As shown in Table 2, Example 14 was a little inferior in the amount of oligomer deposition on a film surface to Example 1, and Example 15 was a little inferior in electrostatic charge casting properties.

(Example 16)

A biaxially oriented laminate polyester film of the present invention was obtained in the same manner as in Example 1 except that, for the polyester resin composition constituting the A layer, germanium dioxide was replaced by antimony trioxide so that the content thereof with respect to the total amount of the polyester resin composition constituting the A layer might be 400 ppm. As shown in Table 2, the amount of oligomer deposition on a film surface was a little inferior to that of Example 1.

(Comparative Examples 1 and 2)

A biaxially oriented laminate polyester film of the present invention was obtained in the same manner as in Example 1 except that the polyester resin composition constituting the A layer was as shown in Table 1. The film of Comparative Example 1 was high in load to an extruder and was difficult to increase its production amount, and therefore it was poor in productivity. Moreover, as shown in Table 2, the transparency and the b value were poor. The film of Comparative Example 2 was inferior in the amount of oligomer deposition on a film surface.

(Comparative Example 3)

A biaxially oriented laminate polyester film of the present invention was obtained in the same manner as in Example 1 except that the polyester resin composition constituting the B layers was as shown in Table 1. As shown in Table 2, the film was inferior in the amount of oligomer deposition on a film surface.

(Comparative Example 4)

A biaxially oriented laminate polyester film of the present invention was obtained in the same manner as in Example 1 except that the configuration of the laminate film in Example 1 was changed into a two-layer configuration of B layer/A layer. As shown in Table 2, the film was inferior in the amount of oligomer deposition on a film surface.

(Example 17)

A biaxially oriented laminate polyester film of the present invention was obtained in the same manner as in Example 1 except that the polyester resin composition constituting the A layer was changed so as to contain the resin

composition A and the resin composition C in a compounding mass ratio of 70/30. As shown in Table 2, the electrostatic charge casting properties, the amount of oligomer deposition on a film surface, and the transparency were satisfactory.

(Example 18)

A biaxially oriented laminate polyester film of the present invention was obtained in the same manner as in Example 1 except that the polyester resin composition constituting the A layer was changed so as to contain the resin composition A and the resin composition C in a compounding mass ratio of 60/40 as shown in Table 1. As shown in Table 2, although the electrostatic charge casting properties were a little inferior, the amount of oligomer deposition on a film surface and the transparency were satisfactory.

[Table 1]

| | Polyester layer A (A layer) | | | | | | | | | Polyester layer B (B layer) | | | |
|---|---|---|---|---|---|---|---|---|---|---|---|---|---|
| | Characteristics of polyester resin composition constituting A layer | | | | | | | | | Characteristics of polyester resin composition constituting B layer | | | |
| | Compounding ratio | | M content mol/ton | P content mol/ton | M/P - | M, type of element | Oligomer content % by weight | Intrinsic viscosity (IV) dl/g | Crystallinity (%) | Germanium element concent mol/ton | Oligomer content % by weight by weight | Intrinsic viscosity (IV) dl/g | Crystallinity (%) |
| | Resin A | Resin C | | | | | | | | | | | |
| Example 1 | 100 | 0 | 10.0 | 4.0 | 2.5 | Mg | 1.10 | 0.63 | 51 | 0.4 | 0.42 | 0.76 | 48 |
| Example 2 | 100 | 0 | 1.0 | 0.4 | 2.5 | Mg | 1.08 | 0.63 | 51 | 0.4 | 0.42 | 0.76 | 48 |
| Example 3 | 100 | 0 | 10.0 | 2.5 | 4.0 | Mg | 1.11 | 0.63 | 51 | 0.4 | 0.42 | 0.76 | 48 |
| Example 4 | 100 | 0 | 10.0 | 4.0 | 2.5 | Mg | 1.48 | 0.63 | 50 | 0.4 | 0.42 | 0.76 | 48 |
| Example 5 | 100 | 0 | 10.0 | 4.0 | 2.5 | Mg | 1.10 | 0.63 | 51 | 0.4 | 0.42 | 0.76 | 48 |
| Example 6 | 100 | 0 | 10.0 | 4.0 | 2.5 | Mg | 1.10 | 0.63 | 51 | 0.4 | 0.42 | 0.76 | 48 |
| Example 7 | 100 | 0 | 10.0 | 4.0 | 2.5 | Mg | 1.10 | 0.63 | 51 | 0.4 | 0.49 | 0.76 | 48 |
| Example 8 | 100 | 0 | 10.0 | 4.0 | 2.5 | Mg | 1.10 | 0.63 | 51 | 0.4 | 0.47 | 0.70 | 50 |
| Example 9 | 100 | 0 | 10.0 | 4.0 | 2.5 | Ca | 1.10 | 0.63 | 51 | 0.4 | 0.42 | 0.76 | 48 |
| Example 10 | 100 | 0 | 30.0 | 12.0 | 2.5 | Mg | 1.17 | 0.63 | 51 | 0.4 | 0.42 | 0.76 | 48 |
| Example 11 | 100 | 0 | 10.0 | 1.0 | 10.0 | Mg | 1.15 | 0.63 | 51 | 0.4 | 0.42 | 0.76 | 48 |
| Example 12 | 100 | 0 | 10.0 | 14.3 | 0.7 | Mg | 1.10 | 0.63 | 51 | 0.4 | 0.42 | 0.76 | 48 |
| Example 13 | 100 | 0 | - | 4.0 | - | (Ge) | 1.00 | 0.64 | 51 | 0.4 | 0.42 | 0.76 | 48 |
| Example 14 | 100 | 0 | 10.0 | 4.0 | 2.5 | Mg | 1.10 | 0.63 | 51 | 0.4 | 0.42 | 0.76 | 48 |
| Example 15 | 100 | 0 | 10.0 | 4.0 | 2.5 | Mg | 1.10 | 0.63 | 51 | 0.4 | 0.42 | 0.76 | 48 |
| Example 16 | 100 | 0 | 10.0 | 4.0 | 2.5 | Mg | 1.10 | 0.63 | 51 | Not detected | 0.40 | 0.78 | 48 |
| Example 17 | 70 | 30 | 7.0 | 3.0 | 2.3 | Mg/ (Mn) | 0.89 | 0.68 | 50 | 0.4 | 0.42 | 0.76 | 48 |
| Example 18 | 60 | 40 | 5.0 | 2.7 | 1.9 | Mg/(Mn) | 0.82 | 0.70 | 50 | 0.4 | 0.42 | 0.76 | 48 |
| Comparative Example 1 | 100 | 0 | 10.0 | 4.0 | 2.5 | Mg | 0.39 | 0.79 | 46 | 0.4 | 0.42 | 0.76 | 48 |

(continued)

| | Polyester layer A (A layer) | | | | | | | | | Polyester layer B (B layer) | | | |
|---|---|---|---|---|---|---|---|---|---|---|---|---|---|
| | Characteristics of polyester resin composition constituting A layer | | | | | | | | | Characteristics of polyester resin composition constituting B layer | | | |
| | Compounding ratio | | M content mol/ton | P content mol/ton | M/P - | M, type of element | Oligomer content % by weight | Intrinsic viscosity (IV) dl/g | Crystallinity (%) | Germanium element concent mol/ton | Oligomer content % by weight by weight | Intrinsic viscosity (IV) dl/g | Crystallinity (%) |
| | Resin A | Resin C | | | | | | | | | | | |
| Comparative Example 2 | 100 | 0 | 10.0 | 4.0 | 2.5 | Mg | 1.53 | 0.62 | 51 | 0.4 | 0.42 | 0.76 | 48 |
| Comparative Example 3 | 100 | 0 | 10.0 | 4.0 | 2.5 | Mg | 1.10 | 0.63 | 51 | 0.4 | 0.60 | 0.76 | 48 |
| Comparative Example 4 | 100 | 0 | 10.0 | 4.0 | 2.5 | Mg | 1.10 | 0.63 | 51 | 0.4 | 0.42 | 0.76 | 48 |

[Table 2]

| | Laminate film | | | Evaluation of laminate film | | | | |
|---|---|---|---|---|---|---|---|---|
| | Overall film thickness | Laminate structure | Thickness of each layer | Electrostatic charge casting property | Amount of oligomer deposition A surface | Amount of oligomer deposition B surface | Film haze | b value |
| | μm | Outer/inner/outer A surfade side/B surface side* | μm | (Casting rate) - | 150°C × 0.5 hr mg/m$^2$ | 150°C × 0.5 hr mg/m$^2$ | % | - |
| Example 1 | 100 | B layer/A layer/B layer | 15/70/15 | First grade | 0.50 | 0.45 | 0.6 | 0.8 |
| Example 2 | 100 | B layer/A layer/B layer | 15/70/15 | Second grade | 0.48 | 0.58 | 0.6 | 0.5 |
| Example 3 | 100 | B layer/A layer/B layer | 15/70/15 | First grade | 0.63 | 0.53 | 1.1 | 1.4 |
| Example 4 | 100 | B layer/A layer/B layer | 15/70/15 | First grade | 0.65 | 0.73 | 0.8 | 0.7 |
| Example 5 | 50 | B layer/A layer/B layer | 5/40/5 | First grade | 0.71 | 0.68 | 0.6 | 1.0 |
| Example 6 | 188 | B layer/A layer/B layer | 50/88/50 | Second grade | 0.57 | 0.46 | 1.1 | 1.4 |
| Example 7 | 100 | B layer/A layer/B layer | 15/70/15 | First grade | 0.68 | 0.71 | 0.6 | 0.8 |
| Example 8 | 100 | B layer/A layer/B layer | 15/70/15 | First grade | 0.49 | 0.66 | 0.6 | 0.7 |
| Example 9 | 100 | B layer/A layer/B layer | 15/70/15 | Second grade | 0.53 | 0.48 | 0.9 | 1.3 |
| Example 10 | 100 | B layer/A layer/B layer | 15/70/15 | First grade | 0.51 | 0.56 | 1.8 | 1.8 |
| Example 11 | 100 | B layer/A layer/B layer | 15/70/15 | First grade | 0.63 | 0.58 | 2.1 | 2.3 |
| Example 12 | 100 | B layer/A layer/B layer | 15/70/15 | Third grade | 0.56 | 0.41 | 0.6 | 0.6 |
| Example 13 | 100 | B layer/A layer/B layer | 15/70/15 | Third grade | 0.48 | 0.43 | 0.5 | 0.2 |
| Example 14 | 100 | B layer/A layer/B layer | 3/94/3 | First grade | 1. 18 | 1.19 | 0.4 | 1.2 |
| Example 15 | 188 | B layer/A layer/B layer | 70/48/70 | Second grade | 0.46 | 0.59 | 1.8 | 2.3 |
| Example 16 | 100 | B layer/A layer/B layer | 15/70/15 | First grade | 1.18 | 1.19 | 0.8 | 1.5 |
| Example 17 | 100 | B layer/A layer/B layer | 15/70/15 | First grade | 0.60 | 0.57 | 0.6 | 0.5 |
| Example 18 | 100 | B layer/A layer/B layer | 15/70/15 | Second grade | 0.55 | 0.61 | 0.5 | 0.3 |
| Comparative Example 1 | 100 | B layer/A layer/B layer | 15/70/15 | First grade | 0.66 | 0.61 | 1.5 | 2.6 |
| Comparative Example 2 | 100 | B layer/A layer/B layer | 15/70/15 | First grade | 1.25 | 1.31 | 0.8 | 1.0 |

(continued)

| | Laminate film | | | Evaluation of laminate film | | | | |
|---|---|---|---|---|---|---|---|---|
| | Overall film thickness | Laminate structure | Thickness of each layer | Electrostatic charge casting property | Amount of oligomer deposition A surface | Amount of oligomer deposition B surface | Film haze | b value |
| | μm | Outer/inner/outer A surfade side/B surface side* | μm | (Casting rate) - | 150°C × 0.5 hr mg/m$^2$ | 150°C × 0.5 hr mg/m$^2$ | % | - |
| Comparative Example 3 | 100 | B layer/A layer/B layer | 15/70/15 | First grade | 1. 28 | 1.37 | 0.8 | 0.8 |
| Comparative Example 4 | 100 | B layer/A layer (two layers) | 15/85 | First grade | 0.55 | 5.88 | 0.9 | 0.9 |

* The A surface refers to a surface that comes into contact with the surface of a rotary cooling body (also called casting drum) during film production, and the B surface is a surface opposite thereto.

(Example 19)

On one side of the film of Example 1 uniaxially stretched in the longitudinal direction, a coating liquid containing the resin composition for the resin layer (X) was applied to achieve a coating thickness of about 4 $\mu$m by use of bar coating. Subsequently, the uniaxially stretched film to which the resin composition was applied was grasped with clips at both end parts thereof in the width direction and introduced into a preheating zone. The atmospheric temperature of the preheating zone was set at 90°C to 100°C, and the solvent of the coating liquid containing the resin composition was dried. Subsequently, the film was sequentially stretched by 3.5 times in the width direction in a stretching zone at 110°C, and subsequently, the film was subjected to a heat treatment in a heat treatment zone at 235°C and a relaxation treatment of 4.8% in the width direction to form a resin ($\alpha$), thereby obtaining a laminate film in which the crystal orientation of the polyester film had been completed. In the resultant laminate film, the thickness of the PET film was 100 $\mu$m and the thickness of the resin layer was 85 nm.

With regard to the resin forming the resin layer of the laminate film, the presence of mass peaks derived from the structures of formulae (1) to (3) was confirmed by gas chromatography-mass spectrometry (GC-MS). Next, the presence of a peak derived from a bond between each atoms of the structures of formulae (1) to (3) was confirmed by Fourier transform infrared spectroscopy (FT-IR). Finally, by proton-nuclear magnetic resonance spectroscopy ($^1$H-NMR), the number of hydrogen atoms was confirmed from the positions of chemical shifts derived from the positions of hydrogen atoms and the proton-absorption line area of the structures of formulae (1) to (3). By summarizing these results, it was confirmed that the resin layer has therein the structures of formulae (1) to (3).

The characteristics and particulars of the resultant laminate film are shown in Tables 3-1, 3-2, and 4-1.

(Examples 20 and 21)

A laminate film was obtained in the same manner as in Example 19 except that the coating thickness of the resin composition by bar coating was adjusted and the resin layer thickness was changed to the thickness shown in Table 4-1. The characteristics and particulars of the resultant laminate films are shown in Tables 3-1, 3-2, and 4-1.

(Examples 22 and 23)

A laminate film was obtained in the same manner as in Example 20 except that the mass ratio of the resin (I) was changed to the mass ratio shown in Table 3-1. The characteristics and particulars of the resultant laminate films are shown in Tables 3-1, 3-2, and 4-1.

(Examples 24 and 25)

A laminate film was obtained in the same manner as in Example 20 except that the mass ratios of the resin (I) and the melamine compound (II) were changed to the mass ratios shown in Table 3-1. The characteristics and particulars of the resultant laminate films are shown in Tables 3-1, 3-2, and 4-1.

(Examples 26 and 27)

A laminate film was obtained in the same manner as in Example 20 except that the prescribed number of parts by mass of 2-vinyl-2-oxazoline (III) shown in Table 3, as a component other than the resin (I) and the melamine compound (II), was added to the resin composition with respect to 100 parts by mass of the resin (I). The characteristics and particulars of the resultant laminate films are shown in Tables 3-1, 3-2, and 4-1.

(Examples 28 to 30)

A laminate film was obtained in the same manner as in Example 20 except that, in the process of producing the laminate film, the heating temperature in a heat treatment zone after stretching was changed to the temperature shown in Table 4-1. The characteristics and particulars of the resultant laminate films are shown in Tables 3-1, 3-2, and 4-1.

(Example 31)

A laminate film was obtained in the same manner as in Example 20 except that the compound (c) in the resin (I) was changed to a compound (a compound having a urethane structure and multifunctional acryloyl groups) obtained from 5 parts by mass of a urethane acrylate oligomer (available from Negami Chemical Industrial Co. , Ltd., Art Resin (registered trademark) UN-3320HA, the number of acryloyl groups is 6) and 5 parts by mass of N-methylolacrylamide.

The characteristics and particulars of the resultant laminate film are shown in Tables 3-1, 3-2, and 4-1.

(Example 32)

A laminate film was obtained in the same manner as in Example 20 except that the compound (c) in the resin (I) was changed to a urethane acrylate oligomer (available from TOYO CHEMICALS CO., LTD., Miramer (registered trademark) HR3200, the number of acryloyl groups is 4) (a compound having a urethane structure and multifunctional acryloyl groups). The characteristics and particulars of the resultant laminate film are shown in Tables 3-1, 3-2, and 4-1.

(Example 33)

A laminate film was obtained in the same manner as in Example 20 except that the compound (c) in the resin (I) was changed to a urethane acrylate oligomer (available from Negami Chemical Industrial Co. , Ltd. , Art Resin (registered trademark) UN-3320HS, the number of acryloyl groups is 15) (a compound having a urethane structure and multifunctional acryloyl groups). The characteristics and particulars of the resultant laminate film are shown in Tables 3-1, 3-2, and 4-1.

(Example 34)

A laminate film was obtained in the same manner as in Example 33 except that the mass ratios of the resin (I) and the melamine compound (II) were changed to the mass ratios shown in Table 3-1. The characteristics and particulars of the resultant laminate film are shown in Tables 3-1, 3-2, and 4-1.

(Example 35)

A laminate film was obtained in the same manner as in Example 20 except that the acrylic acid ester compound and/or the methacrylic acid ester compound (a) in the resin (I) was changed to methyl acrylate. The characteristics and particulars of the resultant laminate film are shown in Tables 3-1, 3-2, and 4-1.

(Example 36)

A laminate film was obtained in the same manner as in Example 20 except that the ethylene-based unsaturated compound (b) having a hydroxy group in the resin (I) was changed to 2-hydroxyethyl acrylate. The characteristics and particulars of the resultant laminate film are shown in Tables 3-1, 3-2, and 4-1.

(Example 37)

A laminate film was obtained in the same manner as in Example 20 except that the prescribed number of parts by mass of an oxazoline compound (III) ("EPOCROS" (registered trademark) WS-500 available from NIPPON SHOKUBAI CO., LTD.) shown in Table 3-1, as a component other than the resin (I) and the melamine compound (II), was added to the resin composition with respect to 100 parts by mass of the resin (I). The characteristics and particulars of the resultant laminate film are shown in Tables 3-1, 3-2, and 4-1.

(Example 38)

A laminate film was obtained in the same manner as in Example 20 except that the mass ratio of the resin (I) was changed to the mass ratio shown in Table 3-1. The characteristics and particulars of the resultant laminate film are shown in Tables 3-1, 3-2, and 4-1. With regard to the resin forming the resin layer of the laminate film, as a result of analyzing the resin by GC-MS, FT-IR and $^{1}$H-NMR, although it was confirmed that the resin had structures of formulae (2) and (3), the structure of formula (1) was not confirmed. In Example 38 where the resin forming the resin layer did not have a chemical structure represented by formula (3), although the haze was raised compared to Example 20 since cracks had been generated in the resin layer, the satisfactory results such as the scratch test of "S" and the rate of change in haze after the heat treatment at 170°C for 2 hours of within 0.3% were attained.

(Example 39)

A laminate film was obtained in the same manner as in Example 20 except that in the method for producing the polyester B, a polyester B that was obtained by changing the time of performing a heat treatment under reduced

pressure (133 Pa or lower) at 240°C to 4 hours and that had an intrinsic viscosity of 0.74 dl/g and an oligomer content of 0.49% by mass was used. The characteristics and particulars of the resultant laminate film are shown in Tables 3-1, 3-2, and 4-1.

(Example 40)

A laminate polyester film was obtained in the same manner as in Example 20 except that in the method for producing the polyester B, a polyester B that was obtained by changing the heat treatment under reduced pressure (133 Pa or lower) to a temperature of 260°C for 12 hours and that had an intrinsic viscosity of 0.88 dl/g and an oligomer content of 0.37% by mass was used. The characteristics and particulars of the resultant laminate film are shown in Tables 3-1, 3-2, and 4-1.

(Example 41)

A laminate film was obtained in the same manner as in Example 20 except that in the method for producing the polyester B, a polyester B that was obtained by changing the heat treatment under reduced pressure (133 Pa or lower) to a temperature of 240°C for 3 hours and that had an intrinsic viscosity of 0.71 dl/g and an oligomer content of 0.47% by mass was used. The characteristics and particulars of the resultant laminate film are shown in Tables 3-1, 3-2, and 4-1.

(Example 42)

A laminate film was obtained in the same manner as in Example 20 except that in the method for producing the polyester film in Example 20, the polyester B/the polyester A were fed to two extruders by adjusting the volume ratio to be 3/22 and the thickness ratio of the unstretched polyester film was adjusted to polyester B/polyester A/polyester B = 3/44/3. The characteristics and particulars of the resultant laminate film are shown in Tables 3-1, 3-2, and 4-1.

(Example 43)

An unstretched laminate film having a three-layer structure in which the thickness ratio of the unstretched polyester film was polyester B/polyester A/polyester B = 8/9/8 was obtained by controlling the feed of the polyester B/the polyester A to two extruders so as to render the volume ratio thereof to be 16/9 and changing the overall feed amount of the polyester B and the polyester A to 1.5 times in the method for producing the polyester film of Example 20. A laminate film was obtained in the same manner as in Example 20 except the above. The characteristics and particulars of the resultant laminate film are shown in Tables 3-1, 3-2, and 4-1.

(Example 44)

A laminate film was obtained in the same manner as in Example 20 except that the ratio of the relaxation treatment in the width direction was changed to 2.4%. The characteristics and particulars of the resultant laminate film are shown in Tables 3-1, 3-2, and 4-1.

(Example 45)

A laminate film was obtained in the same manner as in Example 20 except that in the method for producing the polyester film, the polyester B/the polyester A were fed to two extruders by adjusting the volume ratio to be 2/23 and the thickness ratio of the unstretched polyester film was adjusted to polyester B/polyester A/polyester B = 1/23/1. The characteristics and particulars of the resultant laminate film are shown in Tables 3-1, 3-2, and 4-1.

(Example 46)

A laminate film was obtained in the same manner as in Example 20 except that the polyester B/the polyester A were fed to two extruders by adjusting the volume ratio thereof to 52/23 and changing the overall feed amount of the polyester B and the polyester A to 1.5 times so that the thickness ratio of the unstretched polyester film might be polyester B/polyester A/polyester B = 26/23/26 in the method for producing the polyester film. The characteristics and particulars of the resultant laminate film are shown in Tables 3-1, 3-2, and 4-1.

(Example 47)

A laminate film was obtained in the same manner as in Example 20 except that the ratio of the relaxation treatment in the width direction was changed to 2.0%. The characteristics and particulars of the resultant laminate film are shown in Tables 3-1, 3-2, and 4-1.

(Example 48)

A laminate film was obtained in the same manner as in Example 19 except that the resin layer thickness was changed to the thickness shown in Table 6. The characteristics and particulars of the resultant laminate film are shown in Tables 5-1, 5-2, and 6.

(Example 49)

A laminate film was obtained in the same manner as in Example 19 except that the resin layer thickness was changed to the thickness shown in Table 6. The characteristics and particulars of the resultant laminate film are shown in Tables 5-1, 5-2, and 6.

(Examples 50 to 52)

A laminate film was obtained in the same manner as in Example 20 except that the mass ratio of the resin (I) was changed to the mass ratio shown in Table 5-1. The characteristics and particulars of the resultant laminate films are shown in Tables 5-1, 5-2, and 6.

(Example 53)

A laminate film was obtained in the same manner as in Example 20 except that the mass ratio of the resin (I) was changed to the mass ratio shown in Table 5-1. In Example 50 in which the amount of ethylene-based unsaturated compound (b) having a hydroxy group in the resin (I) was small, since the resin composition failed to be dispersed in an aqueous solvent, one which was separately prepared by allowing the resin composition to be forcibly dispersed with an anionic surfactant was used. The characteristics and particulars of the resultant laminate film are shown in Tables 5-1, 5-2, and 6. In Example 53, the pencil hardness was lowered to B, and both the results of the scratch test and the haze change after the heat treatment at 170°C for 2 hours were unsatisfactory. With regard to the resin forming the resin layer of the laminate film, as a result of analyzing the resin by GC-MS, FT-IR and $^1$H-NMR, although it was confirmed that the resin had structures of formulae (1) and (3), the structure of formula (2) was not confirmed.

(Example 54)

A laminate film was obtained in the same manner as in Example 20 except that the prescribed number of parts by mass of an oxazoline compound (III) ("EPOCROS" (registered trademark) WS-500 available from NIPPON SHOKUBAI CO., LTD.) shown in Table 5-1, as a component other than the resin (I) and the melamine compound (II), was added to the resin composition with respect to 100 parts by mass of the resin (I). The characteristics and particulars of the resultant laminate film are shown in Tables 5-1, 5-2, and 6.

(Example 55)

A laminate film was obtained in the same manner as in Example 20 except that the mass ratio of the resin (I) was changed to the mass ratio shown in Table 5-1. The characteristics and particulars of the resultant laminate film are shown in Tables 5-1, 5-2, and 6.

(Example 56)

A laminate film was obtained in the same manner as in Example 20 except that, in the process of producing the laminate film, the heating temperature in a heat treatment zone after stretching was changed to 140°C. That is, the laminate film was not heated to 150°C or higher in any zone after the coating with the resin composition. The characteristics and particulars of the resultant laminate film are shown in Tables 5-1, 5-2, and 6. Since the heating temperature in a heat treatment zone was changed to 140°C in Example 56, a resin ($\alpha$) was not formed, the pencil hardness was lowered to B, and both the results of the scratch test and the rate of change in haze after the heat treatment at 170°C for 2 hours

were unsatisfactory.

(Comparative Example 5)

A laminate film was obtained in the same manner as in Example 20 except that in the method for producing the polyester B, a polyester B that was obtained by changing the heat treatment time under reduced pressure (133 Pa or lower) to 2 hours and that had an intrinsic viscosity of 0.71 dl/g and an oligomer content of 0.52% by mass was used. The characteristics and particulars of the resultant laminate film are shown in Tables 5-1, 5-2, and 6.

(Comparative Example 6)

The method for producing the polyester B was changed to a method in which the polymerization catalyst was changed from germanium dioxide to antimony trioxide and this was added up to 400 ppm in terms of antimony atoms relative to a polyester to be obtained. The intrinsic viscosity of the thus-obtained polyester B was 0.76 dl/g and the oligomer content was 0.80% by mass. A laminate film was obtained in the same manner as in Example 20 except the above. The characteristics and particulars of the resultant laminate film are shown in Tables 5-1, 5-2, and 6.

(Comparative Example 7)

In the production of the polyester film of Example 20, modification was made to only feed of the polyester B to one extruder. Due to increase in the load to the extruder, production for a prolonged time was difficult and film breakage sporadically occurred during film production, but an unstretched film having a monolayer structure of only the polyester B was obtained. A laminate film was obtained in the same manner as in Example 20 except the above. The characteristics and particulars of the resultant laminate film are shown in Tables 5-1, 5-2, and 6.

(Comparative Example 8)

A laminate film was obtained in the same manner as in Example 20 except that in the method for producing the polyester B, a polyester B that was obtained by changing the heat treatment under reduced pressure (133 Pa or lower) to a temperature of 220°C for 2 hours and that had an intrinsic viscosity of 0.68 dl/g and an oligomer content of 0.42% by mass was used. The characteristics and particulars of the resultant laminate film are shown in Tables 5-1, 5-2, and 6.

(Comparative Example 9)

A laminate polyester film was obtained in the same manner as in Example 20 except that in the method for producing the polyester B, a polyester B that was obtained by changing the heat treatment under reduced pressure (133 Pa or lower) to heat treatment at a temperature of 260°C for 16 hours and that had an intrinsic viscosity of 0.91 dl/g and an oligomer content of 0.37% by mass was used. The characteristics and particulars of the resultant laminate film are shown in Tables 5-1, 5-2, and 6.

(Example 57)

A laminate film was obtained in the same manner as in Example 20 except that in the coating liquid of Example 20, the melamine compound (II) was added to the coating liquid for the resin layer (Y) in the resin composition ratio shown in Table 3-3 without use of the resin (I) and the coating liquid was applied. The characteristics and particulars of the resultant laminate film are shown in Tables 3-3, 3-4, and 4-2. Although the pencil hardness lowered to HB and the result of the scratch evaluation was a little inferior, transparency and $\Delta H$ after the heat treatment were satisfactory.

(Example 58)

A laminate film was obtained in the same manner as in Example 57 except that the resin layer thickness was changed to the thickness shown in Table 4-2. The characteristics and particulars of the resultant laminate film are shown in Tables 3-3, 3-4, and 4-2.

(Example 59)

A laminate film was obtained in the same manner as in Example 57 except that the melamine compound was

added in the part(s) by mass shown in Table 3-3. The characteristics and particulars of the resultant laminate film are shown in Tables 3-3, 3-4, and 4-2.

(Example 60)

A laminate film was obtained in the same manner as in Example 57 except that the coating liquid of Example 57 was modified into the composition shown in Table 3-3. The characteristics and particulars of the resultant laminate film are shown in Tables 3-3, 3-4, and 4-2.

(Example 61)

A laminate film was obtained in the same manner as in Example 20 except that the coating liquid in Example 20 was replaced by the coating liquid for the resin layer (Z) and the resin shown in Table 3-3 was applied. The characteristics and particulars of the resultant laminate film are shown in Tables 3-3, 3-4, and 4-2. Although the pencil hardness lowered to HB and the result of the scratch evaluation was a little inferior, transparency and ΔH after the heat treatment were satisfactory.

(Example 62)

A laminate film was obtained in the same manner as in Example 61 except that isophorone diisocyanate was used as the aliphatic polyisocyanate compound constituting the aliphatic urethane resin (i) in the resin (Z) and its amount was adjusted to the parts by mass shown in Table 3-3. The characteristics and particulars of the resultant laminate film are shown in Tables 3-3, 3-4, and 4-2.

(Example 63)

A laminate film was obtained in the same manner as in Example 62 except that hydrogenated xylylene diisocyanate was used as the aliphatic polyisocyanate compound constituting the aliphatic urethane resin (i) in the resin (Z) and its amount was adjusted to the parts by mass shown in Table 3-3. The characteristics and particulars of the resultant laminate film are shown in Tables 3-3, 3-4, and 4-2.

(Example 64)

A laminate film was obtained in the same manner as in Example 62 except that the acrylic resin component of the acrylic-modified polyester resin (h) in the resin (Z) was changed to 50 parts by mass in total of 40 parts by mass of methyl methacrylate and 10 parts by mass of 2-hydroxyethyl methacrylate. The characteristics and particulars of the resultant laminate film are shown in Tables 3-3, 3-4, and 4-2.

(Example 65)

A laminate film was obtained in the same manner as in Example 62 except that the acrylic resin component of the acrylic-modified polyester resin (h) in the resin (Z) was changed to 50 parts by mass in total of 40 parts by mass of methyl methacrylate and 10 parts by mass of ethylene glycol methacrylate. The characteristics and particulars of the resultant laminate film are shown in Tables 3-3, 3-4, and 4-2.

(Example 66)

A laminate film was obtained in the same manner as in Example 62 except that the acrylic resin component of the acrylic-modified polyester resin (h) in the resin (Z) was changed to 50 parts by mass in total of 40 parts by mass of methyl methacrylate and 10 parts by mass of acrylic acid triethylamine. The characteristics and particulars of the resultant laminate film are shown in Tables 3-3, 3-4, and 4-2.

(Example 67)

A laminate film was obtained in the same manner as in Example 62 except that the acrylic resin component of the acrylic-modified polyester resin (h) in the resin (Z) was changed to 50 parts by mass in total of 40 parts by mass of methyl methacrylate and 10 parts by mass of glycidyl acrylate. The characteristics and particulars of the resultant laminate film are shown in Tables 3-3, 3-4, and 4-2.

(Examples 68 and 69)

A laminate film was obtained in the same manner as in Example 62 except that in addition to the acrylic-modified polyester resin (h) and the aliphatic urethane resin (i) in the resin (Z), Carbodilite (registered trademark) V-04 (available from Nisshinbo Chemical Inc.) was added as the resin (III) at the mass ratio shown in Table 3-3. The characteristics and particulars of the resultant laminate films are shown in Tables 3-3, 3-4, and 4-2.

(Example 70)

A laminate film was obtained in the same manner as in Example 62 except that in addition to the acrylic-modified polyester resin (h) and the aliphatic urethane resin (i) in the resin (Z), NIKALAC (registered trademark) MW-035 (available from Sanwa Chemical Co., Ltd.) was added as the melamine compound (II) at the mass ratio shown in Table 3-3. The characteristics and particulars of the resultant laminate film are shown in Tables 3-3, 3-4, and 4-2.

(Example 71)

A laminate film was obtained in the same manner as in Example 62 except that in addition to the acrylic-modified polyester resin (h) and the aliphatic urethane resin (i) in the resin (Z), NIKALAC (registered trademark) MW-12LF (available from Sanwa Chemical Co., Ltd.) was added as the melamine compound (II) at the mass ratio shown in Table 3. The characteristics and particulars of the resultant laminate film are shown in Tables 3-3, 3-4, and 4-2.

(Examples 72 and 73)

A laminate film was obtained in the same manner as in Example 62 except that in addition to the acrylic-modified polyester resin (h) and the aliphatic urethane resin (i) in the resin (Z), NIKALAC (registered trademark) MW-12LF (available from Sanwa Chemical Co., Ltd.) was added as the melamine compound (II) at the mass ratio shown in Table 3. The characteristics and particulars of the resultant laminate films are shown in Tables 3-3, 3-4, and 4-2.

[Table 3-1]

| | Resin (I) | | | Resin (Y) | | | | Resin (Z) | | Resin composition | |
|---|---|---|---|---|---|---|---|---|---|---|---|
| | (a) | (b) | (c) | (d) | (e) | (f) | (g) | (h) | (i) | (I)/(II)/(III)/(Y)/(Z)/particles | Content of (I)+(II) relative to solid content in resin composition |
| | [parts by mass] | | | [parts by mass] | | | | [parts by mass] | | [parts by mass] | [% by mass] |
| Example 19 | 75 | 20 | 5 | 0 | 0 | 0 | 0 | 0 | 0 | 100 / 50 / 0 / 0 / 0 / 2 | 99 |
| Example 20 | 75 | 20 | 5 | 0 | 0 | 0 | 0 | 0 | 0 | 100 / 50 / 0 / 0 / 0 /2 | 99 |
| Example 21 | 75 | 20 | 5 | 0 | 0 | 0 | 0 | 0 | 0 | 100 / 50 / 0 / 0 / 0 / 2 | 99 |
| Example 22 | 98 | 1 | 1 | 0 | 0 | 0 | 0 | 0 | 0 | 100 / 50 / 0 / 0 / 0 / 2 | 99 |
| Example 23 | 55 | 30 | 15 | 0 | 0 | 0 | 0 | 0 | 0 | 100 / 50 / 0 / 0 / 0 / 2 | 99 |
| Example 24 | 75 | 20 | 5 | 0 | 0 | 0 | 0 | 0 | 0 | 100 / 30 / 0 / 0 / 0 / 2 | 99 |
| Example 25 | 75 | 20 | 5 | 0 | 0 | 0 | 0 | 0 | 0 | 100 / 100 / 0 / 0 / 0 / 2 | 99 |

(continued)

| | Resin (I) | | | Resin (Y) | | | | Resin (Z) | | Resin composition | |
|---|---|---|---|---|---|---|---|---|---|---|---|
| | (a) | (b) | (c) | (d) | (e) | (f) | (g) | (h) | (i) | (I)/(II)/(III)/(Y)/(Z)/particles | Content of (I)+(II) relative to solid content in resin composition |
| | [parts by mass] | | | [parts by mass] | | | | [parts by mass] | | [parts by mass] | [% by mass] |
| Example 26 | 75 | 20 | 5 | 0 | 0 | 0 | 0 | 0 | 0 | 100 / 50 / 60 / 0 / 0 / 2 | 71 |
| Example 27 | 75 | 20 | 5 | 0 | 0 | 0 | 0 | 0 | 0 | 100 / 50 / 30 / 0 / 0 / 2 | 82 |
| Example 28 | 75 | 20 | 5 | 0 | 0 | 0 | 0 | 0 | 0 | 100 / 50 / 0 / 0 / 0 / 2 | 99 |
| Example 29 | 75 | 20 | 5 | 0 | 0 | 0 | 0 | 0 | 0 | 100 / 50 / 0 / 0 / 0 / 2 | 99 |
| Example 30 | 75 | 20 | 5 | 0 | 0 | 0 | 0 | 0 | 0 | 100 / 50 / 0 / 0 / 0 / 2 | 99 |
| Example 31 | 70 | 20 | 10 | 0 | 0 | 0 | 0 | 0 | 0 | 100 / 50 / 0 / 0 / 0 / 2 | 99 |
| Example 32 | 75 | 20 | 5 | 0 | 0 | 0 | 0 | 0 | 0 | 100 / 50 / 0 / 0 / 0 / 2 | 99 |
| Example 33 | 75 | 20 | 5 | 0 | 0 | 0 | 0 | 0 | 0 | 100 / 50 / 0 / 0 / 0 / 2 | 99 |
| Example 34 | 75 | 20 | 5 | 0 | 0 | 0 | 0 | 0 | 0 | 100 / 100 / 0 / 0 / 0 / 2 | 99 |
| Example 35 | 75 | 20 | 5 | 0 | 0 | 0 | 0 | 0 | 0 | 100 / 50 / 0 / 0 / 0 / 2 | 99 |
| Example 36 | 75 | 20 | 5 | 0 | 0 | 0 | 0 | 0 | 0 | 100 / 50 / 0 / 0 / 0 / 2 | 99 |
| Example 37 | 75 | 20 | 5 | 0 | 0 | 0 | 0 | 0 | 0 | 100 / 50 / 55 / 0 / 0 / 2 | 72 |
| Example 38 | 80 | 20 | 0 | 0 | 0 | 0 | 0 | 0 | 0 | 100 / 50 / 0 / 0 / 0 / 2 | 99 |
| Example 39 | 75 | 20 | 5 | 0 | 0 | 0 | 0 | 0 | 0 | 100 / 50 / 0 / 0 / 0 / 2 | 99 |
| Example 40 | 75 | 20 | 5 | 0 | 0 | 0 | 0 | 0 | 0 | 100 / 50 / 0 / 0 / 0 / 2 | 99 |
| Example 41 | 75 | 20 | 5 | 0 | 0 | 0 | 0 | 0 | 0 | 100 / 50 / 0 / 0 / 0 / 2 | 99 |
| Example 42 | 75 | 20 | 5 | 0 | 0 | 0 | 0 | 0 | 0 | 100 / 50 / 0 / 0 / 0 / 2 | 99 |
| Example 43 | 75 | 20 | 5 | 0 | 0 | 0 | 0 | 0 | 0 | 100 / 50 / 0 / 0 / 0 / 2 | 99 |

(continued)

| | Resin (I) | | | Resin (Y) | | | | Resin (Z) | | Resin composition | |
|---|---|---|---|---|---|---|---|---|---|---|---|
| | (a) | (b) | (c) | (d) | (e) | (f) | (g) | (h) | (i) | (I)/(II)/(III)/(Y)/(Z)/particles | Content of (I)+(II) relative to solid content in resin composition |
| | [parts by mass] | | | [parts by mass] | | | | [parts by mass] | | [parts by mass] | [% by mass] |
| Example 44 | 75 | 20 | 5 | 0 | 0 | 0 | 0 | 0 | 0 | 100 / 50 / 0 / 0 / 0 / 2 | 99 |
| Example 45 | 75 | 20 | 5 | 0 | 0 | 0 | 0 | 0 | 0 | 100 / 50 / 0 / 0 / 0 / 2 | 99 |
| Example 46 | 75 | 20 | 5 | 0 | 0 | 0 | 0 | 0 | 0 | 100 / 50 / 0 / 0 / 0 / 2 | 99 |
| Example 47 | 75 | 20 | 5 | 0 | 0 | 0 | 0 | 0 | 0 | 100 / 50 / 0 / 0 / 0 / 2 | 99 |

[Table 3-2]

| | Polyester film | | | | | | | | | | |
|---|---|---|---|---|---|---|---|---|---|---|---|
| | Whole polyester film | | | | Polyester resin composition constituting B layer | | | | Polyester resin composition constituting A layer | | |
| | Lamination configuration | Thickness | Thickness of each layer B/A/B | Thickness of B layer relative to overall film thickness | Oligomer content | Intrinsic viscosity | Crystallinity | Germanium element content | Oligomer content | Intrinsic viscosity | Crystallinity |
| | Number of layers | [μm] | [μm] | [%] | [% by mass] | [dl/g] | [%] | [mol/ton] | [% by mass] | [dl/g] | [%] |
| Example 19 | 3 | 100 | 15/70/15 | 30 | 0.42 | 0.76 | 48 | 0.4 | 1.10 | 0.63 | 51 |
| Example 20 | 3 | 100 | 15/70/15 | 30 | 0.42 | 0.76 | 48 | 0.4 | 1.10 | 0.63 | 51 |
| Example 21 | 3 | 100 | 15/70/15 | 30 | 0.42 | 0.76 | 48 | 0.4 | 1.10 | 0.63 | 51 |
| Example 22 | 3 | 100 | 15/70/15 | 30 | 0.42 | 0.76 | 48 | 0.4 | 1.10 | 0.63 | 51 |
| Example 23 | 3 | 100 | 15/70/15 | 30 | 0.42 | 0.76 | 48 | 0.4 | 1.10 | 0.63 | 51 |
| Example 24 | 3 | 100 | 15/70/15 | 30 | 0.42 | 0.76 | 48 | 0.4 | 1.10 | 0.63 | 51 |
| Example 25 | 3 | 100 | 15/70/15 | 30 | 0.42 | 0.76 | 48 | 0.4 | 1.10 | 0.63 | 51 |
| Example 26 | 3 | 100 | 15/70/15 | 30 | 0.42 | 0.76 | 48 | 0.4 | 1.10 | 0.63 | 51 |
| Example 27 | 3 | 100 | 15/70/15 | 30 | 0.42 | 0.76 | 48 | 0.4 | 1.10 | 0.63 | 51 |
| Example 28 | 3 | 100 | 15/70/15 | 30 | 0.42 | 0.76 | 48 | 0.4 | 1.10 | 0.63 | 51 |

(continued)

| | Polyester film | | | | | | | | | | |
|---|---|---|---|---|---|---|---|---|---|---|---|
| | Whole polyester film | | | | Polyester resin composition constituting B layer | | | | Polyester resin composition constituting A layer | | |
| | Lamination configuration | Thickness | Thickness of each layer B/A/B | Thickness of B layer relative to overall film thickness | Oligomer content | Intrinsic viscosity | Crystallinity | Germanium element content | Oligomer content | Intrinsic viscosity | Crystallinity |
| | Number of layers | [μm] | [μm] | [%] | [% by mass] | [dl/g] | [%] | [mol/ton] | [% by mass] | [dl/g] | [%] |
| Example 29 | 3 | 100 | 15/70/15 | 30 | 0.42 | 0.76 | 48 | 0.4 | 1.10 | 0.63 | 51 |
| Example 30 | 3 | 100 | 15/70/15 | 30 | 0.42 | 0.76 | 48 | 0.4 | 1.10 | 0.63 | 51 |
| Example 31 | 3 | 100 | 15/70/15 | 30 | 0.42 | 0.76 | 48 | 0.4 | 1.10 | 0.63 | 51 |
| Example 32 | 3 | 100 | 15/70/15 | 30 | 0.42 | 0.76 | 48 | 0.4 | 1.10 | 0.63 | 51 |
| Example 33 | 3 | 100 | 15/70/15 | 30 | 0.42 | 0.76 | 48 | 0.4 | 1.10 | 0.63 | 51 |
| Example 34 | 3 | 100 | 15/70/15 | 30 | 0.42 | 0.76 | 48 | 0.4 | 1.10 | 0.63 | 51 |
| Example 35 | 3 | 100 | 15/70/15 | 30 | 0.42 | 0.76 | 48 | 0.4 | 1.10 | 0.63 | 51 |
| Example 36 | 3 | 100 | 15/70/15 | 30 | 0.42 | 0.76 | 48 | 0.4 | 1.10 | 0.63 | 51 |
| Example 37 | 3 | 100 | 15/70/15 | 30 | 0.42 | 0.76 | 48 | 0.4 | 1.10 | 0.63 | 51 |
| Example 38 | 3 | 100 | 15/70/15 | 30 | 0.42 | 0.76 | 48 | 0.4 | 1.10 | 0.63 | 51 |

(continued)

| | Polyester film | | | | | | | | | | |
|---|---|---|---|---|---|---|---|---|---|---|---|
| | Whole polyester film | | | | Polyester resin composition constituting B layer | | | | Polyester resin composition constituting A layer | | |
| | Lamination configuration | Thickness | Thickness of each layer B/A/B | Thickness of B layer relative to overall film thickness | Oligomer content | Intrinsic viscosity | Crystallinity | Germanium element content | Oligomer content | Intrinsic viscosity | Crystallinity |
| | Number of layers | [µm] | [µm] | [%] | [% by mass] | [dl/g] | [%] | [mol/ton] | [% by mass] | [dl/g] | [%] |
| Example 39 | 3 | 100 | 15/70/15 | 30 | 0.49 | 0.74 | 49 | 0.4 | 1.10 | 0.63 | 51 |
| Example 40 | 3 | 100 | 15/70/15 | 30 | 0.37 | 0.88 | 46 | 0.4 | 1.10 | 0.63 | 51 |
| Example 41 | 3 | 100 | 15/70/15 | 30 | 0.47 | 0.71 | 51 | 0.4 | 1.10 | 0.63 | 51 |
| Example 42 | 3 | 100 | 6/88/6 | 30 | 0.42 | 0.76 | 48 | 0.4 | 1.10 | 0.63 | 51 |
| Example 43 | 3 | 150 | 48/54/48 | 64 | 0.43 | 0.76 | 48 | 0.4 | 1.10 | 0.63 | 51 |
| Example 44 | 3 | 100 | 15/70/15 | 30 | 0.42 | 0.76 | 49 | 0.4 | 1.10 | 0.63 | 52 |
| Example 45 | 3 | 100 | 4/92/4 | 8 | 0.42 | 0.76 | 50 | 0.4 | 1.10 | 0.63 | 52 |
| Example 46 | 3 | 150 | 52/46/52 | 69 | 0.42 | 0.76 | 48 | 0.4 | 1.10 | 0.63 | 52 |
| Example 47 | 3 | 100 | 15/70/15 | 30 | 0.42 | 0.76 | 48 | 0.4 | 1.10 | 0.63 | 52 |

[Table 3-3]

| | Resin (I) | | | Resin (Y) | | | | Resin (Z) | | Resin composition | |
|---|---|---|---|---|---|---|---|---|---|---|---|
| | (a) | (b) | (c) | (d) | (e) | (f) | (g) | (h) | (i) | (I)/(II)/(III)/(Y)/(Z)/particles | Content of (I)+(II) relative to solid content in resin composition |
| | [parts by mass] | | | [parts by mass] | | | | [parts by mass] | | [parts by mass] | [% by mass] |
| Example 57 | 0 | 0 | 0 | 63 | 35 | 1 | 1 | 0 | 0 | 0 / 20 / 0 / 100 / 0 / 2 | 16 |
| Example 58 | 0 | 0 | 0 | 63 | 35 | 1 | 1 | 0 | 0 | 0 / 20 / 0 / 100 / 0 / 2 | 16 |
| Example 59 | 0 | 0 | 0 | 63 | 35 | 1 | 1 | 0 | 0 | 0 / 40 / 0 / 100 / 0 / 2 | 28 |
| Example 60 | 0 | 0 | 0 | 45 | 30 | 20 | 5 | 0 | 0 | 0 / 20 / 0 / 100 / 0 / 2 | 16 |
| Example 61 | 0 | 0 | 0 | 0 | 0 | 0 | 0 | 60 | 40 | 0 / 0 / 0 / 0 / 100 / 2 | 0 |
| Example 62 | 0 | 0 | 0 | 0 | 0 | 0 | 0 | 60 | 40 | 0 / 0 / 0 / 0 / 100 / 2 | 0 |
| Example 63 | 0 | 0 | 0 | 0 | 0 | 0 | 0 | 60 | 40 | 0 / 0 / 0 / 0 / 100 / 2 | 0 |
| Example 64 | 0 | 0 | 0 | 0 | 0 | 0 | 0 | 60 | 40 | 0 / 0 / 0 / 0 / 100 / 2 | 0 |
| Example 65 | 0 | 0 | 0 | 0 | 0 | 0 | 0 | 60 | 40 | 0 / 0 / 0 / 0 / 100 / 2 | 0 |
| Example 66 | 0 | 0 | 0 | 0 | 0 | 0 | 0 | 60 | 40 | 0 / 0 / 0 / 0 / 100 / 2 | 0 |
| Example 67 | 0 | 0 | 0 | 0 | 0 | 0 | 0 | 60 | 40 | 0 / 0 / 0 / 0 / 100 / 2 | 0 |
| Example 68 | 0 | 0 | 0 | 0 | 0 | 0 | 0 | 60 | 40 | 0 / 0 / 20 / 0 / 100 / 2 | 0 |
| Example 69 | 0 | 0 | 0 | 0 | 0 | 0 | 0 | 60 | 40 | 0 / 0 / 60 / 0 / 100 / 2 | 0 |
| Example 70 | 0 | 0 | 0 | 0 | 0 | 0 | 0 | 60 | 40 | 0 / 20 / 0 / 0 / 100 / 2 | 16 |
| Example 71 | 0 | 0 | 0 | 0 | 0 | 0 | 0 | 60 | 40 | 0 / 20 / 0 / 0 / 100 / 2 | 16 |
| Example 72 | 0 | 0 | 0 | 0 | 0 | 0 | 0 | 60 | 40 | 0 / 20 / 0 / 0 / 100 / 2 | 16 |
| Example 73 | 0 | 0 | 0 | 0 | 0 | 0 | 0 | 60 | 40 | 0 / 40 / 0 / 0 / 100 / 2 | 28 |

[Table 3-4]

| | Polyester film | | | | | | | | | | |
|---|---|---|---|---|---|---|---|---|---|---|---|
| | Whole polyester film | | | | Polyester resin composition constituting B layer | | | | Polyester resin composition constituting A layer | | |
| | Lamination configuration | Thickness | Thickness of each layer B/A/B | Thickness of B layer relative to overall film thickness | Oligomer content | Intrinsic viscosity | Crystallinity | Germanium element content | Oligomer content | Intrinsic viscosity | Crystallinity |
| | Number of layers | [μm] | [μm] | [%] | [% by mass] | [dl/g] | [%] | [mol/ton] | [% by mass] | [dl/g] | [%] |
| Example 57 | 3 | 100 | 15/70/15 | 30 | 0.42 | 0.76 | 48 | 0.4 | 1.10 | 0.63 | 51 |
| Example 58 | 3 | 100 | 15/70/15 | 30 | 0.42 | 0.76 | 48 | 0.4 | 1.10 | 0.63 | 51 |
| Example 59 | 3 | 100 | 15/70/15 | 30 | 0.42 | 0.76 | 48 | 0.4 | 1.10 | 0.63 | 51 |
| Example 60 | 3 | 100 | 15/70/15 | 30 | 0.42 | 0.76 | 48 | 0.4 | 1.10 | 0.63 | 51 |
| Example 61 | 3 | 100 | 15/70/15 | 30 | 0.42 | 0.76 | 48 | 0.4 | 1.10 | 0.63 | 51 |
| Example 62 | 3 | 100 | 15/70/15 | 30 | 0.42 | 0.76 | 48 | 0.4 | 1.10 | 0.63 | 51 |
| Example 63 | 3 | 100 | 15/70/15 | 30 | 0.42 | 0.76 | 48 | 0.4 | 1.10 | 0.63 | 51 |
| Example 64 | 3 | 100 | 15/70/15 | 30 | 0.42 | 0.76 | 48 | 0.4 | 1.10 | 0.63 | 51 |
| Example 65 | 3 | 100 | 15/70/15 | 30 | 0.42 | 0.76 | 48 | 0.4 | 1.10 | 0.63 | 51 |
| Example 66 | 3 | 100 | 15/70/15 | 30 | 0.42 | 0.76 | 48 | 0.4 | 1.10 | 0.63 | 51 |

(continued)

| | Polyester film | | | | | | | | | | |
|---|---|---|---|---|---|---|---|---|---|---|---|
| | Whole polyester film | | | | Polyester resin composition constituting B layer | | | | Polyester resin composition constituting A layer | | |
| | Lamination configuration | Thickness | Thickness of each layer B/A/B | Thickness of B layer relative to overall film thickness | Oligomer content | Intrinsic viscosity | Crystallinity | Germanium element content | Oligomer content | Intrinsic viscosity | Crystallinity |
| | Number of layers | [μm] | [μm] | [%] | [% by mass] | [dl/g] | [%] | [mol/ton] | [% by mass] | [dl/g] | [%] |
| Example 67 | 3 | 100 | 15/70/15 | 30 | 0.42 | 0.76 | 48 | 0.4 | 1.10 | 0.63 | 51 |
| Example 68 | 3 | 100 | 15/70/15 | 30 | 0.42 | 0.76 | 48 | 0.4 | 1.10 | 0.63 | 51 |
| Example 69 | 3 | 100 | 15/70/15 | 30 | 0.42 | 0.76 | 48 | 0.4 | 1.10 | 0.63 | 51 |
| Example 70 | 3 | 100 | 15/70/15 | 30 | 0.42 | 0.76 | 48 | 0.4 | 1.10 | 0.63 | 51 |
| Example 71 | 3 | 100 | 15/70/15 | 30 | 0.42 | 0.76 | 48 | 0.4 | 1.10 | 0.63 | 51 |
| Example 72 | 3 | 100 | 15/70/15 | 30 | 0.42 | 0.76 | 48 | 0.4 | 1.10 | 0.63 | 51 |
| Example 73 | 3 | 100 | 15/70/15 | 30 | 0.42 | 0.76 | 48 | 0.4 | 1.10 | 0.63 | 51 |

[Table 4-1]

| | Laminate film production conditions and evaluation results | | | | | | | | | | | |
|---|---|---|---|---|---|---|---|---|---|---|---|---|
| | Temperature of heat treatment zone | Thickness of resin layer | Pencil hardness | Transmittance | Haze | b value | Heat shrinkage in longitudinal direction | Heat shrinkage in width direction | Scratch test | | Haze change after heating at 170°C for 2 hours (ΔH) | Oligomer deposition inhibiting property evaluation (170°C, 2 hours heating treatment, A surface) |
| | [°C] | [nm] | [-] | [%] | [%] | [-] | [%] | [%] | [S, A, B] | Number of scratches | [%] | [mg/m$^2$] |
| Example 19 | 235 | 85 | F | 90.80 | 0.62 | 0.7 | 1.1 | 0.6 | S | 5 | 0.35 | 0.69 |
| Example 20 | 235 | 250 | H | 90.65 | 0.85 | 0.9 | 1.1 | 0.6 | S | 3 | 0.19 | 0.35 |
| Example 21 | 235 | 490 | H | 90.55 | 1.68 | 1.5 | 1.1 | 0.6 | S | 1 | 0.09 | 0.17 |
| Example 22 | 235 | 250 | F | 90.68 | 0.78 | 0.8 | 1.1 | 0.6 | S | 5 | 0.27 | 0.55 |
| Example 23 | 235 | 250 | H | 90.05 | 0.73 | 0.9 | 1.1 | 0.6 | S | 3 | 0.15 | 0.27 |
| Example 24 | 235 | 250 | F | 90.25 | 0.72 | 0.8 | 1.1 | 0.6 | S | 4 | 0.20 | 0.44 |
| Example 25 | 235 | 250 | H | 90.00 | 0.85 | 0.8 | 1.1 | 0.6 | S | 3 | 0.14 | 0.29 |
| Example 26 | 235 | 250 | H | 90.24 | 0.95 | 0.8 | 1.1 | 0.6 | S | 4 | 0.23 | 0.50 |
| Example 27 | 235 | 250 | H | 90.84 | 0.86 | 0.9 | 1.1 | 0.6 | S | 4 | 0.24 | 0.45 |

(continued)

| | Laminate film production conditions and evaluation results | | | | | | | | | | | |
|---|---|---|---|---|---|---|---|---|---|---|---|---|
| | Temperature of heat treatment zone | Thickness of resin layer | Pencil hardness | Transmittance | Haze | b value | Heat shrinkage in longitudinal direction | Heat shrinkage in width direction | Scratch test | | Haze change after heating at 170°C for 2 hours (ΔH) | Oligomer deposition inhibiting property evaluation (170°C, 2 hours heating treatment, A surface) |
| | [°C] | [nm] | [-] | [%] | [%] | [-] | [%] | [%] | [S, A, B] | Number of scratches | [%] | [mg/m$^2$] |
| Example 28 | 150 | 250 | F | 89.69 | 1.00 | 0.9 | 1.1 | 0.6 | S | 5 | 0.29 | 0.55 |
| Example 29 | 180 | 250 | H | 90.05 | 0.92 | 0.9 | 1.1 | 0.6 | S | 4 | 0.24 | 0.44 |
| Example 30 | 210 | 250 | H | 90.62 | 0.85 | 0.9 | 1.1 | 0.6 | S | 3 | 0.22 | 0.30 |
| Example 31 | 235 | 250 | H | 90.00 | 0.69 | 0.8 | 1.1 | 0.6 | S | 2 | 0.08 | 0.20 |
| Example 32 | 235 | 250 | F | 90.35 | 0.75 | 0.8 | 1.1 | 0.6 | S | 4 | 0.25 | 0.49 |
| Example 33 | 235 | 250 | H | 90.69 | 0.90 | 0.8 | 1.1 | 0.6 | S | 1 | 0.07 | 0.10 |
| Example 34 | 235 | 250 | H | 90.55 | 0.86 | 0.8 | 1.1 | 0.6 | S | 2 | 0.08 | 0.12 |
| Example 35 | 235 | 250 | H | 90.60 | 0.88 | 0.8 | 1.1 | 0.6 | S | 3 | 0.18 | 0.40 |
| Example 36 | 235 | 250 | H | 90.43 | 0.79 | 0.8 | 1.1 | 0.6 | S | 3 | 0.20 | 0.41 |

(continued)

| | Laminate film production conditions and evaluation results | | | | | | | | | | | |
|---|---|---|---|---|---|---|---|---|---|---|---|---|
| | Temperature of heat treatment zone | Thickness of resin layer | Pencil hardness | Transmittance | Haze | b value | Heat shrinkage in longitudinal direction | Heat shrinkage in width direction | Scratch test | | Haze change after heating at 170°C for 2 hours (ΔH) | Oligomer deposition inhibiting property evaluation (170°C, 2 hours heating treatment, A surface) |
| | [°C] | [nm] | [-] | [%] | [%] | [-] | [%] | [%] | [S, A, B] | Number of scratches | [%] | [mg/m$^2$] |
| Example 37 | 235 | 250 | F | 90.48 | 0.81 | 0.8 | 1.1 | 0.6 | S | 4 | 0.28 | 0.55 |
| Example 38 | 235 | 250 | F | 89.26 | 1.95 | 0.8 | 1.1 | 0.6 | S | 5 | 0.29 | 0.55 |
| Example 39 | 235 | 250 | H | 90.65 | 0.85 | 0.9 | 1.1 | 0.6 | S | 3 | 0.45 | 0.90 |
| Example 40 | 235 | 250 | H | 90.65 | 0.85 | 0.5 | 1.4 | 1.4 | S | 3 | 0.10 | 0.22 |
| Example 41 | 235 | 250 | H | 90.65 | 0.85 | 0.8 | 1.1 | 0.6 | S | 3 | 0.30 | 0.74 |
| Example 42 | 235 | 250 | H | 90.65 | 0.85 | 0.8 | 1.0 | 0.6 | S | 3 | 0.48 | 0.96 |
| Example 43 | 235 | 250 | H | 90.65 | 0.85 | 0.2 | 1.3 | 1.3 | S | 3 | 0.01 | 0.10 |
| Example 44 | 235 | 250 | H | 90.65 | 0.85 | 0.9 | 1.5 | 1.5 | S | 3 | 0.10 | 0.19 |
| Example 45 | 235 | 250 | H | 90.65 | 0.60 | 0.9 | 1.1 | 0.6 | S | 3 | 0.96 | 1.90 |

(continued)

| | Laminate film production conditions and evaluation results | | | | | | | | | | | |
|---|---|---|---|---|---|---|---|---|---|---|---|---|
| | Temperature of heat treatment zone | Thickness of resin layer | Pencil hardness | Transmittance | Haze | b value | Heat shrinkage in longitudinal direction | Heat shrinkage in width direction | Scratch test | | Haze change after heating at 170°C for 2 hours (ΔH) | Oligomer deposition inhibiting property evaluation (170°C, 2 hours heating treatment, A surface) |
| | [°C] | [nm] | [-] | [%] | [%] | [-] | [%] | [%] | [S, A, B] | Number of scratches | [%] | [mg/m$^2$] |
| Example 46 | 235 | 250 | H | 90.65 | 0.60 | 0.2 | 1.8 | 1.8 | S | 3 | 0.01 | 0.02 |
| Example 47 | 235 | 250 | H | 90.65 | 0.60 | 0.9 | 1.7 | 1.7 | S | 3 | 0.29 | 0.57 |

[Table 4-2]

| | Laminate film production conditions and evaluation results | | | | | | | | | | | |
|---|---|---|---|---|---|---|---|---|---|---|---|---|
| | Temperature of heat treatment zone | Thickness of resin layer | Pencil hardness | Transmittance | Haze | b value | Heat shrinkage in width longitudinal direction | Heat shrinkage in direction | Scratch test | | Haze change after heating at 170°C for 2 hours (ΔH) | Oligomer deposition inhibiting property evaluation (170° C, 2 hours heating treatment, A surface) |
| | [°C] | [nm] | [-] | [%] | [%] | [-] | [%] | [%] | [S, A, B] | Number of scratches | [%] | [mg/m$^2$] |
| Example 57 | 235 | 100 | HB | 93.39 | 0.53 | 0.8 | 1.1 | 0.6 | A | 6 | 0.70 | 1.12 |
| Example 58 | 235 | 50 | HB | 93.37 | 0.55 | 0.8 | 1.1 | 0.6 | A | 8 | 0.81 | 1.04 |
| Example 59 | 235 | 100 | HB | 93.32 | 0.60 | 0.8 | 1.1 | 0.6 | A | 6 | 0.66 | 1.00 |
| Example 60 | 235 | 100 | HB | 93.39 | 0.53 | 0.8 | 1.1 | 0.6 | A | 6 | 0.70 | 1.13 |
| Example 61 | 235 | 30 | HB | 93.29 | 0.63 | 0.7 | 1.1 | 0.6 | A | 8 | 0.77 | 1.10 |
| Example 62 | 235 | 30 | HB | 93.30 | 0.62 | 0.7 | 1.1 | 0.6 | A | 8 | 0.72 | 1.13 |
| Example 63 | 235 | 30 | HB | 93.28 | 0.64 | 0.7 | 1.1 | 0.6 | A | 8 | 0.82 | 1. 15 |
| Example 64 | 235 | 30 | HB | 93.31 | 0.61 | 0.7 | 1.1 | 0.6 | A | 8 | 0.73 | 1.11 |
| Example 65 | 235 | 30 | HB | 93.26 | 0.66 | 0.7 | 1.1 | 0.6 | A | 8 | 0.79 | 1.16 |

(continued)

| | Laminate film production conditions and evaluation results | | | | | | | | | | | |
|---|---|---|---|---|---|---|---|---|---|---|---|---|
| | Temperature of heat treatment zone | Thickness of resin layer | Pencil hardness | Transmittance | Haze | b value | Heat shrinkage in width longitudinal direction | Heat shrinkage in direction | Scratch test | | Haze change after heating at 170°C for 2 hours (ΔH) | Oligomer deposition inhibiting property evaluation (170° C, 2 hours heating treatment, A surface) |
| | [°C] | [nm] | [-] | [%] | [%] | [-] | [%] | [%] | [S, A, B] | Number of scratches | [%] | [mg/m$^2$] |
| Example 66 | 235 | 30 | HB | 93.23 | 0.69 | 0.7 | 1.1 | 0.6 | A | 8 | 0.82 | 1.20 |
| Example 67 | 235 | 30 | HB | 93.34 | 0.58 | 0.7 | 1.1 | 0.6 | A | 8 | 0.75 | 1.10 |
| Example 68 | 235 | 30 | HB | 93.29 | 0.63 | 0.7 | 1.1 | 0.6 | A | 7 | 0.66 | 1.05 |
| Example 69 | 235 | 30 | HB | 93.20 | 0.72 | 0.8 | 1.1 | 0.6 | A | 6 | 0.52 | 1.01 |
| Example 70 | 235 | 30 | HB | 93.15 | 0.77 | 0.8 | 1.1 | 0.6 | A | 7 | 0.63 | 1.05 |
| Example 71 | 235 | 30 | HB | 93.21 | 0.71 | 0.8 | 1.1 | 0.6 | A | 7 | 0.69 | 1.02 |
| Example 72 | 235 | 30 | HB | 93.17 | 0.75 | 0.8 | 1.1 | 0.6 | A | 7 | 0.62 | 1.07 |
| Example 73 | 235 | 30 | HB | 93.16 | 0.76 | 0.8 | 1.1 | 0.6 | A | 6 | 0.57 | 1.02 |

[Table 5-1]

| | Resin (I) | | | Resin (Y) | | | | Resin (Z) | | Resin composition | |
|---|---|---|---|---|---|---|---|---|---|---|---|
| | (a) | (b) | (c) | (d) | (e) | (f) | (g) | (h) | (i) | (I)/(II)/(III)/(Y)/(Z)/parti cles | Content of (I) + (II) relative to solid content in resin composition |
| | [parts by mass] | | | [parts by mass] | | | | [part ma | ts by ss] | [parts by mass] | [% by mass] |
| Example 48 | 75 | 20 | 5 | 0 | 0 | 0 | 0 | 0 | 0 | 100 / 50 / 0 / 0 / 0 / 2 | 99 |
| Example 49 | 75 | 20 | 5 | 0 | 0 | 0 | 0 | 0 | 0 | 100 / 50 / 0 / 0 / 0 / 2 | 99 |
| Example 50 | 99 | 1 | 0 | 0 | 0 | 0 | 0 | 0 | 0 | 100 / 50 / 0 / 0 / 0 / 2 | 99 |
| Example 51 | 52 | 30 | 18 | 0 | 0 | 0 | 0 | 0 | 0 | 100 / 50 / 0 / 0 / 0 / 2 | 99 |
| Example 52 | 62 | 33 | 5 | 0 | 0 | 0 | 0 | 0 | 0 | 100 / 50 / 0 / 0 / 0 / 2 | 99 |
| Example 53 | 95 | 0 | 5 | 0 | 0 | 0 | 0 | 0 | 0 | 100 / 50 / 0 / 0 / 0 / 2 | 99 |
| Example 54 | 75 | 20 | 5 | 0 | 0 | 0 | 0 | 0 | 0 | 100 / 50 / 70 / 0 / 0 / 2 | 68 |
| Example 55 | 75 | 20 | 5 | 0 | 0 | 0 | 0 | 0 | 0 | 100 / 25 / 0 / 0 / 0 / 2 | 98 |
| Example 56 | 75 | 20 | 5 | 0 | 0 | 0 | 0 | 0 | 0 | 100 / 50 / 0 / 0 / 0 / 2 | 99 |
| Comparative Example 5 | 75 | 20 | 5 | 0 | 0 | 0 | 0 | 0 | 0 | 100 / 50 / 0 / 0 / 0 / 2 | 99 |
| Comparative Example 6 | 75 | 20 | 5 | 0 | 0 | 0 | 0 | 0 | 0 | 100 / 50 / 0 / 0 / 0 / 2 | 99 |
| Comparative Example 7 | 75 | 20 | 5 | 0 | 0 | 0 | 0 | 0 | 0 | 100 / 50 / 0 / 0 / 0 / 2 | 99 |
| Comparative Example 8 | 75 | 20 | 5 | 0 | 0 | 0 | 0 | 0 | 0 | 100 / 50 / 0 / 0 / 0 / 2 | 99 |
| Comparative Example 9 | 75 | 20 | 5 | 0 | 0 | 0 | 0 | 0 | 0 | 100 / 50 / 0 / 0 / 0 / 2 | 99 |

[Table 5-2]

| | Polyester film | | | | | | | | | | |
|---|---|---|---|---|---|---|---|---|---|---|---|
| | Whole polyester film | | | | Polyester resin composition constituting B layer | | | | Polyester resin composition constituting A layer | | |
| | Lamination configuration | Thickness | Thickness of each layer | Thickness of B layer relative to overall film thickness | Oligomer content | Intrinsic viscosity | Crystallinity | Germanium element content | Oligomer content | Intrinsic viscosity | Crystallinity |
| | Number of layers | [μm] | [μm] | [%] | [% by mass] | [dl/g] | [%] | [mol/ton] | [% by mass] | [dl/gl | [%] |
| Example 48 | 3 | 100 | 15/70/15 | 30 | 0.42 | 0.76 | 48 | 0.4 | 1.10 | 0.63 | 51 |
| Example 49 | 3 | 100 | 15/10/15 | 30 | 0.42 | 0.76 | 48 | 0.4 | 1.10 | 0.63 | 51 |
| Example 50 | 3 | 100 | 15/70/15 | 30 | 0.42 | 0.76 | 48 | 0.4 | 1.10 | 0.63 | 51 |
| Example 51 | 3 | 100 | 15/70/15 | 30 | 0.42 | 0.76 | 48 | 0.4 | 1.10 | 0.63 | 51 |
| Example 52 | 3 | 100 | 15/70/15 | 30 | 0.42 | 0.76 | 48 | 0.4 | 1.10 | 0.63 | 51 |
| Example 53 | 3 | 100 | 15/70/15 | 30 | 0.42 | 0.76 | 48 | 0.4 | 1.10 | 0.63 | 51 |
| Example 54 | 3 | 100 | 15/70/15 | 30 | 0.42 | 0.76 | 48 | 0.4 | 1.10 | 0.63 | 51 |
| Example 55 | 3 | 100 | 15/70/15 | 30 | 0.42 | 0.76 | 48 | 0.4 | 1.10 | 0.63 | 51 |
| Example 56 | 3 | 100 | 15/70/15 | 30 | 0.42 | 0.76 | 48 | 0.4 | 1.10 | 0.63 | 51 |
| Comparative Example 5 | 3 | 100 | 15/70/15 | 30 | 0.52 | 0.71 | 50 | 0.4 | 1.10 | 0.63 | 52 |
| Comparative Example 6 | 3 | 100 | 15/70/15 | 30 | 0.80 | 0.76 | 49 | - | 1.10 | 0.63 | 52 |
| Comparative Example 7 | 1 | 100 | 100/-/- | 100 | 0.42 | 0.76 | 49 | 0.4 | - | - | - |
| Comparative Example 8 | 3 | 100 | 15/70/15 | 30 | 0.42 | 0.68 | 54 | 0.4 | 1.10 | 0.63 | 52 |
| Comparative Example 9 | 3 | 100 | 15/70/15 | 30 | 0.37 | 0.91 | 44 | 0.4 | 1.10 | 0.63 | 52 |

[Table 6]

| | Laminate film production conditions and evaluation results | | | | | | | | | | | |
|---|---|---|---|---|---|---|---|---|---|---|---|---|
| | Temperature of heat treatment zone | Thickness of resin layer | Pencil hardness | Transmittance | Haze | b value | Heat shrinkage in longitudinal direction | Heat shrinkage in width direction | Scratch test | | Haze change after heating at 170°C for 2 hours (ΔH) | Oligomer deposition inhibiting property evaluation (170° C, 2 hours heating treatment, A surface) |
| | [°C] | [nm] | [-] | [%] | [%] | [-] | [%] | [%] | [S, A, B] | Number of scratches | [%] | [mg/m$^2$] |
| Example 48 | 235 | 75 | HB | 90.81 | 0.64 | 0.7 | 1.1 | 0.6 | A | 6 | 0.45 | 0.90 |
| Example 49 | 235 | 510 | H | 90.46 | 2.23 | 1.6 | 1.1 | 0.6 | S | 2 | 0.18 | 0.36 |
| Example 50 | 235 | 250 | B | 90.52 | 1.56 | 0.8 | 1.1 | 0.6 | B | 18 | 0.94 | 1.88 |
| Example 51 | 235 | 250 | HB | 90.34 | 2.21 | 1.8 | 1.1 | 0.6 | A | 7 | 0.67 | 1.34 |
| Example 52 | 235 | 250 | B | 90.67 | 0.61 | 0.8 | 1.1 | 0.6 | B | 12 | 0.25 | 0.50 |
| Example 53 | 235 | 250 | B | 86.53 | 3.53 | 2.0 | 1.1 | 0.6 | B | 15 | 2.51 | 5.02 |
| Example 54 | 235 | 250 | HB | 90.10 | 0.88 | 1.0 | 1.1 | 0.6 | A | 7 | 0.35 | 0.78 |
| Example 55 | 235 | 250 | HB | 90.23 | 2.15 | 1.9 | 1.1 | 0.6 | B | 12 | 0.69 | 1.28 |
| Example 56 | 140 | 250 | B | 90.03 | 0.94 | 0.8 | 1.1 | 0.6 | B | 11 | 0.45 | 0.90 |
| Comparative Examples 5 | 235 | 250 | H | 90.65 | 0.60 | 0.9 | 1.1 | 0.6 | S | 3 | 0.60 | 1.20 |
| Comparative Example 6 | 235 | 250 | H | 90.65 | 0.60 | 0.9 | 1.1 | 0.6 | S | 3 | 2.00 | 4.00 |
| Comparative Example 7 | 235 | 250 | H | 90.65 | 0.55 | 0.2 | 2.0 | 2.0 | S | 3 | 0.00 | 0.03 |
| Comparative Example 8 | 235 | 250 | H | 90.65 | 0.60 | 0.9 | 1.1 | 0.6 | S | 3 | 0.70 | 1.10 |
| Comparative Example 9 | 235 | 250 | H | 90.65 | 0.60 | 0.9 | 1.6 | 1.6 | S | 3 | 0.20 | 0.41 |

As evident from Tables 1 to 6, laminate films according to the present invention can inhibit scratching of a film surface that occurs during the production or the transportation of a polyester film and are superior in high transparency under high temperature processing conditions or under use conditions at high temperature and high humidity, and therefore they can be suitably used as films for optical applications where high transparency is required.

INDUSTRIAL APPLICABILITY

The biaxially oriented laminate polyester film of the present invention well attains both the productivity and the film surface quality during a process of film production and further is superior in transparency, and therefore it can be suitably used as various films for optical applications, such as liquid crystal display constituents including a liquid crystal polarizing plate and a retardation plate, PDP members, members for touch panels, and members for laminated glass.

## Claims

1. A biaxially oriented laminate polyester film satisfying the following (1) to (5):

   (1) the film is a laminate polyester film comprising at least three layers including a polyester layer (A) (hereinafter referred to as an "A layer") and polyester layers (B) (hereinafter referred to as "B layers") on both sides of the A layer,
   (2) the oligomer content of a polyester resin composition constituting the A layer is 1.5 wt% or less with respect to the total amount of the polyester resin composition constituting the A layer,
   (3) the intrinsic viscosity (IV) of the polyester resin constituting the A layer is 0.45 dl/g or more and 0.70 dl/g or less,
   (4) the oligomer content of a polyester resin composition constituting the B layers is 0.5 wt% or less with respect to the total amount of the polyester resin composition constituting the B layers, and
   (5) the intrinsic viscosity (IV) of the polyester resin constituting the B layers is 0.70 dl/g or more and 0.90 dl/g or less.

2. The biaxially oriented laminate polyester film according to claim 1, wherein the polyester resin composition constituting the A layer comprises an alkaline earth metal element, and when the content of the alkaline earth metal element with respect to the total amount of the polyester resin composition constituting the A layer is denoted by M (mol/ton), M satisfies the following formula 1:

$$0.1 \leq M \leq 15 \quad \text{(formula 1)}.$$

3. The biaxially oriented laminate polyester film according to claim 2, wherein the alkaline earth metal element is magnesium.

4. The biaxially oriented laminate polyester film according to claim 2 or 3, wherein the polyester resin composition constituting the A layer comprises a phosphorus element, and when the content of the phosphorus element with respect to the total amount of the polyester resin composition constituting the A layer is denoted by P (mol/ton), M/P satisfies the following formula 2:

$$1.0 \leq M/P \leq 4.0 \quad \text{(formula 2)}.$$

5. The biaxially oriented laminate polyester film according to any one of claims 1 to 4, wherein the polyester resin composition constituting the B layers comprises a germanium element in an amount of 0.1 mol/ton or more and 0.8 mol/ton or less with respect to the total amount of the polyester resin composition constituting the B layers.

6. The biaxially oriented laminate polyester film according to any one of claims 1 to 5, wherein the thickness of each of the B layers located on both the sides of the A layer is 5 μm or more and 50 μm or less.

7. The biaxially oriented laminate polyester film according to any one of claims 1 to 6, wherein the total of the thicknesses of the B layers is 20% or more and 60% or less with respect to the overall thickness of the laminate polyester film.

**8.** The biaxially oriented laminate polyester film according to any one of claims 1 to 7, wherein the color tone b value is 1.5 or less.

**9.** An optical laminate film comprising a resin layer (X) formed by use of a resin (α) and satisfying the following conditions (6) to (8) on at least one side of the biaxially oriented laminate polyester film according to any one of claims 1 to 8:

(6) the thickness of the resin layer (X) is 80 to 500 nm,
(7) the pencil hardness of the resin layer (X) is "F" or more, and
(8) the resin (α) is a resin obtained by heating a resin composition comprising a resin (I) having a hydroxy group and an acryloyl group and a melamine compound (II) having a methylol group and/or an alkoxymethyl group.

**10.** The optical laminate film according to claim 9, wherein the mass ratio between the resin (I) and the melamine compound (II) contained in the resin (α) composition (the content [parts by mass] of the resin (I)/the content [parts by mass] of the melamine compound (II)) is 100/30 to 100/100.

**11.** The optical laminate film according to claim 9 or 10, wherein the resin (I) is a resin obtained by use of at least the following compounds (a) to (c) and the mass ratios of the compounds used are as follows:

• an acrylic acid ester compound and/or a methacrylic acid ester compound (a): 55 to 98 parts by mass,
• an ethylenically unsaturated compound (b) having a hydroxy group: 1 to 30 parts by mass, and
• a compound (c) having a chemical structure represented by formula (1) (a urethane structure) and a polyfunctional acryloyl group: 1 to 15 parts by mass,

wherein the total mass of (a) to (c) is taken as 100 parts by mass:

[Chemical Formula 1].

Formula (1) 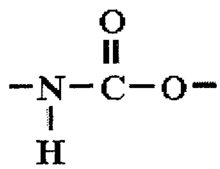

**12.** The optical laminate film according to any one of claims 9 to 11, wherein the film haze is 2.0% or less.

**13.** The optical laminate film according to any one of claims 9 to 12, wherein the film haze change (ΔH) before and after heating at 170°C for 2 hours is 0.5% or less.

**14.** The optical laminate film according to any one of claims 9 to 13, wherein the heat shrinkage ratio after heating at 150°C for 30 minutes is 1. 5% or less in both the longitudinal direction and the width direction of the film.

**15.** The biaxially oriented laminate polyester film according to any one of claims 1 to 8, used for an optical application.

## INTERNATIONAL SEARCH REPORT

International application No.
PCT/JP2014/060810

A. CLASSIFICATION OF SUBJECT MATTER
*B32B27/36*(2006.01)i, *B32B7/02*(2006.01)i

According to International Patent Classification (IPC) or to both national classification and IPC

B. FIELDS SEARCHED

Minimum documentation searched (classification system followed by classification symbols)
B32B1/00-43/00

Documentation searched other than minimum documentation to the extent that such documents are included in the fields searched

| | | | |
|---|---|---|---|
| Jitsuyo Shinan Koho | 1922-1996 | Jitsuyo Shinan Toroku Koho | 1996-2014 |
| Kokai Jitsuyo Shinan Koho | 1971-2014 | Toroku Jitsuyo Shinan Koho | 1994-2014 |

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| X<br><br>Y<br>A | JP 2005-263853 A (Mitsubishi Polyester Film Corp.),<br>29 September 2005 (29.09.2005),<br>claims; paragraphs [0001], [0013], [0020] to [0024]; examples<br>(Family: none) | 1,6-8,12,13,15<br><br>2-5,14<br>9-11 |
| Y | JP 2007-136987 A (Toray Industries, Inc.),<br>07 June 2007 (07.06.2007),<br>claims; paragraphs [0001], [0013], [0025] to [0029], [0053]; examples<br>(Family: none) | 2-5,14 |

☒ Further documents are listed in the continuation of Box C. ☐ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| | |
|---|---|
| Date of the actual completion of the international search<br>04 June, 2014 (04.06.14) | Date of mailing of the international search report<br>17 June, 2014 (17.06.14) |
| Name and mailing address of the ISA/<br>Japanese Patent Office<br><br>Facsimile No. | Authorized officer<br><br><br>Telephone No. |

Form PCT/ISA/210 (second sheet) (July 2009)

**INTERNATIONAL SEARCH REPORT**

International application No.
PCT/JP2014/060810

C (Continuation). DOCUMENTS CONSIDERED TO BE RELEVANT

| Category* | Citation of document, with indication, where appropriate, of the relevant passages | Relevant to claim No. |
|---|---|---|
| Y | JP 2004-223938 A (Teijin Ltd.), 12 August 2004 (12.08.2004), claims; paragraphs [0001], [0019] to [0024]; examples (Family: none) | 5 |
| A | JP 2010-234673 A (Toray Industries, Inc.), 21 October 2010 (21.10.2010), claims; examples (Family: none) | 1-15 |
| A | JP 2007-118209 A (Toray Industries, Inc.), 17 May 2007 (17.05.2007), claims; paragraphs [0030] to [0039] (Family: none) | 9-11 |
| A | JP 2010-143213 A (Nitto Denko Corp.), 01 July 2010 (01.07.2010), claims; paragraphs [0027] to [0038] (Family: none) | 9-11 |

Form PCT/ISA/210 (continuation of second sheet) (July 2009)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 62187724 A
- JP 2008201822 A
- JP 2003191413 A
- JP 2011062949 A
- JP 2012057021 A

### Non-patent literature cited in the description

- *JIS K-7121,* 1987
- Scratch hardness (Pencil method). JIS. 2008
- Plastics-Determination of haze for transparent materials. JIS. 2000